# EUROPEAN PATENT APPLICATION

(11) **EP 4 769 678 A1**
(43) Date of publication of application: **01.07.2026**
(21) Application number: 24892828.5
(22) Date of filing: 12.07.2024
(51) Int. Cl.: H01M 50/10, H01M 50/103

(54) **BATTERY CELL, BATTERY, AND ELECTRICAL DEVICE**

(30) Priority: 24.11.2023 WO PCT/CN2023/134129; 30.11.2023 WO PCT/CN2023/135607; 22.04.2024 WO PCT/CN2024/089160
(71) Applicant: Contemporary Amperex Technology Co., Limited, Ningde, Fujian 352100 (CN)
(72) Inventor: CAO, Mengkai, Ningde, Fujian 352100 (CN); ZHOU, Wenlin, Ningde, Fujian 352100 (CN); WU, Yu, Ningde, Fujian 352100 (CN); ZHENG, Yulian, Ningde, Fujian 352100 (CN); WANG, Peng, Ningde, Fujian 352100 (CN)
(74) Representative: Gong, Jinping
(86) International application number: PCT/CN2024/105243
(87) International publication number: WO 2025/107664

(57) **Abstract**

The present application provides a battery cell, a battery, and an electric device. The battery cell includes a casing, an end cover, and an electrode assembly. The casing has an opening at at least one end along a first direction, the casing includes a first wall, the end cover closes the opening, and the first wall is welded to the end cover to form a first connecting portion. The electrode assembly is at least partially accommodated in the casing, where the electrode assembly includes a positive electrode plate and a negative electrode plate, at least a part of the positive electrode plate and at least a part of the negative electrode plate are stacked along a second direction, the second direction is parallel to the thickness direction of the first wall, and the first direction intersects the second direction. The first wall includes a first zone and a second zone arranged along the first direction, the thickness of the first zone is greater than the thickness of the second zone, and the first zone is located between the first connecting portion and the second zone. This reduces the risk of fatigue cracking in a region of the first wall near the first connecting portion due to the expansion of the electrode assembly, thereby improving the service life of the battery cell.

## Description

### CROSS-REFERENCE TO RELATED APPLICATIONS

The present application claims priority to International Patent Application No. PCT/CN2024/089160, filed on April 22, 2024 and entitled "BATTERY CELL, BATTERY, AND ELECTRIC APPARATUS," International Patent Application No. PCT/CN2023/135607, filed on November 30, 2023 and entitled "BATTERY CELL, BATTERY, ELECTRIC DEVICE, AND ENERGY STORAGE APPARATUS," and International Patent Application No. PCT/CN2023/134129, filed on November 24, 2023 and entitled "CASING, BATTERY CELL, BATTERY, AND ELECTRIC APPARATUS," which are incorporated herein by reference in their entireties.

### TECHNICAL FIELD

The present application relates to the field of battery technologies, and more particularly, to a battery cell, a battery, and an electric device.

### BACKGROUND

Energy conservation and emission reduction are key to the sustainable development of the automotive industry, and electric vehicles have become an important part of the sustainable development of the automotive industry due to their advantages in energy conservation and environmental protection. For electric vehicles, battery technology is a critical factor in their development.

In battery technology, the service life of a battery cell is an issue that cannot be ignored. Therefore, how to improve the service life of a battery cell is a technical problem in battery technology that urgently needs to be addressed.

### SUMMARY

Embodiments of the present application provide a battery cell, a battery, and an electric device, which can effectively improve the service life of the battery cell.

According to a first aspect, an embodiment of the present application provides a battery cell, where the battery cell includes a casing, an end cover, and an electrode assembly. The casing has an opening at at least one end along a first direction, and the casing includes a first wall. The end cover closes the opening, and the first wall is welded to the end cover to form a first connecting portion. The electrode assembly is at least partially accommodated in the casing, where the electrode assembly includes a positive electrode plate and a negative electrode plate, at least a part of the positive electrode plate and at least a part of the negative electrode plate are stacked along a second direction, the second direction is parallel to the thickness direction of the first wall, and the first direction intersects the second direction. The first wall includes a first zone and a second zone arranged along the first direction, the thickness of the first zone is greater than the thickness of the second zone, and the first zone is located between the first connecting portion and the second zone.

In the above technical solution, the thickness of the first zone is greater than the thickness of the second zone, and the first zone is located between the first connecting portion and the second zone, such that the thicker first zone is closer to the first connecting portion than the second zone, and the first zone reinforces the region of the first wall near the first connecting portion, reducing the risk of fatigue cracking in the region of the first wall near the first connecting portion due to the expansion of the electrode assembly, thereby improving the service life of the battery cell.

In some embodiments, the electrode assembly has a flat region, and a part of the positive electrode plate located in the flat region and a part of the negative electrode plate located in the flat region are stacked along the second direction. The second direction is the stacking direction of the part of the positive electrode plate located in the flat region and the part of the negative electrode plate located in the flat region, the electrode assembly undergoes greater expansion along the second direction during cycling, and the first wall is more significantly affected by the expansion of the electrode assembly. However, since the first zone reinforces the region of the first wall near the first connecting portion, the risk of fatigue cracking in the first wall near the first connecting portion due to the expansion of the electrode assembly is reduced.

In some embodiments, the electrode assembly includes adjacent first and second surfaces, the first surface is perpendicular to the second direction, the area of the first surface is greater than the area of the second surface, and the first surface is disposed opposite the first wall along the second direction. The area of the first surface is larger than that of the second surface, such that the first wall disposed opposite the first surface in the casing experiences greater expansion force. Since the first zone reinforces the region of the first wall near the first connecting portion, the risk of fatigue cracking in the first wall near the first connecting portion due to the expansion of the electrode assembly is reduced.

In some embodiments, the first surface is the surface with the largest area among outer surfaces of the electrode assembly. This results in the first wall disposed opposite the first surface in the casing experiencing the greatest expansion force. Since the first zone reinforces the region of the first wall near the first connecting portion, the risk of fatigue cracking in the first wall near the first connecting portion due to the expansion of the electrode assembly is reduced.

In some embodiments, the electrode assembly is a wound structure, the electrode assembly further includes a corner region, at least one end of the flat region along a third direction is provided with the corner region, and the first direction, the second direction, and the third direction are not coplanar and intersect pairwise. An outer surface of the flat region includes the first surface, an outer surface of the corner region includes the second surface, and at least a part of the second surface is an arc surface. For a wound electrode assembly, the flat region undergoes greater expansion along the second direction. Since the first zone reinforces the region of the first wall near the first connecting portion, the risk of fatigue cracking in the first wall near the first connecting portion due to the expansion of the electrode assembly is effectively reduced.

In some embodiments, the electrode assembly is a laminated structure, the flat region includes a plurality of positive electrode plates and a plurality of negative electrode plates. The plurality of positive electrode plates and the plurality of negative electrode plates are stacked along the second direction, and the first surface is perpendicular to the second surface. For a laminated electrode assembly, the electrode assembly undergoes greater expansion in the stacking direction of the positive electrode plates and the negative electrode plates. Since the first zone reinforces the region of the first wall near the first connecting portion, the risk of fatigue cracking in the first wall near the first connecting portion due to the expansion of the electrode assembly is effectively reduced.

In some embodiments, the first wall is a wall with the largest outer surface area in the casing. The wall with the largest outer surface area in the casing is more prone to deformation after being subjected to the expansion force of the electrode assembly. Since the first wall is the wall with the largest outer surface area in the casing, the risk of fatigue cracking in the wall with the largest outer surface area in the casing near the first connecting portion due to the expansion of the electrode assembly is reduced.

In some embodiments, the casing includes two first walls, where along the second direction, the two first walls are disposed opposite each other, with the electrode assembly located between the two first walls. This reduces the risk of fatigue cracking in the two first walls near the first connecting portion due to the expansion of the electrode assembly.

In some embodiments, the first zone includes a first portion and a second portion arranged along the first direction. The second portion connects the first portion and the second zone, and the thickness of the first portion is greater than the thickness of the second portion. The region of the first zone near the first connecting portion is more likely to form a heat-affected zone, which is more prone to fatigue cracking. However, since the second portion connects the first portion and the second zone, and the thickness of the first portion is greater than the thickness of the second portion, the thicker first portion in the first zone is closer to the first connecting portion, effectively mitigating the impact of the heat-affected zone on the first zone, reducing the risk of fatigue cracking in the region of the first wall near the first connecting portion. In addition, since the thickness of the second portion is less than that of the first portion, material usage in the first zone is reduced, lowering production costs.

In some embodiments, the thickness of the second portion decreases along a direction from the end cover toward the electrode assembly, such that the impact of the second portion on the electrode assembly can be reduced, lowering the risk of interference between the second portion and the electrode assembly. In addition, the reinforcement effect of the second portion increases along the direction from the electrode assembly toward the end cover, such that the region of the second portion near the first portion has a good reinforcement effect even if affected by the first connecting portion, reducing the risk of fatigue cracking in the first wall at the second portion; furthermore, the second portion enables a transition between the first portion and the second zone, reducing stress concentration.

In some embodiments, a dimension of the first zone along the third direction is greater than a dimension of the first zone along the first direction, and the first direction, the second direction, and the third direction are not coplanar and intersect pairwise, such that the dimension of the first zone along the third direction is larger, and more regions of the first wall along the third direction are reinforced, further reducing the risk of fatigue cracking in the region of the first wall near the first connecting portion.

In some embodiments, the first zone includes a first connecting segment. The first connecting segment passes through a mid-section of the first wall, the mid-section is perpendicular to the third direction, and distances from the mid-section to two ends of the first wall along the third direction are equal. When the first wall is subjected to the expansion force of the electrode assembly of the battery cell, the middle region of the first wall along the third direction undergoes greater deformation, making the middle region of the first wall along the third direction more prone to fatigue cracking. Since the first connecting segment of the first zone passes through the mid-section of the first wall, the strength of at least the middle region of the first wall along the third direction is reinforced, reducing the risk of fatigue cracking in the middle region of the first wall near the first connecting portion along the third direction.

In some embodiments, the first zone further includes a second connecting segment and a third connecting segment. The second connecting segment, the first connecting segment, and the third connecting segment are arranged along the third direction, the first connecting segment connects the second connecting segment and the third connecting segment, and the thickness of the first connecting segment is greater than the thickness of the second connecting segment and the thickness of the third connecting segment. When the first wall is subjected to the expansion force of the electrode assembly, the deformation of the first wall gradually decreases from the middle to both ends along the third direction. The first zone is divided into a plurality of segments, and the thickness of the first connecting segment in the middle region is set to be larger, while the thicknesses of the second connecting segment and the third connecting segment at two ends of the first connecting segment are set to be smaller. In this way, the first zone is designed specifically according to the varying deformation amounts in different regions of the first wall along the third direction, thereby specifically enhancing the strength of different regions of the first wall along the third direction, ensuring sufficient strength in the region of the first wall near the first connecting portion while reducing material usage in the first zone, lowering production costs.

In some embodiments, the first zone further includes a first transition segment, where the first connecting segment, the first transition segment, and the second connecting segment are arranged along the third direction, the first transition segment connects the second connecting segment and the first connecting segment, and the thickness of the first transition segment increases along a direction from the second connecting segment toward the first connecting segment; and/or, the first zone further includes a second transition segment, where the first connecting segment, the second transition segment, and the third connecting segment are arranged along the third direction, the second transition segment connects the third connecting segment and the first connecting segment, and the thickness of the second transition segment increases along a direction from the third connecting segment toward the first connecting segment. If the second connecting segment and the first connecting segment are connected via the first transition segment, and the thickness of the first transition segment increases along the direction from the second connecting segment toward the first connecting segment, the first transition segment enables a transition between the second connecting segment and the first connecting segment, reducing stress concentration. If the third connecting segment and the first connecting segment are connected via the second transition segment, and the thickness of the second transition segment increases along the direction from the third connecting segment toward the first connecting segment, the second transition segment enables a transition between the third connecting segment and the first connecting segment, reducing stress.

In some embodiments, the dimension of the first connecting segment along the third direction is L₁, the dimension of the first wall along the third direction is L, where 0.2 ≤ L₁/L ≤ 0.6. When L₁/L ≥ 0.2, a proportion of the dimension of the first connecting segment along the third direction in the first wall is increased, such that a larger range of the middle region of the first wall along the third direction is reinforced, enhancing the strength of the middle region of the first wall along the third direction. When L₁/L ≤ 0.6, the proportion of the dimension of the first connecting segment along the third direction in the first wall is reduced, reducing material usage in the first connecting segment, lowering production costs. Therefore, when the ratio of the dimension of the first connecting segment along the third direction to the dimension of the first wall along the third direction is set to 0.2 to 0.6, the first connecting segment has sufficient reinforcement capability while reducing material usage, balancing the reinforcement capability requirements and cost-effectiveness requirements of the first connecting segment.

In some embodiments, the first connecting segment has a first end and a second end opposite each other along the third direction, where the first wall has a third end and a fourth end opposite each other along the third direction, the first end is close to the third end, the second end is close to the fourth end, the dimension of the first wall along the third direction is L, the minimum distance between the first end and the third end along the third direction is L₂, and the minimum distance between the second end and the fourth end along the third direction is L₃; where L₂/L ≤ 0.3; and/or, L₃/L ≤ 0.3. If L₂/L ≤ 0.3, a proportion of the minimum distance between the first end and the third end along the third direction in the dimension of the first wall along the third direction is reduced, such that more regions of the first wall along the third direction are reinforced, further reducing the risk of fatigue cracking in the region of the first wall near the first connecting portion. If L₃/L ≤ 0.3, the proportion of the minimum distance between the second end and the fourth end along the third direction in the dimension of the first wall along the third direction is reduced, such that more regions of the first wall along the third direction are reinforced, further reducing the risk of fatigue cracking in the region of the first wall near the first connecting portion.

In some embodiments, 100 mm ≤ L ≤ 450 mm.

In some embodiments, the casing includes corner walls, and two ends of the first wall along the third direction are connected to the corner walls; and at least one end of the first zone along the third direction is not in contact with the corner wall; or, both ends of the first zone along the third direction extend to the two corner walls, respectively. If at least one end of the first zone along the third direction is not in contact with the corner wall, material usage in the first zone is reduced, lowering production costs. If two ends of the first zone along the third direction extend to the two corner walls, the length of the first zone is increased, enhancing the reinforcement capability of the first zone, such that more regions of the first wall along the third direction are reinforced, further reducing the risk of fatigue cracking in the region of the first wall near the first connecting portion.

In some embodiments, the electrode assembly further includes a separator, and the separator is provided between the positive electrode plate and the negative electrode plate. The positive electrode plate includes a positive electrode main body region and a positive electrode tab protruding from the positive electrode main body region, and the positive electrode main body region has a positive electrode active material layer. The negative electrode plate includes a negative electrode main body region and a negative electrode tab protruding from the negative electrode main body region, and the negative electrode main body region has a negative electrode active material layer. Along the first direction, the positive electrode main body region has a fifth end facing the end cover, the negative electrode main body region has a sixth end facing the end cover, the separator has a seventh end facing the end cover, and the seventh end is closer to the end cover than the fifth end and the sixth end. This allows the separator to have a portion extending beyond the fifth end and the sixth end, enhancing the insulation effect of the separator between the positive electrode plate and the negative electrode plate, reducing the risk of contact between the positive electrode plate and the negative electrode plate.

In some embodiments, the separator includes an extension region extending beyond the fifth end and the sixth end along the first direction, and in a projection plane perpendicular to the second direction, an orthographic projection of the extension region partially overlaps with an orthographic projection of the first zone. This structure can increase the dimension of the first zone along the first direction, enhancing the reinforcement capability of the first zone, such that more regions of the first wall along the first direction are reinforced, further reducing the risk of fatigue cracking in the region of the first wall near the first connecting portion.

In some embodiments, the second zone has a first inner surface facing the internal space of the casing, and the first zone includes a first protruding portion protruding from the first inner surface. In a projection plane perpendicular to the second direction, an orthographic projection of the positive electrode main body region does not overlap with an orthographic projection of the first protruding portion; and/or, in a projection plane perpendicular to the second direction, an orthographic projection of the negative electrode main body region does not overlap with the orthographic projection of the first protruding portion. If, in a projection plane perpendicular to the second direction, the orthographic projection of the positive electrode main body region does not overlap with the orthographic projection of the first protruding portion, the casing can provide a larger expansion space for the electrode assembly, reducing the risk of the electrode assembly directly applying expansion force to the first protruding portion, reducing the deformation of the first wall, and further reducing the risk of fatigue cracking in the region of the first wall near the first connecting portion. If, in a projection plane perpendicular to the second direction, the orthographic projection of the negative electrode main body region does not overlap with the orthographic projection of the first protruding portion, the casing can provide a larger expansion space for the electrode assembly, reducing the risk of the electrode assembly directly applying expansion force to the first protruding portion, reducing the deformation of the first wall, and further reducing the risk of fatigue cracking in the region of the first wall near the first connecting portion.

In some embodiments, the negative electrode plate includes a negative electrode current collector and a negative electrode active material layer disposed on at least one side of the negative electrode current collector, and the negative electrode active material layer includes a negative electrode active material.

In some embodiments, the negative electrode active material layer includes a negative electrode main body portion and a negative electrode thinned portion. The negative electrode main body portion and the negative electrode thinned portion are arranged along the first direction, and along the first direction, the negative electrode thinned portion is provided at an end of the negative electrode main body portion close to the end cover. The electrode assembly has a larger expansion gap in the region corresponding to the negative electrode thinned portion, and the force applied to the first wall by the region of the electrode assembly corresponding to the negative electrode thinned portion after expansion is smaller, reducing the risk of fatigue cracking in the region of the first wall near the first connecting portion.

In some embodiments, in a projection plane perpendicular to the second direction, the orthographic projection of the negative electrode thinned portion is spaced apart from the orthographic projection of the first zone along the first direction. This can reduce the impact of the negative electrode thinned portion on the first zone, reducing the risk of the electrode assembly directly applying expansion force to the first zone, further reducing the risk of fatigue cracking in the region of the first wall near the first connecting portion.

In some embodiments, in a projection plane perpendicular to the second direction, a spacing dimension along the first direction between the orthographic projection of the negative electrode thinned portion and the orthographic projection of the first zone is greater than or equal to 1 mm, so that in the projection plane perpendicular to the second direction, the orthographic projection of the negative electrode thinned portion is farther from the orthographic projection of the first zone along the first direction, further reducing the impact of the negative electrode thinned portion on the first zone.

In some embodiments, a single-side coating weight of the negative electrode active material layer is 90 mg/1540 mm² to 170 mg/1540 mm². The single-side coating weight of the negative electrode active material layer is related to the expansion of the negative electrode active material layer. Setting the single-side coating weight of the negative electrode active material layer within a range from 90 mg/1540 mm² to 170 mg/1540 mm² can, to some extent, balance the high energy density requirements of the battery cell and the low expansion requirements of the negative electrode plate, reducing the impact of the expansion of the negative electrode plate on the first wall, thereby reducing the risk of fatigue cracking in the region of the first wall near the first connecting portion.

In some embodiments, the single-side coating weight of the negative electrode active material layer is 110 mg/1540 mm² to 150 mg/1540 mm². This can further improve the energy density requirements of the battery cell and further mitigate the expansion of the negative electrode plate.

In some embodiments, a porosity of the negative electrode plate is 27% to 40%. This provides space for impurities generated by side reactions in the negative electrode plate, mitigating the expansion of the negative electrode plate and reducing the impact of the expansion of the negative electrode plate on the first wall.

In some embodiments, the negative electrode active material includes a silicon-based material, and a mass content of silicon element in the negative electrode active material in the silicon-based material is 0.3% to 10%, optionally 1% to 6%.

In some embodiments, the silicon-based material includes at least one of a silicon-oxygen compound and a silicon-carbon composite.

In some embodiments, the positive electrode plate includes a positive electrode current collector and a positive electrode active material layer disposed on at least one side of the positive electrode current collector, and the positive electrode active material layer includes a positive electrode active material.

In some embodiments, the positive electrode active material layer includes a positive electrode main body portion and a positive electrode thinned portion. The positive electrode main body portion and the positive electrode thinned portion are arranged along the first direction, and along the first direction, the positive electrode thinned portion is provided at an end of the positive electrode main body portion close to the end cover. The electrode assembly has a larger expansion gap in the region corresponding to the positive electrode thinned portion, and the force applied to the first wall by the region of the electrode assembly corresponding to the positive electrode thinned portion after expansion is smaller, reducing the risk of fatigue cracking in the region of the first wall near the first connecting portion.

In some embodiments, in a projection plane perpendicular to the second direction, the orthographic projection of the positive electrode thinned portion is spaced apart from the orthographic projection of the first zone along the first direction. This can reduce the impact of the positive electrode thinned portion on the first zone, reducing the risk of the electrode assembly directly applying expansion force to the first zone, further reducing the risk of fatigue cracking in the region of the first wall near the first connecting portion.

In some embodiments, in a projection plane perpendicular to the second direction, a spacing dimension along the first direction between the orthographic projection of the positive electrode thinned portion and the orthographic projection of the first zone is greater than or equal to 1 mm, so that in the projection plane perpendicular to the second direction, the orthographic projection of the positive electrode thinned portion is farther from the orthographic projection of the first zone along the first direction, further reducing the impact of the positive electrode thinned portion on the first zone.

In some embodiments, a single-side coating weight of the positive electrode active material layer is 200 mg/1540 mm² to 370 mg/1540/mm². The single-side coating weight of the positive electrode active material layer is related to the expansion of the positive electrode active material layer. Setting the single-side coating weight of the positive electrode active material layer within a range from 200 mg/1540 mm² to 370 mg/1540/mm² can, to some extent, balance the high energy density requirements of the battery cell and the low expansion requirements of the positive electrode plate, reducing the impact of the expansion of the positive electrode plate on the first wall, thereby reducing the risk of fatigue cracking in the region of the first wall near the first connecting portion.

In some embodiments, the single-side coating weight of the positive electrode active material layer is 240 mg/1540 mm² to 330 mg/1540 mm². This can further improve the energy density requirements of the battery cell and further mitigate the expansion of the positive electrode plate.

In some embodiments, the positive electrode active material is a lithium-containing phosphate.

In some embodiments, the material of the casing includes steel; the maximum thickness of the second zone is D₁, and the dimension of the casing along the second direction is D, where 0.001 ≤ D₁/D ≤ 0.012. For a casing made of steel, when D₁/D ≥ 0.001, the thickness proportion of the second zone in the casing is increased, such that the second zone has sufficient strength to meet the strength requirements of the casing; and when D₁/D ≤ 0.012, the thickness proportion of the second zone in the casing is reduced, and given a fixed volume of the casing, the internal space of the casing can be increased, thereby providing more space for the electrode assembly to meet the volumetric energy density requirements of the battery cell.

In some embodiments, the material of the casing includes steel; the maximum thickness of the second zone is D₁, where 0.08 mm ≤ D₁ ≤ 0.35 mm; and/or, the maximum thickness of the first zone is D₂, where 0.1 mm ≤ D₂ ≤ 0.6 mm. For a casing made of steel, setting the maximum thickness of the second zone to 0.08 mm to 0.35 mm can meet both the strength requirements of the second zone and the volumetric energy density requirements of the battery cell. Setting the maximum thickness of the first zone to 0.1 mm to 0.6 mm ensures that the first zone has sufficient strength to enhance the strength of the region of the first wall near the first connecting portion.

In some embodiments, the material of the casing includes aluminum alloy; the maximum thickness of the second zone is D₁, and the dimension of the casing along the second direction is D, where 0.005 ≤ D₁/D ≤ 0.065. For a casing made of aluminum alloy, when D₁/D ≥ 0.005, the thickness proportion of the second zone in the casing is increased, such that the second zone has sufficient strength to meet the strength requirements of the casing; and when D₁/D ≤ 0.065, the thickness proportion of the second zone in the casing is reduced, and given a fixed volume of the casing, the internal space of the casing can be increased, thereby providing more space for the electrode assembly to meet the volumetric energy density requirements of the battery cell.

In some embodiments, the material of the casing includes aluminum alloy; the maximum thickness of the second zone is D₁, where 0.4 mm ≤ D₁ ≤ 0.8 mm; and/or, the maximum thickness of the first zone is D₂, where 0.5 mm ≤ D₂ ≤ 1.5 mm. For a casing made of aluminum alloy, setting the maximum thickness of the second zone to 0.4 mm to 0.8 mm can meet both the strength requirements of the second zone and the volumetric energy density requirements of the battery cell. Setting the maximum thickness of the first zone to 0.5 mm to 1.5 mm ensures that the first zone has sufficient strength to enhance the strength of the region of the first wall near the first connecting portion.

In some embodiments, the aluminum alloy includes the following components in mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This aluminum alloy has good processing and forming properties, facilitating the formation of the casing.

In some embodiments, the first zone is directly connected to the first connecting portion, such that the first zone is closer to the first connecting portion along the first direction, and the first zone is located near the first connecting portion, further reducing the risk of fatigue cracking in the region of the first wall near the first connecting portion due to the expansion of the electrode assembly.

In some embodiments, the first wall further includes a first transition region, and the first transition region is connected to an end of the first zone away from the second zone along the first direction. The first transition region is connected to the first connecting portion, a connection position between the first transition region and the first connecting portion forms a first connection interface, the first connection interface has a first position closest to the first zone along the first direction, and the first position is located at an end of the first zone away from the second zone along the first direction. The first transition region is connected to the first connecting portion to form the first connection interface, such that the first transition region and the first connecting portion have a sufficiently large contact area, improving the firmness of the first wall after welding to the end cover.

In some embodiments, at least a part of the first connection interface extends obliquely relative to the second direction. After the end cover and the first wall are welded, the first connecting portion contracts as it solidifies, generating tensile stress on the first transition region. When the first wall is subjected to the expansion force of the electrode assembly, the first wall deforms, and the first transition region generates tensile stress on the first connecting portion. Since at least a part of the first connection interface extends obliquely relative to the second direction, in the vicinity of the part of the first connection interface that extends obliquely relative to the second direction, due to the deformation of the first wall on the first connecting portion, the tensile stress generated by the first connecting portion due to contraction on the first transition region is not aligned with the tensile stress generated by the first transition region, reducing the risk of fatigue cracking in the region of the first transition region near the first connection interface.

In some embodiments, the first connection interface includes a first interface, the first interface extends obliquely from the first position in a direction toward the end cover, and along the second direction, at least a part of the first transition region is located between the first interface and the end cover. The first connecting portion protects the first transition region, and when the first wall is subjected to the expansion force of the electrode assembly, the deformation of the first transition region during stress is blocked by the first connecting portion, reducing the risk of fatigue cracking in the region of the first transition region near the first interface.

In some embodiments, the first interface is connected to an outer surface of the first zone at the first position, such that the first zone is directly connected to the first connecting portion, and the first zone is closer to the first connecting portion along the first direction, further reducing the risk of fatigue cracking in the region of the first wall near the first connecting portion due to the expansion of the electrode assembly.

In some embodiments, the first connection interface includes a second interface, the second interface extends obliquely from the first position in a direction away from the end cover, and along the second direction, at least a part of the first transition region is located on a side of the second interface facing away from the end cover, such that the first transition region restricts the first connecting portion, reducing the risk of detachment of the first connecting portion.

In some embodiments, the second interface is connected to an inner surface of the first zone at the first position, such that the first zone is directly connected to the first connecting portion, and the first zone is closer to the first connecting portion along the first direction, further reducing the risk of fatigue cracking in the region of the first wall near the first connecting portion due to the expansion of the electrode assembly.

In some embodiments, the Vickers hardness of the first transition region is less than that of the second zone; and/or, the Vickers hardness of the first transition region is less than that of the first connecting portion. If the Vickers hardness of the first transition region is less than that of the second zone, the first transition region with lower Vickers hardness is connected to the first connecting portion, which can mitigate the rigid pulling between the first wall and the first connecting portion when the first wall deforms, reducing the risk of separation between the first wall and the first connecting portion. If the Vickers hardness of the first transition region is less than that of the first connecting portion, the first transition region is more prone to deformation compared to the first connecting portion, which can mitigate the rigid pulling between the first wall and the first connecting portion when the first wall deforms, reducing the risk of separation between the first wall and the first connecting portion.

In some embodiments, along the first direction, the first connection interface is closer to the second zone than an outer surface of the end cover, such that the first connecting portion can sink deeper into the first wall, effectively improving the connection strength between the first wall and the end cover.

In some embodiments, the casing further includes a second wall and a corner wall, the first wall, the corner wall, and the second wall are arranged along a circumferential direction of the opening, and the corner wall connects the first wall and the second wall. This allows the first wall to transition to the second wall through the corner wall, effectively reducing the risk of stress concentration at the corner position of the casing.

In some embodiments, the corner wall is welded to the end cover to form a second connecting portion; and the corner wall includes a third zone and a fourth zone arranged along the first direction, the thickness of the third zone is greater than the thickness of the fourth zone, and the third zone is located between the fourth zone and the second connecting portion. The thickness of the third zone is greater than the thickness of the fourth zone, and the third zone is located between the second connecting portion and the fourth zone, such that the thicker third zone is closer to the second connecting portion than the fourth zone, the third zone reinforces the region of the corner wall near the second connecting portion, reducing the risk of fatigue cracking in the region of the corner wall near the second connecting portion, thereby improving the service life of the battery cell.

In some embodiments, the third zone is directly connected to the first zone. By directly connecting the third zone to the first zone, the first zone and the third zone are integrated into a single unit, where the third zone and the first zone mutually enhance each other, strengthening the reinforcement effect of the first zone on the first wall and the reinforcement effect of the second zone on the corner wall.

In some embodiments, along the circumferential direction of the opening, the corner wall has a first connecting end and a second connecting end, the first wall is connected to the first connecting end, the second wall is connected to the second connecting end, and the thickness of the third zone decreases along a direction from the first connecting end toward the second connecting end. When the first wall is subjected to the expansion force of the electrode assembly in the second direction, the deformation of the first wall may cause the corner wall to deform. Along the circumferential direction of the opening, the corner wall experiences progressively greater influence from the first wall as proximity to the first wall decreases, resulting in correspondingly larger deformation in regions of the corner wall closer to the first wall. The thickness of the third zone decreases along the direction from the first connecting end toward the second connecting end, such that the region of the third zone closer to the first wall along the circumferential direction of the opening has greater strength, thereby reducing the impact of the deformation of the first wall on the corner wall, ensuring sufficient strength in the region of the corner wall near the second connecting portion while reducing material usage in the third zone, lowering production costs.

In some embodiments, the third zone is directly connected to the second connecting portion, such that the third zone is closer to the second connecting portion along the first direction, and the third zone is located near the second connecting portion, further reducing the risk of fatigue cracking in the region of the corner wall near the second connecting portion.

In some embodiments, the corner wall further includes a second transition region, the second transition region is connected to an end of the third zone away from the fourth zone along the first direction, the second transition region is connected to the second connecting portion, and a connection position between the second transition region and the second connecting portion forms a second connection interface. The second connection interface has a second position closest to the third zone along the first direction, and the second position is located at an end of the third zone away from the fourth zone along the first direction. The second transition region is connected to the second connecting portion to form the second connection interface, such that the second transition region and the second connecting portion have a sufficiently large contact area, improving the firmness of the corner wall after welding to the end cover.

In some embodiments, at least a part of the second connection interface extends obliquely relative to the thickness direction of the corner wall. In the vicinity of the part of the second connection interface that extends obliquely relative to the thickness direction of the corner wall, due to the deformation of the corner wall on the second connecting portion, the tensile stress generated by the second connecting portion due to contraction on the second transition region is not aligned with the tensile stress generated by the second transition region, reducing the risk of fatigue cracking in the region of the second transition region near the second connection interface.

In some embodiments, the second connection interface includes a third interface, the third interface extends obliquely from the second position in a direction toward the end cover, and along the thickness direction of the corner wall, at least a part of the second transition region is located between the third interface and the end cover. The second connecting portion protects the second transition region, and outward deformation of the second transition region is blocked by the second connecting portion, reducing the risk of fatigue cracking in the region of the second transition region near the third interface.

In some embodiments, the third interface is connected to an outer surface of the third zone at the second position, such that the third zone is directly connected to the second connecting portion, and the third zone is closer to the second connecting portion along the first direction, further reducing the risk of fatigue cracking in the region of the corner wall near the second connecting portion.

In some embodiments, the second connection interface includes a fourth interface. The fourth interface extends obliquely from the second position in a direction away from the end cover, and along the thickness direction of the corner wall, at least a part of the second transition region is located on the side of the fourth interface facing away from the end cover, such that the second transition region restricts the second connecting portion, reducing the risk of detachment of the second connecting portion.

In some embodiments, the fourth interface is connected to an inner surface of the third zone at the second position, such that the third zone is directly connected to the second connecting portion, and the third zone is closer to the second connecting portion along the first direction, further reducing the risk of fatigue cracking in the region of the corner wall near the second connecting portion.

In some embodiments, the Vickers hardness of the second transition region is less than that of the fourth zone; and/or, the Vickers hardness of the second transition region is less than that of the second connecting portion. If the Vickers hardness of the second transition region is less than that of the fourth zone, the second transition region with lower Vickers hardness is connected to the second connecting portion, which can mitigate the rigid pulling between the corner wall and the second connecting portion when the corner wall deforms, reducing the risk of separation between the corner wall and the second connecting portion. If the Vickers hardness of the second transition region is less than that of the second connecting portion, the second transition region is more prone to deformation compared to the second connecting portion, which can mitigate the rigid pulling between the corner wall and the second connecting portion when the corner wall deforms, reducing the risk of separation between the corner wall and the second connecting portion.

In some embodiments, along the first direction, the second connection interface is closer to the fourth zone than the outer surface of the end cover, such that the second connecting portion can sink deeper into the corner wall, effectively improving the connection strength between the corner wall and the end cover.

In some embodiments, the casing includes two first walls and two second walls, where the two first walls are disposed opposite each other along the second direction, the two second walls are disposed opposite each other along the third direction, and the first direction, the second direction, and the third direction are pairwise perpendicular, such that the casing is substantially cuboidal, allowing the casing dimensions to be larger, which is beneficial for meeting the high capacity requirements of the battery cell.

In some embodiments, the Vickers hardness of at least a part of the first zone is less than that of the second zone. When the second zone deforms due to the expansion force of the electrode assembly, the region of the first zone with lower Vickers hardness than the second zone can reduce the impact of the deformation of the second zone on the region of the first wall near the first connecting portion, reducing the risk of fatigue cracking in the region of the first wall near the first connecting portion due to the expansion of the electrode assembly.

In some embodiments, along the first direction, the first wall has a limiting surface facing the end cover, and the limiting surface abuts against the end cover to restrict the movement of the end cover in a direction close to the electrode assembly. The limiting surface provides a limiting function for the end cover, reducing the risk of the end cover moving toward the electrode assembly during welding with the casing, effectively improving the welding quality between the end cover and the casing, and reducing the welding difficulty between the end cover and the casing.

In some embodiments, the first wall further includes a limiting region disposed on the limiting surface, the limiting region is disposed opposite the end cover along the second direction, and the limiting region is welded to the end cover to form the first connecting portion. The limiting region also provides a limiting function for the end cover, reducing the risk of the end cover moving along the thickness direction of the first wall during welding with the casing, further improving the welding quality between the end cover and the casing, and reducing the welding difficulty between the end cover and the casing.

In some embodiments, the electrode assembly is a laminated structure, the electrode assembly includes a plurality of positive electrode plates and a plurality of negative electrode plates, and the plurality of positive electrode plates and the plurality of negative electrode plates are stacked along the second direction. The laminated electrode assembly structure is more compact and has stronger resistance to compression.

In some embodiments, the number of negative electrode plates is greater than the number of positive electrode plates, and one positive electrode plate is disposed between two adjacent negative electrode plates.

In some embodiments, each negative electrode plate is provided with a negative electrode tab; and/or, each positive electrode plate is provided with a positive electrode tab.

In some embodiments, along the third direction, the dimension of the first zone is greater than the dimension of the positive electrode plate and/or the negative electrode plate, and the first direction, the second direction, and the third direction are pairwise perpendicular, such that the dimension of the first zone along the third direction is larger, and more regions of the first wall along the third direction are reinforced, further reducing the risk of fatigue cracking in the region of the first wall near the first connecting portion.

In some embodiments, the battery cell further includes two electrode terminals, and the two electrode terminals are disposed on the end cover. The two electrode terminals have opposite polarities and are both electrically connected to the electrode assembly. The end cover is provided with a lead-out hole, the electrode terminal includes a terminal main body, a first limiting portion, and a second limiting portion, the terminal main body connects the first limiting portion and the second limiting portion, and the terminal main body passes through the lead-out hole. Along the first direction, the first limiting portion is located on the side of the end cover facing away from the electrode assembly, and the second limiting portion is located on the side of the end cover facing the electrode assembly. The electrode terminal with this structure can be installed on the end cover by riveting, featuring low installation difficulty and superior cost-effectiveness.

According to a second aspect, an embodiment of the present application provides a battery, including the battery cell provided in any one of the embodiments of the first aspect.

According to a third aspect, an embodiment of the present application provides an electric device, including the battery cell provided in any one of the embodiments of the first aspect, where the battery cell is configured to provide electric energy to the electric device.

### BRIEF DESCRIPTION OF DRAWINGS

To more clearly illustrate the technical solutions of the embodiments of the present application, the drawings required for use in the embodiments are briefly introduced below. It should be understood that the following drawings only show certain embodiments of the present application and therefore should not be regarded as limiting the scope. For those of ordinary skill in the art, other related drawings can be obtained based on these drawings without creative effort.
FIG. 1 is a schematic structural diagram of a vehicle according to some embodiments of the present application.
FIG. 2 is an exploded view of a battery according to some embodiments of the present application.
FIG. 3 is an exploded view of a battery cell according to some embodiments of the present application.
FIG. 4 is an isometric view of the battery cell shown in FIG. 3.
FIG. 5 is a cross-sectional view along A-A of the battery cell shown in FIG. 4.
FIG. 6 is a partial enlarged view of region B in FIG. 5.
FIG. 7 is an isometric view of the casing shown in FIG. 5.
FIG. 8 is an isometric view of an electrode assembly according to some embodiments of the present application.
FIG. 9 is a schematic structural diagram of the electrode assembly shown in FIG. 8.
FIG. 10 is an isometric view of an electrode assembly according to other embodiments of the present application.
FIG. 11 is a schematic structural diagram of the electrode assembly shown in FIG. 10.
FIG. 12 is a partial view of the first wall shown in FIG. 6.
FIG. 13 is an isometric view of a casing according to some embodiments of the present application.
FIG. 14 is a top view of the casing shown in FIG. 13.
FIG. 15 is an isometric view of a casing according to other embodiments of the present application.
FIG. 16 is a top view of the casing shown in FIG. 15.
FIG. 17 is an isometric view of a casing according to further embodiments of the present application.
FIG. 18 is a top view of the casing shown in FIG. 17.
FIG. 19 is a partial view of a battery cell according to some embodiments of the present application (with a positive electrode plate, a negative electrode plate, and a separator of an electrode assembly shown).
FIG. 20 is a diagram showing a positional relationship among a positive electrode plate, a negative electrode plate, and a separator according to some embodiments of the present application.
FIG. 21 is a diagram showing a positional relationship among a positive electrode plate, a negative electrode plate, and a separator according to other embodiments of the present application.
FIG. 22 is a partial view of a battery cell according to some embodiments of the present application (with a first wall shown).
FIG. 23 is a partial view of the first wall shown in FIG. 22.
FIG. 24 is an isometric view of the casing shown in FIG. 22.
FIG. 25 is a partial view of a battery cell according to other embodiments of the present application (with a first wall shown).
FIG. 26 is a partial enlarged view of region C in FIG. 25.
FIG. 27 is a partial view of a battery cell according to further embodiments of the present application (with a first wall shown).
FIG. 28 is a partial enlarged view of region D in FIG. 27.
FIG. 29 is a partial view of a battery cell according to still further embodiments of the present application (with a first wall shown).
FIG. 30 is a partial enlarged view of region E in FIG. 29.
FIG. 31 is an isometric view of a casing according to still further embodiments of the present application.
FIG. 32 is a partial enlarged view of region F in FIG. 31.
FIG. 33 is a partial view of a battery cell according to some embodiments of the present application (with a corner wall shown).
FIG. 34 is a schematic structural diagram of a corner wall according to some embodiments of the present application.
FIG. 35 is a schematic structural diagram of a corner wall according to other embodiments of the present application.
FIG. 36 is a partial view of a battery cell according to other embodiments of the present application (with a corner wall shown).
FIG. 37 is a partial enlarged view of region G in FIG. 36.
FIG. 38 is a partial view of a battery cell according to further embodiments of the present application (with a corner wall shown).
FIG. 39 is a partial enlarged view of region H in FIG. 38.
FIG. 40 is a partial view of a battery cell according to still further embodiments of the present application (with a corner wall shown).
FIG. 41 is a partial enlarged view of region I in FIG. 40.
FIG. 42 is a diagram showing a positional relationship between an end cover and a side wall before welding according to some embodiments of the present application.
FIG. 43 is a schematic diagram showing the connection between an end cover and an electrode terminal according to some embodiments of the present application.

Reference signs: 1. housing; 11. casing; 111. first wall; 1111. first zone; 11111. first portion; 11112. second portion; 11113. first connecting segment; 11113a. first end; 11113b. second end; 11114. second connecting segment; 11115. third connecting segment; 11116. first transition segment; 11117. second transition segment; 11118. first protruding portion; 1112. second zone; 11121. first inner surface; 11122. first outer surface; 1113. third end; 1114. fourth end; 1115. limiting surface; 1116. limiting region; 1117. first transition region; 112. second wall; 113. corner wall; 1131. third zone; 1132. fourth zone; 11321. second inner surface; 11322. second outer surface; 1133. first connecting end; 1134. second connecting end; 1135. second transition region; 12. end cover; 121. outer surface of end cover; 2. electrode assembly; 21. tab; 21a. positive electrode tab; 21b. negative electrode tab; 22. positive electrode plate; 221. positive electrode main body region; 2211. fifth end; 222. positive electrode current collector; 223. positive electrode active material layer; 2231. positive electrode main body portion; 2232. positive electrode thinned portion; 224. insulating layer; 23. negative electrode plate; 231. negative electrode main body region; 2311. sixth end; 232. negative electrode current collector; 233. negative electrode active material layer; 2331. negative electrode main body portion; 2332. negative electrode thinned portion; 24. separator; 241. seventh end; 242. extension region; 25. flat region; 26. corner region; 27. first surface; 28. second surface; 3. electrode terminal; 31. terminal main body; 32. first limiting portion; 33. second limiting portion; 4. pressure relief mechanism; 5. connecting portion; 51. first connecting portion; 511. first connection interface; 5111. first position; 5112. first interface; 5113. second interface; 5114. third position; 5115. fourth position; 52. second connecting portion; 521. second connection interface; 5211. second position; 5212. third interface; 5213. fourth interface; 5214. fifth position; 5215. sixth position; 6. first insulating member; 7. second insulating member; 10. battery cell; 20. enclosure; 201. first enclosure; 202. second enclosure; 100. battery; 200. controller; 300. motor; 1000. vehicle; Z. first direction; Y. second direction; X. third direction; U. first dividing interface; and V. second dividing interface.

### DESCRIPTION OF EMBODIMENTS

To make the objectives, technical solutions, and advantages of the embodiments of the present application clearer, the technical solutions in the embodiments of the present application are clearly described below in conjunction with the drawings in the embodiments of the present application. Obviously, the described embodiments are a part of the embodiments of the present application, rather than all embodiments. Based on the embodiments in the present application, all other embodiments obtained by those of ordinary skill in the art without creative effort fall within the scope of protection of the present application.

Unless otherwise defined, all technical and scientific terms used in the present application have the same meaning as commonly understood by those skilled in the technical field of the present application; the terms used in the specification of the present application are only for the purpose of describing specific embodiments and are not intended to limit the present application; the terms "including" and "having" in the specification, claims, and the above-mentioned drawings of the present application, as well as any variations thereof, are intended to cover non-exclusive inclusion. The terms "first," "second," etc., in the specification, claims, or the above-mentioned drawings of the present application are used to distinguish different objects, rather than to describe a specific order or primary-secondary relationship.

The reference to "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments.

The term "and/or" in the present application is merely an association relationship describing associated objects, indicating that three relationships may exist, for example, A and/or B may indicate: A alone, A and B together, and B alone. In addition, the character "/" in the present application generally indicates an "or" relationship between the associated objects.

In the embodiments of the present application, the same reference numerals denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are merely exemplary and should not constitute any limitation to the present application.

The term "plurality" appearing in the present application refers to two or more (including two).

In the embodiments of the present application, the battery cell may be a secondary battery, which refers to a battery cell that can be recharged to activate the active material for continued use after discharge.

The battery cell includes but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead-acid battery.

The battery cell generally includes an electrode assembly. The electrode assembly includes a positive electrode, a negative electrode, and a separator. During the charge and discharge process of the battery cell, active ions (for example, lithium ions) intercalate and deintercalate back and forth between the positive electrode and the negative electrode. The separator is disposed between the positive electrode and the negative electrode, reducing the risk of short-circuiting between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, the metal foil may be silver-plated aluminum, silver-plated stainless steel, stainless steel, copper, aluminum, nickel, carbon electrode, carbon, nickel, titanium, or the like. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (for example, a matrix of polypropylene, polyethylene terephthalate, polybutylene terephthalate, polystyrene, or polyethylene).

In an example, the positive electrode active material may include at least one of the following materials: lithium-containing phosphates, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium-containing phosphates may include but are not limited to at least one of lithium iron phosphate (for example, LiFePO₄ (LFP for short)), lithium iron phosphate-carbon composite, lithium manganese phosphate (for example, LiMnPO₄), lithium manganese phosphate-carbon composite, lithium manganese iron phosphate, and lithium manganese iron phosphate-carbon composite. Examples of lithium transition metal oxides may include but are not limited to at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and their modified compounds.

In some embodiments, the positive electrode may be a foam metal. The foam metal may be foam nickel, foam copper, foam aluminum, foam alloy, or the like. When foam metal is used as the positive electrode, the surface of the foam metal may not be provided with a positive electrode active material, or it may be provided with a positive electrode active material. In an example, the foam metal may also be filled or/and deposited with a lithium source material, potassium metal, or sodium metal, where the lithium source material is lithium metal and/or lithium-rich material.

In some embodiments, the negative electrode may be a negative electrode plate, and the negative electrode plate may include a negative electrode current collector.

In an example, the negative electrode current collector may be a metal foil, foam metal, or composite current collector. For example, as a metal foil, it may be silver-plated aluminum, silver-plated stainless steel, stainless steel, copper, aluminum, nickel, carbon electrode, carbon, nickel, or titanium. The foam metal may be foam nickel, foam copper, foam aluminum, foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like.) on a polymer material substrate (for example, a matrix of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two opposite surfaces in its thickness direction, and the negative electrode active material is disposed on either or both of the two opposite surfaces of the negative electrode current collector.

In an example, the negative electrode active material may be a well-known negative electrode active material used for battery cells in the art. In an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxides, and tin alloys. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator is a separation film. The separation film may be any well-known porous structure separation film with good chemical and mechanical stability.

In an example, the material of the separation film may include at least one of glass fiber, non-woven fabric, polyethylene, polypropylene, and polyvinylidene fluoride. The separation film may be a single-layer film or a multilayer composite film. When the separation film is a multilayer composite film, the materials of each layer may be the same or different. The separator may be a separate component located between the positive and negative electrodes, or may be attached to the surfaces of the positive and negative electrodes.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte, which conducts ions between the positive and negative electrodes. The electrolyte may be liquid, gel, or solid. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a polymer as the backbone network of the electrolyte, combined with an ionic liquid-lithium salt system.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte may include one or more of oxide solid electrolytes (crystalline perovskite, sodium superionic conductor, garnet, amorphous LiPON thin film), sulfide solid electrolytes (crystalline lithium superionic conductor (lithium germanium phosphorus sulfide, argyrodite), amorphous sulfide), halide solid electrolytes, nitride solid electrolytes, and hydride solid electrolytes.

In an example, the composite solid-state electrolyte is formed by adding inorganic solid-state electrolyte fillers to a polymer solid-state electrolyte.

In some embodiments, the electrode assembly is a wound structure. The positive electrode plate and the negative electrode plate are wound into a wound structure.

In some embodiments, the electrode assembly is a laminated structure.

In an example, a plurality of positive electrode plates and a plurality of negative electrode plates may be provided, respectively, and the plurality of positive electrode plates and the plurality of negative electrode plates are alternately stacked.

In an example, a plurality of positive electrode plates may be provided, and the negative electrode plate is folded to form a plurality of stacked folding segments, with a positive electrode plate clamped between adjacent folding segments.

In an example, both the positive electrode plate and the negative electrode plate are folded to form a plurality of stacked folding segments.

In an example, a plurality of separators may be provided, respectively disposed between any positive electrode plate and negative electrode plate that are adjacent.

In an example, the separator may be continuously disposed, arranged between any positive electrode plate and negative electrode plate that are adjacent by folding or winding.

In some embodiments, the shape of the electrode assembly may be cylindrical, flat, or prismatic, or the like.

In some embodiments, the electrode assembly is provided with tabs, and the tabs can conduct current away from the electrode assembly. The tabs include a positive electrode tab and a negative electrode tab.

In some embodiments, the battery cell may include a housing. The housing is used to encapsulate the electrode assembly, electrolyte, and other components. The housing may be a steel casing, aluminum casing, plastic casing (for example, polypropylene), composite metal casing (for example, a copper-aluminum composite housing), or aluminum-plastic film, or the like.

In an example, the battery cell may be a cylindrical battery cell, a prismatic battery cell, a pouch battery cell, or a battery cell of other shapes. The prismatic battery cell includes a square-casing battery cell, a blade-shaped battery cell, or a multi-prismatic battery cell. The multi-prismatic battery cell is, for example, a hexagonal prismatic battery cell.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack, the battery pack includes an enclosure and battery cells, and the battery cells or battery modules are accommodated in the enclosure.

In some embodiments, the enclosure may be part of the chassis structure of a vehicle. For example, a part of the enclosure may become at least a part of the chassis of the vehicle, or a part of the enclosure may be at least a part of the cross beam and longitudinal beam of the vehicle.

In some embodiments, the battery may be an energy storage device. The energy storage device includes an energy storage container, an energy storage cabinet, or the like.

In the related art, a battery cell generally includes a housing and an electrode assembly. The housing may include a casing and an end cover, the casing has an opening, and after the electrode assembly is placed into the casing, the opening of the casing can be closed by the end cover to form a sealed space inside the housing to accommodate the electrode assembly.

To achieve a stable connection between the end cover and the casing, the end cover and the casing may be welded. After welding, a connecting portion is formed at the welding position of the end cover and the casing, and the region of the wall of the casing near the connecting portion forms a heat-affected zone due to the high welding temperature, resulting in reduced strength in the part of the casing wall in the heat-affected zone.

During the charge-discharge cycle of the battery cell, the electrode assembly undergoes expansion. When subjected to the expansion force of the electrode assembly, the walls of the casing deform, and prolonged exposure to such forces is likely to induce fatigue cracking in the region of the casing wall near the connecting portion (heat-affected zone), thereby affecting the service life of the battery cell.

Based on the above considerations, to alleviate the issue of the casing's wall near the connecting portion being prone to fatigue cracking, an embodiment of the present application provides a battery cell, where the battery cell includes a casing, an end cover, and an electrode assembly. The casing has an opening at at least one end along a first direction, the casing includes a first wall. The end cover closes the opening, and the first wall is welded to the end cover to form a first connecting portion. The electrode assembly is at least partially accommodated in the casing, the electrode assembly includes a positive electrode plate and a negative electrode plate, at least a part of the positive electrode plate and at least a part of the negative electrode plate are stacked along a second direction, the second direction is parallel to the thickness direction of the first wall, and the first direction intersects the second direction. The first wall includes a first zone and a second zone arranged along the first direction, the thickness of the first zone is greater than the thickness of the second zone, and the first zone is located between the first connecting portion and the second zone.

In such a battery cell, the thickness of the first zone is greater than the thickness of the second zone, and the first zone is located between the first connecting portion and the second zone, such that the thicker first zone is closer to the first connecting portion than the second zone, and the first zone reinforces the region of the first wall near the first connecting portion, reducing the risk of fatigue cracking in the region of the first wall near the first connecting portion due to the expansion of the electrode assembly, thereby improving the service life of the battery cell.

The battery cell described in the embodiments of the present application is suitable for batteries and electric devices using battery cells.

The electric device may be a vehicle, mobile phone, portable device, laptop, ship, spacecraft, electric toy, electric tool, or the like. The vehicle may be a fuel vehicle, gas vehicle, or new energy vehicle. The new energy vehicle may be a pure electric vehicle, hybrid vehicle, extended-range vehicle, or the like. The spacecraft includes an airplane, a rocket, a space shuttle, a spaceship, or the like. The electric toy includes fixed or mobile electric toys, such as a game console, an electric car toy, an electric ship toy, an electric airplane toy, or the like. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, or an electric planer. The embodiments of the present application impose no special restrictions on the above electric devices.

For convenience of explanation, the following embodiments take the electric device as a vehicle as an example.

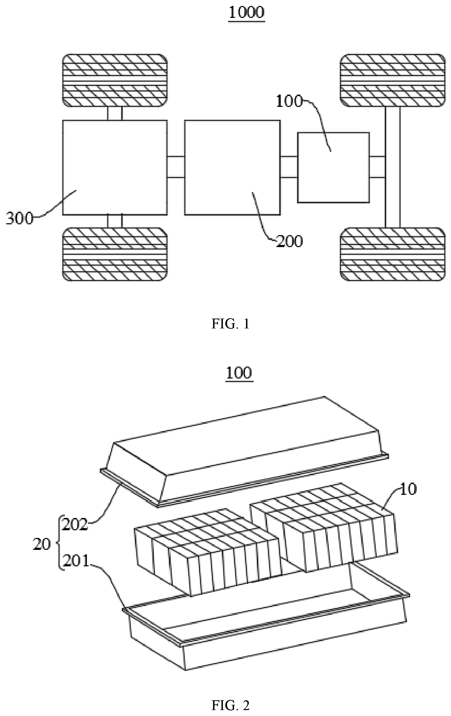

Referring to FIG. 1, where FIG. 1 is a schematic structural diagram of a vehicle 1000 according to some embodiments of the present application, the vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power supply for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 may be used as not only the operational power supply for the vehicle 1000 but also a driving power supply for the vehicle 1000, replacing all or a part of the fossil fuel or the natural gas to provide driving power for the vehicle 1000.

Referring to FIG. 2, where FIG. 2 is an exploded view of a battery 100 according to some embodiments of the present application, the battery 100 may include a battery cell 10 and an enclosure 20, with the battery cell 10 accommodated in the enclosure 20.

The enclosure 20 is a component that accommodates the battery cell 10, providing an accommodating space for the battery cell 10, and the enclosure 20 may adopt various structures. In some embodiments, the enclosure 20 may include a first enclosure 201 and a second enclosure 202, where the first enclosure 201 and the second enclosure 202 are fitted together to define a space for accommodating the battery cell 10. The first enclosure 201 and the second enclosure 202 may have various shapes, for example, cuboid, cylinder, or the like. The first enclosure 201 may be a hollow structure with an opening on one side, and the second enclosure 202 may also be a hollow structure with an opening on one side, with the opening side of the second enclosure 202 covering the opening side of the first enclosure 201 to form an enclosure 20 with an accommodating space. Alternatively, the first enclosure 201 may be a hollow structure with an opening on one side, and the second enclosure 202 may be a plate-like structure, with the second enclosure 202 covering the opening side of the first enclosure 201 to form an enclosure 20 with an accommodating space. The first enclosure 201 and the second enclosure 202 may be sealed by a sealing element, which may be a sealing ring, sealant, or the like.

In the battery 100, there may be one or more battery cells 10. If there are a plurality of battery cells 10, the plurality of battery cells 10 may be connected in series, parallel, or series-parallel, where being connected in series-parallel means a combination of series and parallel connections of the plurality of battery cells 10. The plurality of battery cells 10 may first be connected in series, parallel, or series-parallel to form a battery module, and a plurality of battery modules may then be connected in series, parallel, or series-parallel to form a single unit and accommodated in the enclosure 20. Alternatively, all battery cells 10 may be directly connected in series, parallel, or series-parallel, and the entire structure formed by all battery cells 10 is accommodated in the enclosure 20.

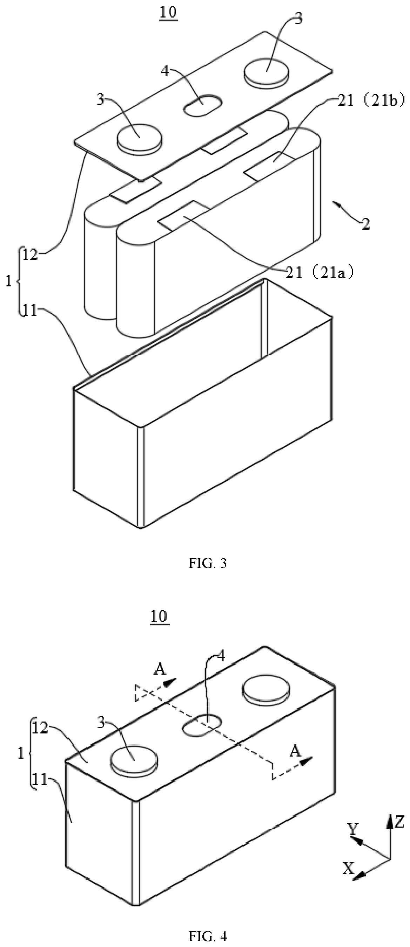

Referring to FIG. 3 and FIG. 4, where FIG. 3 is an exploded view of a battery cell 10 according to some embodiments of the present application; and FIG. 4 is an isometric view of the battery cell 10 shown in FIG. 3, the battery cell 10 may include a housing 1 and an electrode assembly 2, with the electrode assembly 2 accommodated in the housing 1.

In some embodiments, the housing 1 may include a casing 11 and an end cover 12, the casing 11 has an opening, and the end cover 12 closes the opening of the casing 11.

The casing 11 is a component for accommodating the electrode assembly 2, and the casing 11 may be a hollow structure with an opening formed at one end, or a hollow structure with openings formed at two opposite ends. The casing 11 may have various shapes, for example, cylinder, cuboid, or the like. The casing 11 may be made of various materials, such as copper, iron, aluminum, steel, and aluminum alloy. The electrode assembly 2 may be partially or entirely located within the casing 11.

The end cover 12 is a component that closes the opening of the casing 11 to isolate the internal environment of the battery cell 10 from the external environment. The end cover 12 and the casing 11 together define a receiving space for accommodating the electrode assembly 2, electrolyte, and other components. The end cover 12 may be connected to the casing 11 by welding or crimping to close the opening of the casing 11. The shape of the end cover 12 may be adapted to the shape of the casing 11, for example, if the casing 11 is a cuboidal structure, the end cover 12 is a rectangular plate-like structure adapted to the casing 11; if the casing 11 is a cylindrical structure, the end cover 12 is a circular plate-like structure adapted to the casing 11. The end cover 12 may also be made of various materials, such as copper, iron, aluminum, steel, and aluminum alloy, and the material of the end cover 12 may be the same as or different from that of the casing 11.

In an embodiment where the casing 11 has an opening formed at one end, one end cover 12 may be provided correspondingly. In an embodiment where the casing 11 has openings formed at two opposite ends, two end covers 12 may be provided correspondingly, with the two end covers 12 respectively closing the two openings of the casing 11, and the two end covers 12 and the casing 11 together defining a receiving space.

In some embodiments, the battery cell 10 may further include an electrode terminal 3. The electrode terminal 3 is disposed on the housing 1 and used to electrically connect with the tab 21 of the electrode assembly 2 to input or output the electrical energy of the battery cell 10. The electrode terminal 3 may be disposed on the casing 11 of the housing 1 or on the end cover 12 of the housing 1. The electrode terminal 3 and the tab 21 may be directly connected, for example, by welding the electrode terminal 3 to the tab 21. The electrode terminal 3 and the tab 21 may also be indirectly connected, for example, through a current collector member. The current collector member may be a metal conductor, such as copper, iron, aluminum, steel, and aluminum alloy.

In some embodiments, the battery cell 10 may further include a pressure relief mechanism 4. The pressure relief mechanism 4 may be disposed on the end cover 12 or on the casing 11. The pressure relief mechanism 4 may be a pressure relief component installed on the casing 11 or the end cover 12, such as an explosion-proof disc or a safety valve. The pressure relief mechanism 4 may also be integrally formed with the end cover 12 or the casing 11. The pressure relief mechanism 4 may be provided with a pressure relief groove to rupture along the groove during pressure relief of the battery cell 10. The pressure relief groove may be a groove extending along a closed trajectory, such as a circular or rectangular trajectory; or a groove extending along a non-closed trajectory, such as an H-shaped, Y-shaped, V-shaped, or U-shaped trajectory.

In an example, as shown in FIG. 3 and FIG. 4, the casing 11 has an opening formed at one end, and the housing 1 includes one end cover 12, which closes the opening of the casing 11. The end cover 12 is provided with a pressure relief mechanism 4 and two electrode terminals 3, the two electrode terminals 3 being a positive electrode terminal and a negative electrode terminal, respectively. The end of the electrode assembly 2 facing the end cover 12 is formed with a positive electrode tab 21a and a negative electrode tab 21b, the positive electrode terminal is electrically connected to the positive electrode tab 21a, and the negative electrode terminal is electrically connected to the negative electrode tab 21b.

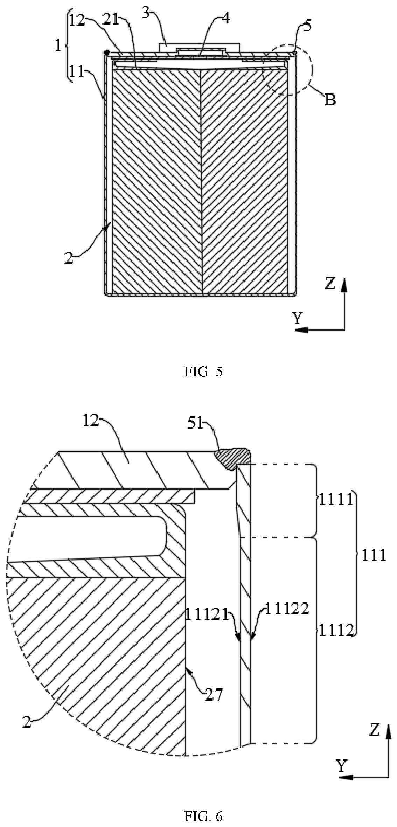

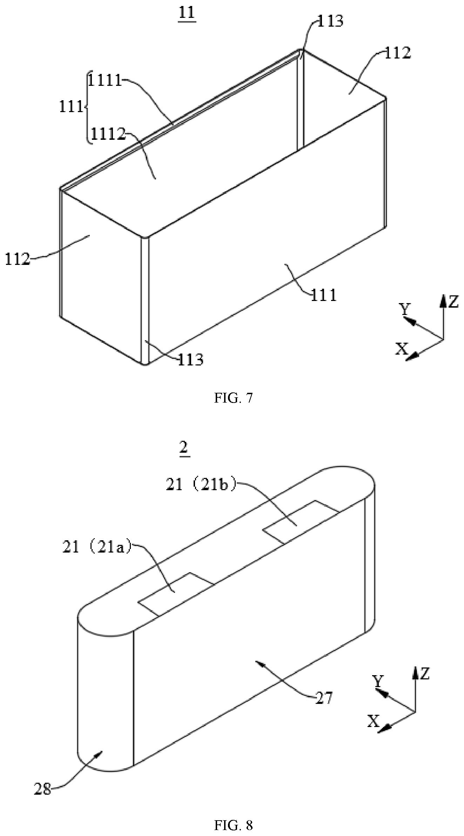

Referring to FIG. 5 to FIG. 7, where FIG. 5 is a cross-sectional view along A-A of the battery cell 10 shown in FIG. 4; FIG. 6 is a partial enlarged view of region B in FIG. 5; and FIG. 7 is an isometric view of the casing 11 shown in FIG. 5, embodiments of the present application provide a battery cell 10. The battery cell 10 includes a casing 11, an end cover 12, and an electrode assembly 2. The casing 11 has an opening at at least one end along a first direction Z, the casing 11 includes a first wall 111, the end cover 12 closes the opening, and the first wall 111 is welded to the end cover 12 to form a first connecting portion 51. The electrode assembly 2 is at least partially accommodated in the casing 11, the electrode assembly 2 includes a positive electrode plate 22 and a negative electrode plate 23, at least a part of the positive electrode plate 22 and at least a part of the negative electrode plate 23 are stacked along a second direction Y, the second direction Y is parallel to the thickness direction of the first wall 111, and the first direction Z intersects the second direction Y. The first wall 111 includes a first zone 1111 and a second zone 1112 arranged along the first direction Z, the thickness of the first zone 1111 is greater than the thickness of the second zone 1112, and the first zone 1111 is located between the first connecting portion 51 and the second zone 1112.

The casing 11 may have an opening formed at only one end along the first direction Z, with one end cover 12 provided correspondingly; or the casing 11 may have openings formed at two opposite ends along the first direction Z, with two end covers 12 provided correspondingly. The casing 11 may be of various shapes, such as cylindrical and prismatic, where the prism may be a triangular prism, quadrangular prism, pentagonal prism, hexagonal prism, or the like, and the quadrangular prism may be a cuboid, cube, or the like. The first direction Z is parallel to the orientation of the opening of the casing 11. In an embodiment where the casing 11 is cylindrical, the first direction Z may be parallel to the axial direction of the casing 11. In an embodiment where the casing 11 is prismatic, the first direction Z may be parallel to the extension direction of the side edges of the casing 11. The second direction Y is parallel to the thickness direction of the first wall 111. In an embodiment where the casing 11 is cylindrical, the first wall 111 is cylindrical, the radial direction of the casing 11 is the thickness direction of the first wall 111, and the second direction Y is parallel to the radial direction of the casing 11. In an embodiment where the casing 11 is prismatic, the first wall 111 may be a rectangular plate-like structure. The first direction Z and the second direction Y may form an acute angle, a right angle, or an obtuse angle.

The end cover 12 may be welded to the casing 11, and the welding of the end cover 12 and the casing 11 may form a connecting portion 5. The connecting portion 5 may extend along a circumferential direction of the opening of the casing 11. The end cover 12 and the casing 11 are fixedly connected through the connecting portion 5 to achieve sealing between the end cover 12 and the casing 11. The connecting portion 5 refers to the part with weld marks formed after welding the end cover 12 and the casing 11, which may be the part where the end cover 12 and the casing 11 are fused together by welding.

The casing 11 may include one or more first walls 111. The first connecting portion 51 may correspond one-to-one with the first wall 111, and the first connecting portion 51 refers to the part with weld marks formed after welding the end cover 12 and the first wall 111, which may be the part where the end cover 12 and the first wall 111 are fused together by welding. A part of the first connecting portion 51 is formed on the end cover 12, and another part of the first connecting portion 51 is formed on the first wall 111. The first wall 111 and the end cover 12 may form the first connecting portion 51 by seam welding or penetration welding. The first connecting portion 51 may be a part of the connecting portion 5 or the entirety of the connecting portion 5. In an embodiment where the casing 11 is cylindrical, there is only one first wall 111 in the casing 11, which is cylindrical, and the first connecting portion 51 is the connecting portion 5. In an embodiment where the casing 11 is prismatic, the casing 11 may include a plurality of side walls, the plurality of side walls are arranged along the opening of the casing 11, and at least one of the two side walls disposed opposite each other along the second direction Y may be the first wall 111, with the first connecting portion 51 being a part of the connecting portion 5.

The first wall 111 may or may not be a wall with the largest outer surface area in the casing 11. Taking the casing 11 as a cuboidal shape as an example, the casing 11 may include two first walls 111 and two second walls 112, the two first walls 111 are disposed opposite each other along the second direction Y, the two second walls 112 are disposed opposite each other along the third direction X, and the first direction Z, the second direction Y, and the third direction X are pairwise perpendicular. The first wall 111 may be the wall with the largest outer surface area in the casing 11, such that the outer surface area of the first wall 111 is greater than the outer surface area of the second wall 112, or the second wall 112 may be the wall with the largest outer surface area in the casing 11, such that the outer surface area of the second wall 112 is greater than the outer surface area of the first wall 111.

The first zone 1111 may be a thickened region of the first wall 111. The first zone 1111 is thicker than the second zone 1112, and the second zone 1112 may be the part of the first wall 111 located on the side of the first zone 1111 away from the first connecting portion 51 along the first direction Z. The first zone 1111 may be directly or indirectly connected to the first connecting portion 51. The first zone 1111 may be directly or indirectly connected to the second zone 1112. The first zone 1111 may be a structure with uniform thickness or non-uniform thickness. The second zone 1112 may be a structure with uniform thickness or non-uniform thickness. If at least one of the first zone 1111 and the second zone 1112 has non-uniform thickness, the maximum thickness of the second zone 1112 may be less than or equal to the minimum thickness of the first zone 1111, to ensure that the thickness of the first zone 1111 is greater than the thickness of the second zone 1112.

The second zone 1112 has a first inner surface 11121 facing the internal space of the casing 11 and a first outer surface 11122 facing away from the internal space of the casing 11, and the first zone 1111 may partially protrude from the first inner surface 11121 and/or the first outer surface 11122. In an example, in the embodiment shown in FIG. 6, a part of the first zone 1111 protrudes from the first inner surface 11121, and an outer surface of the first zone 1111 is coplanar with the first outer surface 11122.

The electrode assembly 2 is located in the receiving space defined by the casing 11 and the end cover 12. The electrode assembly 2 may be a laminated structure or a wound structure. There may be one or more electrode assemblies 2 in the casing 11. If there are a plurality of electrode assemblies 2, the plurality of electrode assemblies 2 may be stacked, for example, stacked along the second direction Y.

At least a part of the positive electrode plate 22 and at least a part of the negative electrode plate 23 are stacked along the second direction Y, and the electrode assembly 2 expands along the second direction Y during cycling, causing the first wall 111 to deform under the expansion force of the electrode assembly 2, which is likely to cause fatigue cracking in the region of the first wall 111 near the first connecting portion 51. In the present application, the thickness of the first zone 1111 is set to be greater than the thickness of the second zone 1112 and the first zone 1111 is arranged between the first connecting portion 51 and the second zone 1112, such that the thicker first zone 1111 is closer to the first connecting portion 51 than the second zone 1112, and the first zone 1111 reinforces the region of the first wall 111 near the first connecting portion 51, reducing the risk of fatigue cracking in the region of the first wall 111 near the first connecting portion 51 due to the expansion of the electrode assembly 2, thereby improving the service life of the battery cell 10.

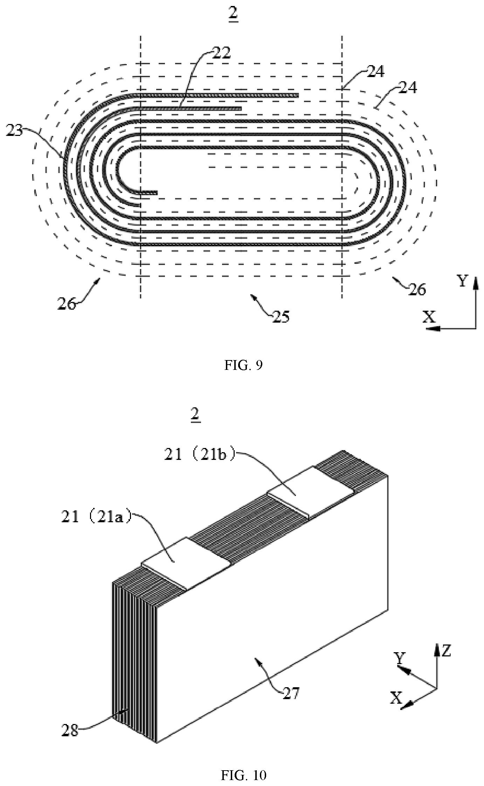

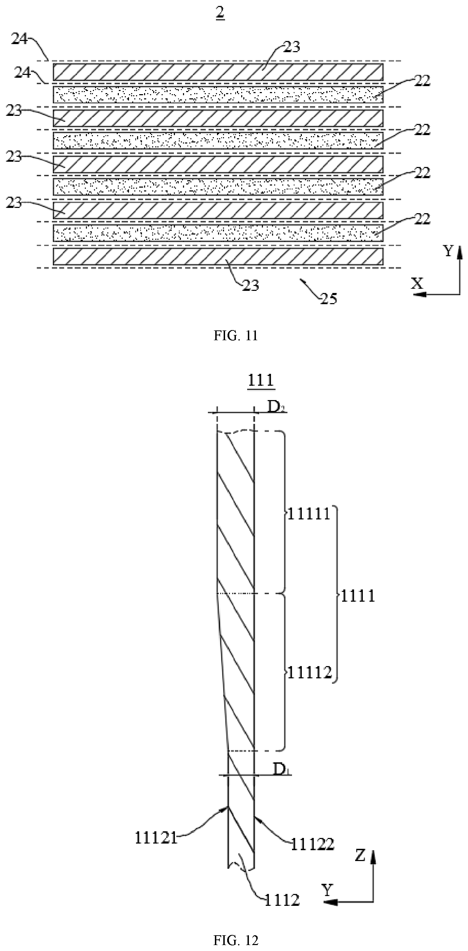

In some embodiments, referring to FIG. 8 to FIG. 11, where FIG. 8 is an isometric view of an electrode assembly 2 according to some embodiments of the present application; FIG. 9 is a schematic structural diagram of the electrode assembly 2 shown in FIG. 8; FIG. 10 is an isometric view of an electrode assembly 2 according to other embodiments of the present application; and FIG. 11 is a schematic structural diagram of the electrode assembly 2 shown in FIG. 10, the electrode assembly 2 has a flat region 25, and a part of the positive electrode plate 22 located in the flat region 25 and a part of the negative electrode plate 23 located in the flat region 25 are stacked along the second direction Y.

The flat region 25 is the flat portion of the electrode assembly 2, where the part of the positive electrode plate 22 located in the flat region 25 is substantially flat, and the part of the negative electrode plate 23 located in the flat region 25 is substantially flat. In an example, both the part of the positive electrode plate 22 located in the flat region 25 and the part of the negative electrode plate 23 located in the flat region 25 are plate-like structures. If the electrode assembly 2 is a wound structure, the electrode assembly 2 is a wound electrode assembly, and a part of the electrode assembly 2 may be the flat region 25. If the electrode assembly 2 is a laminated structure, the electrode assembly 2 is a wound electrode assembly, and the entire electrode assembly 2 may be the flat region 25. The second direction Y is the stacking direction of the part of the positive electrode plate 22 located in the flat region 25 and the part of the negative electrode plate 23 located in the flat region 25.

In an example, the electrode assembly 2 may further include a separator 24, where the separator 24 is provided between the positive electrode plate 22 and the negative electrode plate 23, and the separator 24 is configured to separate the positive electrode plate 22 and the negative electrode plate 23. The part of the positive electrode plate 22 located in the flat region 25, the part of the negative electrode plate 23 located in the flat region 25, and the part of the separator 24 located in the flat region 25 are stacked along the second direction Y.

The second direction Y is the stacking direction of the part of the positive electrode plate 22 located in the flat region 25 and the part of the negative electrode plate 23 located in the flat region 25, the electrode assembly 2 undergoes greater expansion along the second direction Y during cycling, and the first wall 111 is more significantly affected by the expansion of the electrode assembly 2. However, since the first zone 1111 reinforces the region of the first wall 111 near the first connecting portion 51, the risk of fatigue cracking in the first wall 111 near the first connecting portion 51 due to the expansion of the electrode assembly 2 is reduced.

In some embodiments, continuing to refer to FIG. 8 to FIG. 11, the electrode assembly 2 includes adjacent first surface 27 and second surface 28, the first surface 27 is perpendicular to the second direction Y, the area of the first surface 27 is greater than the area of the second surface 28, and the first surface 27 is disposed opposite the first wall 111 along the second direction Y.

The first surface 27 is one of outer surfaces of the electrode assembly 2 that is perpendicular to the second direction Y, and the second surface 28 is one of the outer surfaces of the electrode assembly 2 that is adjacent to the first surface 27. The first surface 27 faces the first wall 111 along the second direction Y. The first surface 27 may be a plane. The first surface 27 may or may not be a surface with the largest area among the outer surfaces of the electrode assembly 2. The second surface 28 may be a plane, or at least a portion thereof may be an arc surface. It should be noted that the first surface 27 being substantially perpendicular to the second direction Y should also be understood as the first surface 27 being perpendicular to the second direction Y.

In an example, there are two first surfaces 27 and two second surfaces 28, the two first surfaces 27 are arranged opposite each other along the second direction Y, and the two second surfaces 28 are arranged opposite each other along the third direction X. The positive electrode tab 21a and the negative electrode tab 21b protrude from the surface of the electrode assembly 2 along the first direction Z, the outermost portion of the electrode assembly 2 along the second direction Y is the separator 24, the first surface 27 is formed on the separator 24, and the first direction Z, the second direction Y, and the third direction X are pairwise perpendicular.

In the embodiments, the area of the first surface 27 is larger than the area of the second surface 28, such that the first wall 111 disposed opposite the first surface 27 in the casing 11 experiences greater expansion force. Since the first zone 1111 reinforces the region of the first wall 111 near the first connecting portion 51, the risk of fatigue cracking in the first wall 111 near the first connecting portion 51 due to the expansion of the electrode assembly 2 is reduced.

In some embodiments, the first surface 27 is the surface with the largest area among the outer surfaces of the electrode assembly 2.

It should be noted that the first surface 27 being the largest surface among the outer surfaces of the electrode assembly 2 does not limit the electrode assembly 2 to having only one first surface 27. It can be understood that the electrode assembly 2 may have one or two first surfaces 27.

In an example, in the embodiment shown in FIG. 8, the electrode assembly 2 is a wound structure, the electrode assembly 2 is flat, the electrode assembly 2 includes six surfaces, and among the six surfaces, the two surfaces disposed opposite each other along the second direction Y have the largest area, and the two surfaces are both first surfaces 27. In the embodiment shown in FIG. 10, the electrode assembly 2 is a laminated structure, the electrode assembly 2 is substantially cuboidal, the electrode assembly 2 includes six surfaces, and among the six surfaces, the two surfaces disposed opposite each other along the second direction Y have the largest area, and the two surfaces are both first surfaces 27.

In this embodiment, the first surface 27 is the surface with the largest area among the outer surfaces of the electrode assembly 2, such that the first wall 111 disposed opposite the first surface 27 in the casing 11 experiences the greatest expansion force. Since the first zone 1111 reinforces the region of the first wall 111 near the first connecting portion 51, the risk of fatigue cracking in the first wall 111 near the first connecting portion 51 due to the expansion of the electrode assembly 2 is reduced.

In some embodiments, continuing to refer to FIG. 8 and FIG. 9, the electrode assembly 2 is a wound structure, the electrode assembly 2 further includes a corner region 26, at least one end of the flat region 25 along the third direction X is provided with a corner region 26, and the first direction Z, the second direction Y, and the third direction X are not coplanar and intersect pairwise. An outer surface of the flat region 25 includes the first surface 27, an outer surface of the corner region 26 includes the second surface 28, and at least a part of the second surface 28 is an arc surface.

The flat region 25 may have a corner region 26 provided at only one end along the third direction X, or it may have corner regions 26 at two opposite ends along the third direction X. The first direction Z, the second direction Y, and the third direction X are not coplanar, and any two of the first direction Z, the second direction Y, and the third direction X may form an acute angle, a right angle, or an obtuse angle. The first surface 27 may be a part of the outer surface of the flat region 25, the second surface 28 may be a part of the outer surface of the corner region 26, and the second surface 28 may be entirely an arc surface or only partially an arc surface.

In an example, the positive electrode plate 22, the separator 24, and the negative electrode plate 23 are stacked and wound to form a wound structure. The first direction Z, the second direction Y, and the third direction X are pairwise perpendicular, and a corner region 26 is provided at each of the two ends of the flat region 25 along the third direction X. Parts of the positive electrode plate 22, the negative electrode plate 23, and the separator 24 located in the corner region 26 are in a curved state, a part of the positive electrode plate 22 located in the corner region 26 may be at least partially arc-shaped, a part of the negative electrode plate 23 located in the corner region 26 may be at least partially arc-shaped, and a part of the separator 24 located in the corner region 26 may be at least partially arc-shaped. Along the winding direction of the electrode assembly 2, the outermost layer of the electrode assembly 2 is the separator 24, the first surface 27 and the second surface 28 are both parts of the outer surface of the outermost layer of the electrode assembly 2, the first surface 27 is a plane, the second surface 28 is an arc surface, and the axis of the arc surface extends along the first direction Z. Along the second direction Y, the surfaces on both sides of the flat region 25 are first surfaces 27; along the third direction X, the surface of one corner region 26 facing away from the other corner region 26 is one second surface 28, and the surface of the other corner region 26 facing away from the one corner region 26 is another second surface 28.

For a wound electrode assembly, the flat region 25 undergoes greater expansion along the second direction Y. Since the first zone 1111 reinforces the region of the first wall 111 near the first connecting portion 51, the risk of fatigue cracking in the first wall 111 near the first connecting portion 51 due to the expansion of the electrode assembly 2 is effectively reduced.

In some embodiments, continuing to refer to FIG. 10 and FIG. 11, the electrode assembly 2 is a laminated structure, the flat region 25 includes a plurality of positive electrode plates 22 and a plurality of negative electrode plates 23, the plurality of positive electrode plates 22 and the plurality of negative electrode plates 23 are stacked along the second direction Y, and the first surface 27 is perpendicular to the second surface 28.

In an example, a plurality of positive electrode plates 22, a plurality of negative electrode plates 23, and a plurality of separators 24 are stacked along the second direction Y to form a laminated structure. The positive electrode plates 22 and the negative electrode plates 23 are entirely located in the flat region 25, a separator 24 is provided between adjacent positive electrode plates 22 and negative electrode plates 23, the separator 24 extends beyond both ends of the positive electrode plates 22 and both ends of the negative electrode plates 23 along the third direction X, and the extending parts of the plurality of separators 24 are connected to form an integral structure, with the second surface 28 formed on this integral structure. Along the second direction Y, all positive electrode plates 22 and all negative electrode plates 23 are located between the two outermost separators 24, and the outer surfaces of these two separators 24 are both first surfaces 27.

It should be noted that the first surface 27 being substantially perpendicular to the second surface 28 should also be understood as the first surface 27 being perpendicular to the second surface 28. For example, an angle between the first surface 27 and the second surface 28 in the range of 85° to 95° can be understood as the first surface 27 being perpendicular to the second surface 28.

For a wound electrode assembly, the electrode assembly 2 undergoes greater expansion in the stacking direction of the positive electrode plates 22 and the negative electrode plates 23. Since the first zone 1111 reinforces the region of the first wall 111 near the first connecting portion 51, the risk of fatigue cracking in the first wall 111 near the first connecting portion 51 due to the expansion of the electrode assembly 2 is effectively reduced.

In some embodiments, continuing to refer to FIG. 7, the first wall 111 is the wall with the largest outer surface area in the casing 11.

It should be noted that the first wall 111 being the wall with the largest outer surface area in the casing 11 does not limit the casing 11 to having only one first wall 111. It can be understood that the wall with the largest outer surface area in the casing 11 may be one or two.

The wall with the largest outer surface area in the casing 11 is more prone to deformation under the expansion force of the electrode assembly 2. Since the first wall 111 is the wall with the largest outer surface area in the casing 11, the risk of fatigue cracking in the wall with the largest outer surface area in the casing 11 near the first connecting portion 51 due to the expansion of the electrode assembly 2 is reduced.

In some embodiments, the casing 11 includes two first walls 111, and along the second direction Y, the two first walls 111 are disposed opposite each other, with the electrode assembly 2 (shown in FIG. 5) located between the two first walls 111.

In an example, in the embodiment shown in FIG. 7, the casing 11 is cuboidal, the casing 11 may include two first walls 111 and two second walls 112, the two first walls 111 are arranged opposite each other along the second direction Y, the two second walls 112 are arranged opposite each other along the third direction X, and the outer surface area of the first wall 111 is greater than the outer surface area of the second wall 112. The first direction Z is parallel to the height direction of the casing 11, the second direction Y is parallel to the width direction of the casing 11, and the third direction X is parallel to the length direction of the casing 11.

In this embodiment, the casing 11 includes two first walls 111, reducing the risk of fatigue cracking in the two first walls 111 near the first connecting portion 51 due to the expansion of the electrode assembly 2.

In some embodiments, referring to FIG. 12, where FIG. 12 is a partial view of the first wall 111 shown in FIG. 6, the first zone 1111 includes a first portion 11111 and a second portion 11112 arranged along the first direction Z. The second portion 11112 connects the first portion 11111 and the second zone 1112, and the thickness of the first portion 11111 is greater than the thickness of the second portion 11112.

The first portion 11111, the second portion 11112, and the second zone 1112 are sequentially arranged along the first direction Z, with the first portion 11111 transitioning to the second zone 1112 through the second portion 11112. The first portion 11111 may be a structure with uniform thickness or non-uniform thickness; the second portion 11112 may be a structure with uniform thickness or non-uniform thickness. If at least one of the first portion 11111 and the second portion 11112 has non-uniform thickness, the maximum thickness of the second portion 11112 may be less than or equal to the minimum thickness of the first portion 11111, to ensure that the thickness of the first portion 11111 is greater than the thickness of the second portion 11112.

The first portion 11111 may partially protrude from the first inner surface 11121 and/or the first outer surface 11122, and the second portion 11112 may also protrude from the first inner surface 11121 and/or the first outer surface 11122.

The region of the first zone 1111 near the first connecting portion 51 is more likely to form a heat-affected zone, which is more prone to fatigue cracking. However, since the second portion 11112 connects the first portion 11111 and the second zone 1112, and the thickness of the first portion 11111 is greater than the thickness of the second portion 11112, the thicker first portion 11111 in the first zone 1111 is closer to the first connecting portion 51, effectively mitigating the impact of the heat-affected zone on the first zone 1111, reducing the risk of fatigue cracking in the region of the first wall 111 near the first connecting portion 51. In addition, since the thickness of the second portion 11112 is less than the thickness of the first portion 11111, material usage in the first zone 1111 is reduced, lowering production costs.

In some embodiments, the thickness of the second portion 11112 decreases along a direction from the end cover 12 (not shown in FIG. 12) toward the electrode assembly 2 (not shown in FIG. 12).

The direction from the end cover 12 toward the electrode assembly 2 is consistent with the direction from the first portion 11111 toward the second zone 1112 along the first direction Z.

It can be understood that the second portion 11112 has non-uniform thickness. In an example, the thickness of the second portion 11112 gradually decreases along the direction from the end cover 12 toward the electrode assembly 2. At least one of the inner surface and the outer surface of the second portion 11112 may be an inclined surface to achieve the gradual decrease in the thickness of the second portion 11112 along the direction from the end cover 12 toward the electrode assembly 2.

In an example, in the embodiment shown in FIG. 12, both the first portion 11111 and the second zone 1112 are structures with uniform thickness, the inner and outer surfaces of the first portion 11111 are parallel, and the first inner surface 11121 and the first outer surface 11122 of the second zone 1112 are parallel. The outer surface of the second portion 11112, the outer surface of the first portion 11111, and the first outer surface 11122 are coplanar, a part of the first portion 11111 and a part of the second portion 11112 both protrude from the first inner surface 11121, and the inner surface of the second portion 11112 connects the first inner surface 11121 and the inner surface of the first portion 11111.

In this embodiment, the thickness of the second portion 11112 decreases along the direction from the end cover 12 toward the electrode assembly 2, such that the impact of the second portion 11112 on the electrode assembly 2 can be reduced, lowering the risk of interference between the second portion 11112 and the electrode assembly 2. In addition, the reinforcement effect of the second portion 11112 increases along the direction from the electrode assembly 2 toward the end cover 12, such that the region of the second portion 11112 near the first portion 11111 has a good reinforcement effect even if affected by the first connecting portion 51, reducing the risk of fatigue cracking in the first wall 111 at the second portion 11112; furthermore, the second portion 11112 enables a transition between the first portion 11111 and the second zone 1112, reducing stress concentration.

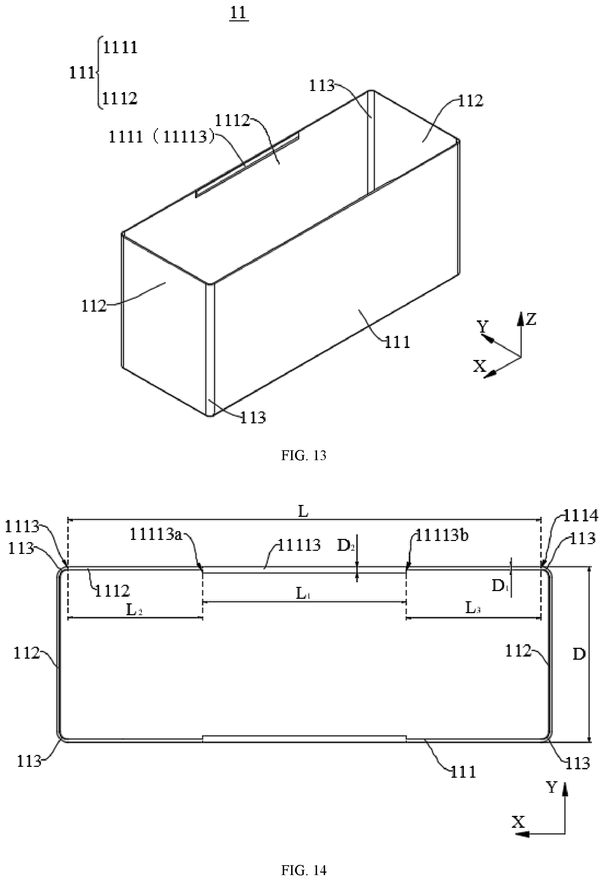

In some embodiments, referring to FIG. 13 and FIG. 14, where FIG. 13 is an isometric view of a casing 11 according to some embodiments of the present application; and FIG. 14 is a top view of the casing 11 shown in FIG. 13, a dimension of the first zone 1111 along the third direction X is greater than a dimension of the first zone 1111 along the first direction Z, and the first direction Z, the second direction Y, and the third direction X are not coplanar and intersect pairwise.

The dimension of the first zone 1111 along the third direction X is the length of the first zone 1111, and the dimension of the first zone 1111 along the first direction Z is the width of the first zone 1111. The length of the first zone 1111 is greater than its width, such that the first zone 1111 has an elongated strip-shaped structure extending along the third direction X.

In an example, the casing 11 is cuboidal, the casing 11 includes two first walls 111 and two second walls 112, the two first walls 111 are disposed opposite each other along the second direction Y, the two second walls 112 are disposed opposite each other along the third direction X, the first direction Z, the second direction Y, and the third direction X are pairwise perpendicular, the first direction Z is parallel to the height direction of the casing 11, the second direction Y is parallel to the width direction of the casing 11, and the third direction X is parallel to the length direction of the casing 11.

In the embodiments, the dimension of the first zone 1111 along the third direction X is greater than the dimension of the first zone 1111 along the first direction Z, making the dimension of the first zone 1111 along the third direction X larger, such that more regions of the first wall 111 along the third direction X are reinforced, further reducing the risk of fatigue cracking in the region of the first wall 111 near the first connecting portion 51.

In some embodiments, the first zone 1111 includes a first connecting segment 11113, the first connecting segment 11113 passes through a mid-section of the first wall 111, the mid-section is perpendicular to the third direction X, and distances from the mid-section to two ends of the first wall 111 along the third direction X are equal.

The first connecting segment 11113 may be a part of the first zone 1111, or the first connecting segment 11113 may be the entire first zone 1111. The first connecting segment 11113 may be a structure with uniform thickness or non-uniform thickness; the first connecting segment 11113 has two opposite ends along the third direction X, and the first connecting segment 11113 passes through the mid-section of the first wall 111, such that the mid-section of the first wall 111 is located between the two opposite ends of the first connecting segment 11113 along the third direction X. Distances from the two opposite ends of the first connecting segment 11113 along the third direction X to the mid-section may be equal or unequal. If the distances from the two opposite ends of the first connecting segment 11113 along the third direction X to the mid-section of the first wall 111 are equal, the first connecting segment 11113 may be a symmetrical structure disposed symmetrically about the mid-section of the first wall 111. It should be noted that the mid-section of the first wall 111 is a virtual plane and is not shown in the figures.

In an example, in the embodiments shown in FIG. 13 and FIG. 14, the first connecting segment 11113 is the entire first zone 1111, the first connecting segment 11113 is a structure with uniform thickness, and the distances from two opposite ends of the first connecting segment 11113 along the third direction X to the mid-section of the first wall 111 are equal.

Taking the casing 11 as a cuboidal shape as an example, the distances from the mid-section of the first wall 111 to the two ends of the first wall 111 along the third direction X are equal, that is, the distances from the mid-section of the first wall 111 to the two second walls 112 of the casing 11 disposed opposite each other along the third direction X are equal.

It should be noted that the distances from the mid-section of the first wall 111 to the two ends of the first wall 111 along the third direction X being substantially equal should also be understood as the distances being equal.

When the first wall 111 is subjected to the expansion force of the electrode assembly 2 of the battery cell 10, the middle region of the first wall 111 along the third direction X undergoes greater deformation, making the middle region of the first wall 111 along the third direction X more prone to fatigue cracking. Since the first connecting segment 11113 of the first zone 1111 passes through the mid-section of the first wall 111, the strength of at least the middle region of the first wall 111 along the third direction X is reinforced, reducing the risk of fatigue cracking in the middle region of the first wall 111 near the first connecting portion 51 along the third direction X.

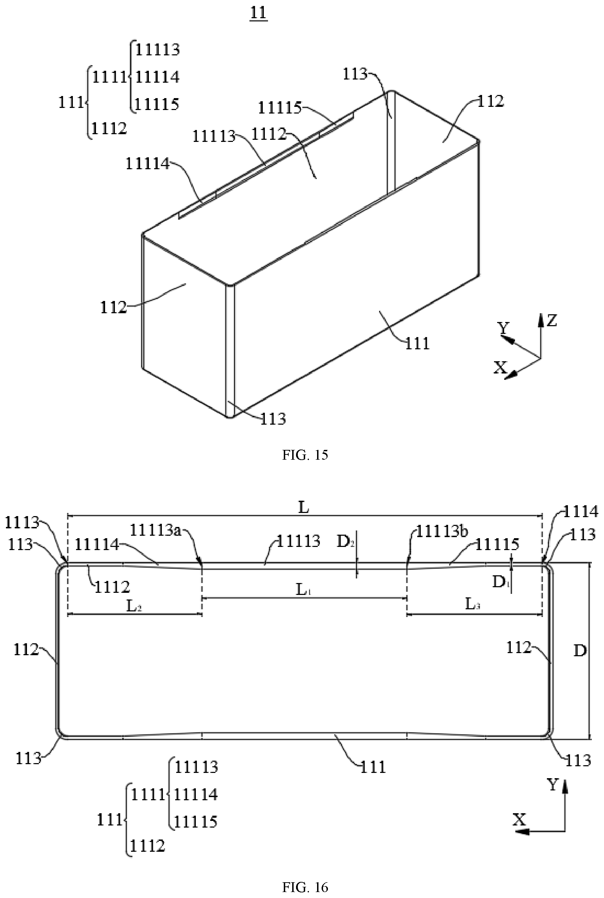

In some embodiments, FIG. 15 is an isometric view of a casing 11 according to other embodiments of the present application; and FIG. 16 is a top view of the casing 11 shown in FIG. 15. The first zone 1111 further includes a second connecting segment 11114 and a third connecting segment 11115, the second connecting segment 11114, the first connecting segment 11113, and the third connecting segment 11115 are arranged along the third direction X, the first connecting segment 11113 connects the second connecting segment 11114 and the third connecting segment 11115, and the thickness of the first connecting segment 11113 is greater than the thickness of the second connecting segment 11114 and the thickness of the third connecting segment 11115.

The first connecting segment 11113 is a segment of the first zone 1111 that passes through the mid-section of the first wall 111, and the second connecting segment 11114 and the third connecting segment 11115 are two segments of the first zone 1111 located at two ends along the third direction X, respectively. The second connecting segment 11114 may be directly or indirectly connected to the first connecting segment 11113, and the third connecting segment 11115 may be directly or indirectly connected to the first connecting segment 11113.

The first connecting segment 11113 may be a structure with uniform thickness or non-uniform thickness; the second connecting segment 11114 may be a structure with uniform thickness or non-uniform thickness; and the third connecting segment 11115 may be a structure with uniform thickness or non-uniform thickness. If at least one of the first connecting segment 11113 and the second connecting segment 11114 has non-uniform thickness, the maximum thickness of the second connecting segment 11114 may be less than or equal to the minimum thickness of the first connecting segment 11113, to ensure that the thickness of the first connecting segment 11113 is greater than the thickness of the second connecting segment 11114. If at least one of the third connecting segment 11115 and the first connecting segment 11113 has non-uniform thickness, the maximum thickness of the third connecting segment 11115 may be less than or equal to the minimum thickness of the first connecting segment 11113, to ensure that the thickness of the first connecting segment 11113 is greater than the thickness of the third connecting segment 11115.

The dimension of the second connecting segment 11114 along the third direction X and the dimension of the third connecting segment 11115 along the third direction X may be equal or unequal. If the dimension of the second connecting segment 11114 along the third direction X is equal to the dimension of the third connecting segment 11115 along the third direction X, the second connecting segment 11114 and the third connecting segment 11115 may be disposed symmetrically about the mid-section of the first wall 111.

It can be understood that, in embodiments where the first zone 1111 includes a first portion 11111 and a second portion 11112, at least one of the first connecting segment 11113, the second connecting segment 11114, and the third connecting segment 11115 may include a first portion 11111 and a second portion 11112 arranged along the first direction Z.

The second connecting segment 11114 may partially protrude from the first inner surface 11121 (not shown in FIG. 15 and FIG. 16) and/or the first outer surface 11122 (not shown in FIG. 15 and FIG. 16), the first connecting segment 11113 may partially protrude from the first inner surface 11121 and/or the first outer surface 11122, and the third connecting segment 11115 may partially protrude from the first inner surface 11121 and/or the first outer surface 11122.

In an example, in the embodiment shown in FIG. 16, both the second connecting segment 11114 and the third connecting segment 11115 are directly connected to the first connecting segment 11113, the thickness of the second connecting segment 11114 gradually decreases along a direction from the third connecting segment 11115 toward the second connecting segment 11114, and the thickness of the third connecting segment 11115 gradually decreases along a direction from the second connecting segment 11114 toward the third connecting segment 11115. A part of the second connecting segment 11114, a part of the first connecting segment 11113, and a part of the third connecting segment 11115 all protrude from the first inner surface 11121 of the second zone 1112. An inner surface of the second connecting segment 11114 connects an inner surface of the first connecting segment 11113 and the first inner surface 11121, an inner surface of the third connecting segment 11115 connects the inner surface of the first connecting segment 11113 and the first inner surface 11121, and an outer surface of the second connecting segment 11114, an outer surface of the first connecting segment 11113, and an outer surface of the third connecting segment 11115 are coplanar.

When the first wall 111 is subjected to the expansion force of the electrode assembly 2, the deformation of the first wall 111 gradually decreases from the middle to both ends along the third direction X. The first zone 1111 is divided into a plurality of segments and the thickness of the first connecting segment 11113 in the middle region is set to be larger, while the thicknesses of the second connecting segment 11114 and the third connecting segment 11115 at two ends of the first connecting segment 11113 are set to be smaller. In this way, the first zone 1111 is designed specifically according to the varying deformation amounts in different regions of the first wall 111 along the third direction X, thereby specifically enhancing the strength of different regions of the first wall 111 along the third direction X, ensuring sufficient strength in the region of the first wall 111 near the first connecting portion 51 while reducing material usage in the first zone 1111, lowering production costs.

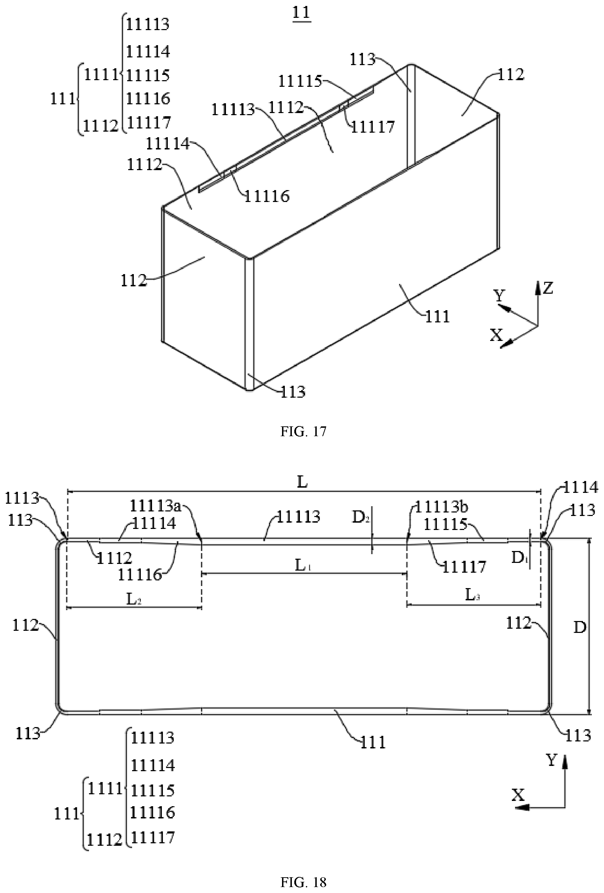

In some embodiments, referring to FIG. 17 and FIG. 18, where FIG. 17 is an isometric view of a casing 11 according to further embodiments of the present application; and FIG. 18 is a top view of the casing 11 shown in FIG. 17, the first zone 1111 further includes a first transition segment 11116, the first connecting segment 11113, the first transition segment 11116, and the second connecting segment 11114 are arranged along the third direction X, the first transition segment 11116 connects the second connecting segment 11114 and the first connecting segment 11113, and the thickness of the first transition segment 11116 increases along the direction from the second connecting segment 11114 toward the first connecting segment 11113; and/or, the first zone 1111 further includes a second transition segment 11117, the first connecting segment 11113, the second transition segment 11117, and the third connecting segment 11115 are arranged along the third direction X, the second transition segment 11117 connects the third connecting segment 11115 and the first connecting segment 11113, and the thickness of the second transition segment 11117 increases along the direction from the third connecting segment 11115 toward the first connecting segment 11113.

The first transition segment 11116 has non-uniform thickness. In an example, the thickness of the first transition segment 11116 gradually increases along the direction from the second connecting segment 11114 toward the first connecting segment 11113. The second transition segment 11117 has non-uniform thickness. In an example, the thickness of the second transition segment 11117 gradually increases along the direction from the third connecting segment 11115 toward the first connecting segment 11113.

If a first transition segment 11116 is provided between the second connecting segment 11114 and the first connecting segment 11113, and a second transition segment 11117 is disposed the third connecting segment 11115 and the first connecting segment 11113, the dimension of the first transition segment 11116 along the third direction X and the dimension of the second transition segment 11117 along the third direction X may be equal or unequal. If the dimension of the first transition segment 11116 along the third direction X is equal to the dimension of the second transition segment 11117 along the third direction X, the first transition segment 11116 and the second transition segment 11117 may be disposed symmetrically about the mid-section of the first wall 111.

It can be understood that, if a first transition segment 11116 is provided between the second connecting segment 11114 and the first connecting segment 11113, the first transition segment 11116 may partially protrude from the first inner surface 11121 (not shown in FIG. 17 and FIG. 18) and/or the first outer surface 11122 (not shown in FIG. 17 and FIG. 18) of the second zone 1112; if a second transition segment 11117 is provided between the third connecting segment 11115 and the first connecting segment 11113, the second transition segment 11117 may partially protrude from the first inner surface 11121 and/or the first outer surface 11122 of the second zone 1112.

In an example, in the embodiment shown in FIG. 18, the second connecting segment 11114 is indirectly connected to the first connecting segment 11113 through the first transition segment 11116, the third connecting segment 11115 is indirectly connected to the first connecting segment 11113 through the second transition segment 11117, the thickness of the first transition segment 11116 gradually increases along the direction from the second connecting segment 11114 toward the first connecting segment 11113, and the thickness of the second transition segment 11117 gradually increases along the direction from the third connecting segment 11115 toward the first connecting segment 11113. A part of the second connecting segment 11114, a part of the first connecting segment 11113, a part of the third connecting segment 11115, a part of the first transition segment 11116, and a part of the second transition segment 11117 all protrude from the first inner surface 11121. An inner surface of the first transition segment 11116 connects the inner surface of the first connecting segment 11113 and the inner surface of the second connecting segment 11114, an inner surface of the second transition segment 11117 connects the inner surface of the first connecting segment 11113 and an inner surface of the third connecting segment 11115, and an outer surface of the second connecting segment 11114, an outer surface of the first connecting segment 11113, an outer surface of the third connecting segment 11115, an outer surface of the first transition segment 11116, and an outer surface of the second transition segment 11117 are coplanar.

In this embodiment, if the second connecting segment 11114 and the first connecting segment 11113 are connected through the first transition segment 11116, and the thickness of the first transition segment 11116 increases along the direction from the second connecting segment 11114 toward the first connecting segment 11113, the first transition segment 11116 enables a transition between the second connecting segment 11114 and the first connecting segment 11113, reducing stress concentration. If the third connecting segment 11115 and the first connecting segment 11113 are connected through the second transition segment 11117, and the thickness of the second transition segment 11117 increases along the direction from the third connecting segment 11115 toward the first connecting segment 11113, the second transition segment 11117 enables a transition between the third connecting segment 11115 and the first connecting segment 11113, reducing stress.

In some embodiments, continuing to refer to FIG. 14, FIG. 16, and FIG. 18, the dimension of the first connecting segment 11113 along the third direction X is L₁, the dimension of the first wall 111 along the third direction X is L, where 0.2 ≤ L₁/L ≤ 0.6.

The dimension of the first connecting segment 11113 along the third direction X is the length of the first connecting segment 11113, the dimension of the first wall 111 along the third direction X is the length of the first wall 111, the dimension of the first wall 111 along the second direction Y is the thickness of the first wall 111, and the dimension of the first wall 111 along the first direction Z is the width of the first wall 111.

L₁/L may take any single point value among 0.2, 0.22, 0.25, 0.28, 0.3, 0.32, 0.35, 0.38, 0.4, 0.42, 0.45, 0.48, 0.5, 0.52, 0.55, 0.58, 0.6, or the like, or any range value between any two of these point values.

When L₁/L ≥ 0.2, a proportion of the dimension of the first connecting segment 11113 along the third direction X in the first wall 111 is increased, such that a larger range of the middle region of the first wall 111 along the third direction X is reinforced, enhancing the strength of the middle region of the first wall 111 along the third direction X. When L₁/L ≤ 0.6, the proportion of the dimension of the first connecting segment 11113 along the third direction X in the first wall 111 is reduced, reducing material usage in the first connecting segment 11113, lowering production costs. Therefore, when the ratio of the dimension of the first connecting segment 11113 along the third direction X to the dimension of the first wall 111 along the third direction X is set to 0.2 to 0.6, the first connecting segment 11113 has sufficient reinforcement capability while reducing material usage, balancing the reinforcement capability requirements and cost-effectiveness requirements of the first connecting segment 11113.

In some embodiments, continuing to refer to FIG. 14, FIG. 16, and FIG. 18, the first connecting segment 11113 has a first end 11113a and a second end 11113b opposite each other along the third direction X, the first wall 111 has a third end 1113 and a fourth end 1114 opposite each other along the third direction X, the first end 11113a is close to the third end 1113, the second end 11113b is close to the fourth end 1114, the dimension of the first wall 111 along the third direction X is L, the minimum distance between the first end 11113a and the third end 1113 along the third direction X is L₂, and the minimum distance between the second end 11113b and the fourth end 1114 along the third direction X is L₃; where L₂/L ≤ 0.3; and/or, L₃/L ≤ 0.3.

It can be understood that, along the third direction X, the first end 11113a is closer to the third end 1113 than the second end 11113b, and the second end 11113b is closer to the fourth end 1114 than the first end 11113a.

It may be that L₂ = L₃; L₂ > L_{3;} or L₂ < L₃.

L₂/L may take any single point value among 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, or the like, or any range value between any two of these point values.

L₃/L may take any single point value among 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, or the like, or any range value between any two of these point values.

If L₂/L ≤ 0.3, a proportion of the minimum distance between the first end 11113a and the third end 1113 along the third direction X in the dimension of the first wall 111 along the third direction X is reduced, such that more regions of the first wall 111 along the third direction X are reinforced, further reducing the risk of fatigue cracking in the region of the first wall 111 near the first connecting portion 51. If L₃/L ≤ 0.3, the proportion of the minimum distance between the second end 11113b and the fourth end 1114 along the third direction X in the dimension of the first wall 111 along the third direction X is reduced, such that more regions of the first wall 111 along the third direction X are reinforced, further reducing the risk of fatigue cracking in the region of the first wall 111 near the first connecting portion 51.

In some embodiments, 100 mm ≤ L ≤ 450 mm.

L may take any single point value among 100 mm, 120 mm, 150 mm, 180 mm, 200 mm, 220 mm, 250 mm, 260 mm, 280 mm, 300 mm, 310 mm, 320 mm, 350 mm, 390 mm, 400 mm, 410 mm, 420 mm, 430 mm, 440 mm, 450 mm, or any range value between any two of these point values.

In some embodiments, continuing to refer to FIG. 13 to FIG. 18, the casing 11 includes corner walls 113, and two ends of the first wall 111 along the third direction X are connected to corner walls 113; at least one end of the first zone 1111 along the third direction X is not in contact with the corner wall 113; or, both ends of the first zone 1111 along the third direction X extend to the two corner walls 113, respectively.

Along the third direction X, the first zone 1111 has two opposite ends. One end of the first zone 1111 may extend to one corner wall 113 while the other end does not extend to the other corner wall 113, or both ends of the first zone 1111 may not extend to the corner walls 113, to ensure that at least one end of the first zone 1111 along the third direction X is not in contact with the corner wall 113.

In an example, in the embodiments shown in FIG. 13 to FIG. 18, along the third direction X, one end of the first zone 1111 is not in contact with the corner wall 113 at one end of the first wall 111, and the other end of the first zone 1111 is not in contact with the corner wall 113 at the other end of the first wall 111.

If at least one end of the first zone 1111 along the third direction X is not in contact with the corner wall 113, material usage in the first zone 1111 can be reduced, lowering production costs. If two ends of the first zone 1111 along the third direction X extend to the two corner walls 113, the length of the first zone 1111 is increased, enhancing the reinforcement capability of the first zone 1111, such that more regions of the first wall 111 along the third direction X are reinforced, further reducing the risk of fatigue cracking in the region of the first wall 111 near the first connecting portion 51.

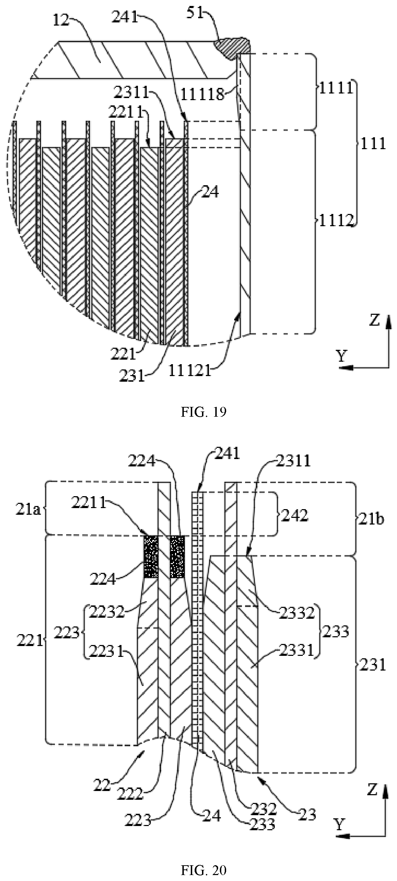

In some embodiments, referring to FIG. 19 to FIG. 21, where FIG. 19 is a partial view of a battery cell 10 according to some embodiments of the present application (with a positive electrode plate 22, a negative electrode plate 23, and a separator 24 of the electrode assembly 2 shown); FIG. 20 is a diagram showing a positional relationship among a positive electrode plate 22, a negative electrode plate 23, and a separator 24 according to some embodiments of the present application; and FIG. is a diagram showing a positional relationship among a positive electrode plate 22, a negative electrode plate 23, and a separator 24 according to other embodiments of the present application, the electrode assembly 2 further includes a separator 24, where the separator 24 is provided between the positive electrode plate 22 and the negative electrode plate 23. The positive electrode plate 22 includes a positive electrode main body region 221 and a positive electrode tab 21a protruding from the positive electrode main body region 221, and the positive electrode main body region 221 has a positive electrode active material layer 223. The negative electrode plate 23 includes a negative electrode main body region 231 and a negative electrode tab 21b protruding from the negative electrode main body region 231, and the negative electrode main body region 231 has a negative electrode active material layer 233. Along the first direction Z, the positive electrode main body region 221 has a fifth end 2211 facing the end cover 12, the negative electrode main body region 231 has a sixth end 2311 facing the end cover 12, the separator 24 has a seventh end 241 facing the end cover 12, and the seventh end 241 is closer to the end cover 12 than the fifth end 2211 and the sixth end 2311.

In the embodiments, the electrode assembly 2 may be a wound structure or a laminated structure.

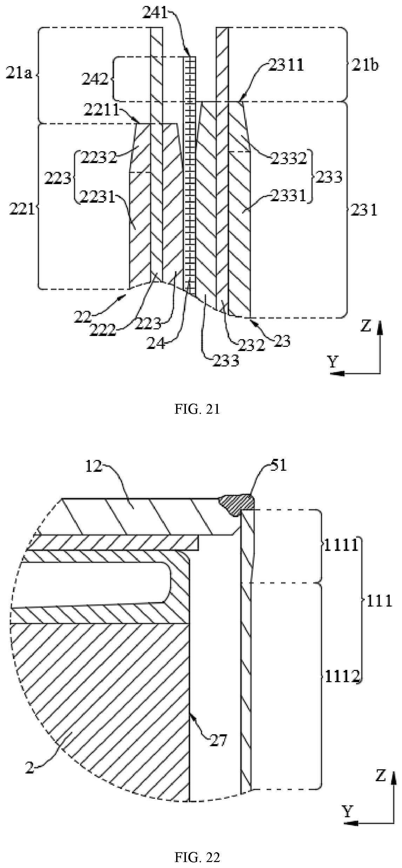

The positive electrode plate 22 may include a positive electrode current collector 222 and a positive electrode active material layer 223, with the positive electrode active material layer 223 provided on one or two surfaces of the positive electrode current collector 222 in its thickness direction. In the embodiment shown in FIG. 20, the positive electrode plate 22 further includes an insulating layer 224, both opposite surfaces of the positive electrode current collector 222 in the thickness direction are provided with the insulating layer 224, the insulating layer 224 and the positive electrode active material layer 223 are arranged along the first direction Z, the insulating layer 224 is disposed at the end of the positive electrode active material layer 223, the part of the positive electrode plate 22 corresponding to the positive electrode active material layer 223 and the insulating layer 224 as a whole is the positive electrode main body region 221, the end of the insulating layer 224 close to the end cover 12 forms the fifth end 2211 of the positive electrode main body region 221, and the part of the positive electrode current collector 222 extending beyond the insulating layer 224 forms the positive electrode tab 21a. In the embodiment shown in FIG. 21, the positive electrode plate 22 does not include an insulating layer 224, the part of the positive electrode plate 22 corresponding to the positive electrode active material layer 223 is the positive electrode main body region 221, the end of the positive electrode active material layer 223 close to the end cover 12 forms the fifth end 2211 of the positive electrode main body region 221, and the part of the positive electrode current collector 222 extending beyond the positive electrode active material layer 223 forms the positive electrode tab 21a.

The negative electrode plate 23 may include a negative electrode current collector 232 and a negative electrode active material layer 233, with the negative electrode active material layer 233 disposed on one or both surfaces of the negative electrode current collector 232 in its thickness direction. The part of the negative electrode plate 23 corresponding to the negative electrode active material layer 233 is the negative electrode main body region 231, the end of the negative electrode active material layer 233 close to the end cover 12 forms the sixth end 2311 of the negative electrode main body region 231, and the part of the negative electrode current collector 232 extending beyond the negative electrode active material layer 233 forms the negative electrode tab 21b.

The fifth end 2211 and the sixth end 2311 may be aligned. As shown in FIG. 20, the fifth end 2211 may be closer to the end cover 12 (shown in FIG. 19) than the sixth end 2311; or, as shown in FIG. 21, the sixth end 2311 may be closer to the end cover 12 (shown in FIG. 19) than the fifth end 2211.

In the embodiments, the seventh end 241 of the separator 24 is closer to the end cover 12 than the fifth end 2211 of the positive electrode main body region 221 and the sixth end 2311 of the negative electrode main body region 231, such that the separator 24 has a portion extending beyond the fifth end 2211 and the sixth end 2311, enhancing the insulation effect of the separator 24 between the positive electrode plate 22 and the negative electrode plate 23, reducing the risk of contact between the positive electrode plate 22 and the negative electrode plate 23.

In some embodiments, continuing to refer to FIG. 19 to FIG. 21, the separator 24 includes an extension region 242 extending beyond the fifth end 2211 and the sixth end 2311 along the first direction Z, and in a projection plane perpendicular to the second direction Y, an orthographic projection of the extension region 242 partially overlaps with an orthographic projection of the first zone 1111.

The extension region 242 is the part of the separator 24 that extends beyond both the fifth end 2211 of the positive electrode main body region 221 and the sixth end 2311 of the negative electrode main body region 231. It can be understood that, as shown in FIG. 20, in embodiments where the fifth end 2211 is closer to the end cover 12 than the sixth end 2311, the part of the separator 24 extending beyond the fifth end 2211 is the extension region 242; and as shown in FIG. 21, in embodiments where the sixth end 2311 is closer to the end cover 12 than the fifth end 2211, the part of the separator 24 extending beyond the sixth end 2311 is the extension region 242.

In an example, in FIG. 19 to FIG. 21, in the electrode assembly 2, the positive electrode plate 22, the negative electrode plate 23, and the separator 24 are stacked along the second direction Y in their respective parts located within the flat region 25 (not shown in FIG. 19 to FIG. 21).

In the embodiments, in a projection plane perpendicular to the second direction Y, the orthographic projection of the extension region 242 partially overlaps with the orthographic projection of the first zone 1111, which can increase the dimension of the first zone 1111 along the first direction Z, enhancing the reinforcement capability of the first zone 1111, such that more regions of the first wall 111 along the first direction Z are reinforced, further reducing the risk of fatigue cracking in the region of the first wall 111 near the first connecting portion 51.

In some embodiments, continuing to refer to FIG. 19 to FIG. 21, the second zone 1112 has a first inner surface 11121 facing the internal space of the casing 11, the first zone 1111 includes a first protruding portion 11118 protruding from the first inner surface 11121. In a projection plane perpendicular to the second direction Y, an orthographic projection of the positive electrode main body region 221 does not overlap with an orthographic projection of the first protruding portion 11118; and/or, in a projection plane perpendicular to the second direction Y, an orthographic projection of the negative electrode main body region 231 does not overlap with the orthographic projection of the first protruding portion 11118.

The first protruding portion 11118 is the part of the first zone 1111 that protrudes from the first inner surface 11121 of the second zone 1112, and the first protruding portion 11118 may be a structure with uniform thickness or non-uniform thickness. Along the first direction Z, the first protruding portion 11118 may extend to the first connecting portion 51, such that the first protruding portion 11118 is directly connected to the first connecting portion 51.

It can be understood that, in embodiments where the first zone 1111 includes a first portion 11111 and a second portion 11112 arranged along the first direction Z, a part of the first protruding portion 11118 may be located in the first portion 11111, and another part may be located in the second portion 11112. In embodiments where the first zone 1111 includes a first connecting segment 11113, a second connecting segment 11114, and a third connecting segment 11115 arranged along the third direction X, a part of the first protruding portion 11118 may be located in the first connecting segment 11113, another part of the first protruding portion 11118 may be located in the second connecting segment 11114, and yet another part of the first protruding portion 11118 may be located in the third connecting segment 11115.

In an example, in the embodiments shown in FIG. 19 to FIG. 21, in a projection plane perpendicular to the second direction Y, the orthographic projection of the positive electrode main body region 221 does not overlap with the orthographic projection of the first protruding portion 11118, and the orthographic projection of the negative electrode main body region 231 does not overlap with the orthographic projection of the first protruding portion 11118.

If, in a projection plane perpendicular to the second direction Y, the orthographic projection of the positive electrode main body region 221 does not overlap with the orthographic projection of the first protruding portion 11118, the casing 11 can provide a larger expansion space for the electrode assembly 2, reducing the risk of the electrode assembly 2 directly applying expansion force to the first protruding portion 11118, reducing the deformation of the first wall 111, and further reducing the risk of fatigue cracking in the region of the first wall 111 near the first connecting portion 51. If, in a projection plane perpendicular to the second direction Y, the orthographic projection of the negative electrode main body region 231 does not overlap with the orthographic projection of the first protruding portion 11118, the casing 11 can provide a larger expansion space for the electrode assembly 2, reducing the risk of the electrode assembly 2 directly applying expansion force to the first protruding portion 11118, reducing the deformation of the first wall 111, and further reducing the risk of fatigue cracking in the region of the first wall 111 near the first connecting portion 51.

In some embodiments, continuing to refer to FIG. 19 to FIG. 21, the negative electrode plate 23 includes a negative electrode current collector 232 and a negative electrode active material layer 233 disposed on at least one side of the negative electrode current collector 232, and the negative electrode active material layer 233 includes a negative electrode active material.

The negative electrode current collector 232 may have the negative electrode active material layer 233 disposed on only one side, that is, only one surface of the negative electrode current collector 232 in the thickness direction is provided with the negative electrode active material layer 233; or, the negative electrode current collector 232 may have the negative electrode active material layer 233 disposed on two opposite sides, that is, two opposite surfaces of the negative electrode current collector 232 in the thickness direction are provided with the negative electrode active material layer 233.

The negative electrode active material may include at least one of the following materials: artificial graphite, natural graphite, soft carbon, hard carbon, silicon-based materials, tin-based materials, lithium titanate, and the like.

In some embodiments, the negative electrode active material layer 233 includes a negative electrode main body portion 2331 and a negative electrode thinned portion 2332, the negative electrode main body portion 2331 and the negative electrode thinned portion 2332 are arranged along the first direction Z, and along the first direction Z, the negative electrode thinned portion 2332 is provided at an end of the negative electrode main body portion 2331 close to the end cover 12.

The thickness of the negative electrode main body portion 2331 is greater than the thickness of the negative electrode thinned portion 2332. The negative electrode main body portion 2331 may have the negative electrode thinned portion 2332 disposed only at the end close to the end cover 12 or at both ends along the first direction Z. The negative electrode main body portion 2331 may be a structure with uniform thickness or non-uniform thickness, and the negative electrode thinned portion 2332 may be a structure with uniform thickness or non-uniform thickness. If at least one of the negative electrode main body portion 2331 and the negative electrode thinned portion 2332 has non-uniform thickness, the maximum thickness of the negative electrode thinned portion 2332 may be less than or equal to the minimum thickness of the negative electrode main body portion 2331, to ensure that the thickness of the negative electrode main body portion 2331 is greater than the thickness of the negative electrode thinned portion 2332.

In an example, the negative electrode main body portion 2331 is a structure with uniform thickness, and the thickness of the negative electrode thinned portion 2332 decreases along the direction from the negative electrode main body portion 2331 toward the negative electrode thinned portion 2332.

In the embodiments, the negative electrode main body portion 2331 has a negative electrode thinned portion 2332 provided at the end close to the end cover 12, the electrode assembly 2 has a larger expansion gap in the region corresponding to the negative electrode thinned portion 2332, and the force applied to the first wall 111 by the region of the electrode assembly 2 corresponding to the negative electrode thinned portion 2332 after expansion is smaller, reducing the risk of fatigue cracking in the region of the first wall 111 near the first connecting portion 51.

In some embodiments, in a projection plane perpendicular to the second direction Y, an orthographic projection of the negative electrode thinned portion 2332 located at the end of the negative electrode main body portion 2331 close to the end cover 12 is spaced apart from the orthographic projection of the first zone 1111 along the first direction Z.

It can be understood that, in a projection plane perpendicular to the second direction Y, the orthographic projection of the negative electrode thinned portion 2332 located at the end of the negative electrode main body portion 2331 close to the end cover 12 does not overlap with the orthographic projection of the first zone 1111.

In the embodiments, in a projection plane perpendicular to the second direction Y, the orthographic projection of the negative electrode thinned portion 2332 located at the end of the negative electrode main body portion 2331 close to the end cover 12 is spaced apart from the orthographic projection of the first zone 1111 along the first direction Z. This can reduce the impact of the negative electrode thinned portion 2332 on the first zone 1111, reducing the risk of the electrode assembly 2 directly applying expansion force to the first zone 1111, further reducing the risk of fatigue cracking in the region of the first wall 111 near the first connecting portion 51.

In some embodiments, in a projection plane perpendicular to the second direction Y, a spacing dimension along the first direction Z between the orthographic projection of the negative electrode thinned portion 2332 located at the end of the negative electrode main body portion 2331 close to the end cover 12 and the orthographic projection of the first zone 1111 is greater than or equal to 1 mm.

In a projection plane perpendicular to the second direction Y, the spacing dimension along the first direction Z between the orthographic projection of the negative electrode thinned portion 2332 located at the end of the negative electrode main body portion 2331 close to the end cover 12 and the orthographic projection of the first zone 1111 is W₁, where W₁ ≥ 1 mm, and this spacing dimension is the minimum distance along the first direction Z between the orthographic projections of the negative electrode thinned portion 2332 and the first zone 1111 in the projection plane perpendicular to the second direction Y. W₁ may take any single point value among 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, or any range value between any two of these point values.

In the embodiments, W₁ ≥ 1 mm, so that in the projection plane perpendicular to the second direction Y, the orthographic projection of the negative electrode thinned portion 2332 is farther from the orthographic projection of the first zone 1111 along the first direction Z, further reducing the impact of the negative electrode thinned portion 2332 on the first zone 1111.

In some embodiments, a single-side coating weight of the negative electrode active material layer 233 is 90 mg/1540 mm² to 170 mg/1540 mm².

The single-side coating weight of the negative electrode active material layer 233 may take any single point value among 90 mg/1540 mm², 100 mg/1540 mm², 110 mg/1540 mm², 120 mg/1540 mm², 130 mg/1540 mm², 140 mg/1540 mm², 150 mg/1540 mm², 160 mg/1540 mm², 170 mg/1540 mm², or any range value between any two of these point values.

In measuring the single-side coating weight of the negative electrode active material layer 233, a negative electrode plate 23 with single-side coating may be selected (if it is a double-side coated negative electrode plate 23, one side of the negative electrode active material layer 233 may be wiped off first), punched into a small disc with an area of S₁, and weighed, with the weight recorded as M₁. Then, the negative electrode active material layer 233 of the weighed negative electrode plate 23 is wiped off, and the weight of the negative electrode current collector 232 is measured, and recorded as M₂. The single-side coating weight of the negative electrode active material layer 233 = (M₁ - M₂) / S₁.

The single-side coating weight of the negative electrode active material layer 233 is related to the expansion of the negative electrode active material layer 233. Setting the single-side coating weight of the negative electrode active material layer 233 within a range from 90 mg/1540 mm² to 170 mg/1540 mm² can, to some extent, balance the high energy density requirements of the battery cell 10 and the low expansion requirements of the negative electrode plate 23, reducing the impact of the expansion of the negative electrode plate 23 on the first wall 111, thereby reducing the risk of fatigue cracking in the region of the first wall 111 near the first connecting portion 51.

In some embodiments, the single-side coating weight of the negative electrode active material layer 233 is 110 mg/1540 mm² to 150 mg/1540 mm².

In the embodiments, the single-side coating weight of the negative electrode active material layer 233 may take any single point value among 110 mg/1540 mm², 115 mg/1540 mm², 120 mg/1540 mm², 125 mg/1540 mm², 130 mg/1540 mm², 135 mg/1540 mm², 140 mg/1540 mm², 145 mg/1540 mm², 150 mg/1540 mm², or any range value between any two of these point values.

In the embodiments, the single-side coating weight of the negative electrode active material layer 233 being 110 mg/1540 mm² to 150 mg/1540 mm² can further improve the energy density requirements of the battery cell 10 and further mitigate the expansion of the negative electrode plate 23.

In some embodiments, a porosity of the negative electrode plate 23 is 27% to 40%.

The porosity of the negative electrode plate 23 may take any single point value among 27%, 28%, 29%, 30%, 31%, 32%, 33%, 34%, 35%, 36%, 37%, 38%, 39%, 40%, or any range value between any two of these point values.

The porosity of the negative electrode plate 23 may be the percentage of the pore volume within the negative electrode plate 23 to the total volume of the negative electrode plate 23. In an example, when the battery cell 10 is in a 0% state of charge, a double-side coated negative electrode plate 23 is selected; the porosity of the negative electrode plate 23 is measured using a true density analyzer AccuPyc II 1340 in accordance with the national standard GB/T 24586-2009.

In the embodiments, the porosity of the negative electrode plate 23 being 27% to 40% provides space for impurities generated by side reactions in the negative electrode plate 23, mitigating the expansion of the negative electrode plate 23 and reducing the impact of the expansion of the negative electrode plate 23 on the first wall 111.

In some embodiments, the negative electrode active material includes a silicon-based material, and a mass content of silicon element in the negative electrode active material in the silicon-based material is 0.3% to 10%, optionally 1% to 6%.

The mass content of silicon element in the negative electrode active material in the silicon-based material may take any single point value among 0.3%, 1%, 2%, 3%, 4%, 5%, 6%, 7%, 8%, 9%, 10%, or any range value between any two of these point values.

In some embodiments, the silicon-based material includes at least one of a silicon-oxygen compound and a silicon-carbon composite.

In some embodiments, continuing to refer to FIG. 19 to FIG. 21, the positive electrode plate 22 includes a positive electrode current collector 222 and a positive electrode active material layer 223 disposed on at least one side of the positive electrode current collector 222, and the positive electrode active material layer 223 includes a positive electrode active material.

The positive electrode current collector 222 may have the positive electrode active material layer 223 disposed on only one side, that is, only one surface of the positive electrode current collector 222 in the thickness direction is provided with the positive electrode active material layer 223; or, the positive electrode current collector 222 may have the positive electrode active material layer 223 disposed on both opposite sides, that is, two opposite surfaces of the positive electrode current collector 222 in the thickness direction are provided with the positive electrode active material layer 223.

The positive electrode active material may include at least one of the following materials: lithium-containing phosphates, lithium transition metal oxides, and their respective modified compounds.

In some embodiments, the positive electrode active material layer 223 includes a positive electrode main body portion 2231 and a positive electrode thinned portion 2232, the positive electrode main body portion 2231 and the positive electrode thinned portion 2232 are arranged along the first direction Z, and along the first direction Z, the positive electrode thinned portion 2232 is provided at an end of the positive electrode main body portion 2231 close to the end cover 12.

The thickness of the positive electrode main body portion 2231 is greater than the thickness of the positive electrode thinned portion 2232. The positive electrode main body portion 2231 may have the positive electrode thinned portion 2232 disposed only at the end close to the end cover 12 or at both ends along the first direction Z. The positive electrode main body portion 2231 may be a structure with uniform thickness or non-uniform thickness, and the positive electrode thinned portion 2232 may be a structure with uniform thickness or non-uniform thickness. If at least one of the positive electrode main body portion 2231 and the positive electrode thinned portion 2232 has non-uniform thickness, the maximum thickness of the positive electrode thinned portion 2232 may be less than or equal to the minimum thickness of the positive electrode main body portion 2231, to ensure that the thickness of the positive electrode main body portion 2231 is greater than the thickness of the positive electrode thinned portion 2232.

In an example, the positive electrode main body portion 2231 is a structure with uniform thickness, and the thickness of the positive electrode thinned portion 2232 decreases along the direction from the positive electrode main body portion 2231 toward the positive electrode thinned portion 2232.

In the embodiments, the positive electrode main body portion 2231 has a positive electrode thinned portion 2232 provided at the end close to the end cover 12. The electrode assembly 2 has a larger expansion gap in the region corresponding to the positive electrode thinned portion 2232, and the force applied to the first wall 111 by the region of the electrode assembly 2 corresponding to the positive electrode thinned portion 2232 after expansion is smaller, reducing the risk of fatigue cracking in the region of the first wall 111 near the first connecting portion 51.

In some embodiments, in a projection plane perpendicular to the second direction Y, an orthographic projection of the positive electrode thinned portion 2232 located at the end of the positive electrode main body portion 2231 close to the end cover 12 is spaced apart from the orthographic projection of the first zone 1111 along the first direction Z.

It can be understood that, in a projection plane perpendicular to the second direction Y, the orthographic projection of the positive electrode thinned portion 2232 located at the end of the positive electrode main body portion 2231 close to the end cover 12 does not overlap with the orthographic projection of the first zone 1111.

In a projection plane perpendicular to the second direction Y, the orthographic projection of the positive electrode thinned portion 2232 located at the end of the positive electrode main body portion 2231 close to the end cover 12 is spaced apart from the orthographic projection of the first zone 1111 along the first direction Z. This can reduce the impact of the positive electrode thinned portion 2232 on the first zone 1111, reducing the risk of the electrode assembly 2 directly applying expansion force to the first zone 1111, further reducing the risk of fatigue cracking in the region of the first wall 111 near the first connecting portion 51.

In some embodiments, in a projection plane perpendicular to the second direction Y, a spacing dimension along the first direction Z between the orthographic projection of the positive electrode thinned portion 2232 located at the end of the positive electrode main body portion 2231 close to the end cover 12 and the orthographic projection of the first zone 1111 is greater than or equal to 1 mm.

In a projection plane perpendicular to the second direction Y, the spacing dimension along the first direction Z between the orthographic projection of the positive electrode thinned portion 2232 located at the end of the positive electrode main body portion 2231 close to the end cover 12 and the orthographic projection of the first zone 1111 is W₂, where W₂ ≥ 1 mm, and this spacing dimension is the minimum distance along the first direction Z between the orthographic projections of the positive electrode thinned portion 2232 and the first zone 1111 in the projection plane perpendicular to the second direction Y. It may be that W₁ = W₂; or W₁ ≤ W₂; or W₁ ≥ W₂. W₂ may take any single point value among 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, or any range value between any two of these point values.

In the embodiments, W₂ ≥ 1 mm, so that in the projection plane perpendicular to the second direction Y, the orthographic projection of the positive electrode thinned portion 2232 is farther from the orthographic projection of the first zone 1111 along the first direction Z, further reducing the impact of the positive electrode thinned portion 2232 on the first zone 1111.

In some embodiments, a single-side coating weight of the positive electrode active material layer 223 is 200 mg/1540 mm² to 370 mg/1540/mm².

The single-side coating weight of the positive electrode active material layer 223 may take any single point value among 200 mg/1540 mm², 210 mg/1540 mm², 220 mg/1540 mm², 230 mg/1540 mm², 240 mg/1540 mm², 250 mg/1540 mm², 260 mg/1540 mm², 270 mg/1540 mm², 280 mg/1540 mm², 290 mg/1540 mm², 300 mg/1540 mm², 310 mg/1540 mm², 320 mg/1540 mm², 330 mg/1540 mm², 340 mg/1540 mm², 350 mg/1540 mm², 360 mg/1540 mm², 370 mg/1540 mm², or any range value between any two of these point values.

In measuring the single-side coating weight of the positive electrode active material layer 223, a positive electrode plate 22 with single-side coating may be selected (if it is a double-side coated positive electrode plate 22, one side of the positive electrode active material layer 223 may be wiped off first), punched into a small disc with an area of S₂, and weighed, with the weight recorded as M₃. Then, the positive electrode active material layer 223 of the weighed positive electrode plate 22 is wiped off, and the weight of the positive electrode current collector 222 is measured, recorded as M₄. The single-side coating weight of the positive electrode active material layer 223 = (M₃ - M₄) / S₂.

The single-side coating weight of the positive electrode active material layer 223 is related to the expansion of the positive electrode active material layer 223. Setting the single-side coating weight of the positive electrode active material layer 223 within a range from 200 mg/1540 mm² to 370 mg/1540/mm² can, to some extent, balance the high energy density requirements of the battery cell 10 and the low expansion requirements of the positive electrode plate 22, reducing the impact of the expansion of the positive electrode plate 22 on the first wall 111, thereby reducing the risk of fatigue cracking in the region of the first wall 111 near the first connecting portion 51.

In some embodiments, the single-side coating weight of the positive electrode active material layer 223 is 240 mg/1540 mm² to 330 mg/1540 mm².

The single-side coating weight of the positive electrode active material layer 223 may take any single point value among 240 mg/1540 mm², 245 mg/1540 mm², 250 mg/1540 mm², 255 mg/1540 mm², 260 mg/1540 mm², 265 mg/1540 mm², 270 mg/1540 mm², 275 mg/1540 mm², 280 mg/1540 mm², 285 mg/1540 mm², 290 mg/1540 mm², 295 mg/1540 mm², 300 mg/1540 mm², 305 mg/1540 mm², 310 mg/1540 mm², 315 mg/1540 mm², 320 mg/1540 mm², 325 mg/1540 mm², 330 mg/1540 mm², or any range value between any two of these point values.

In the embodiments, the single-side coating weight of the positive electrode active material layer 223 being 240 mg/1540 mm² to 330 mg/1540 mm² can further improve the energy density requirements of the battery cell 10 and further mitigate the expansion of the positive electrode plate 22.

In some embodiments, the positive electrode active material is a lithium-containing phosphate.

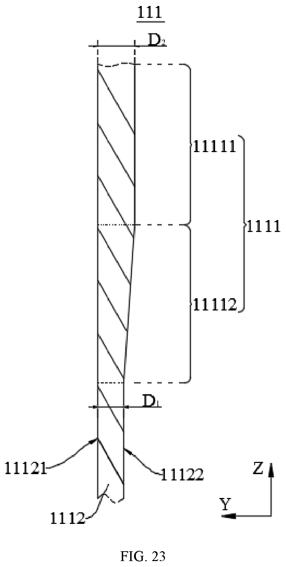

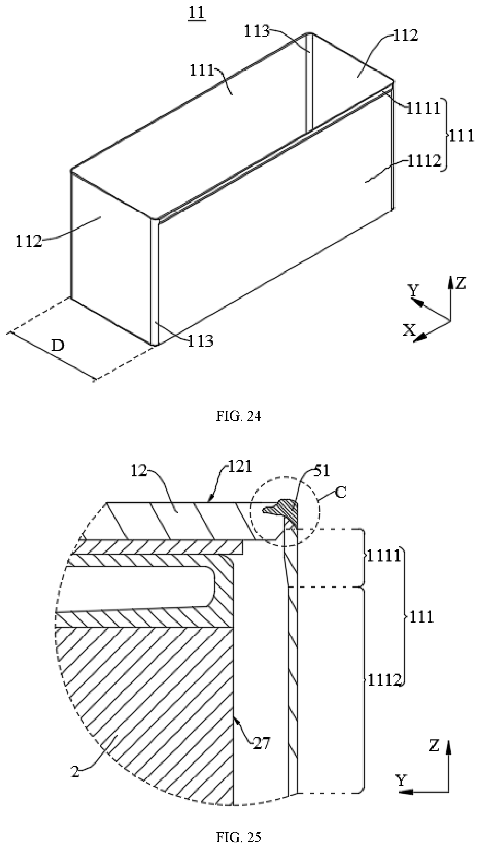

In some embodiments, referring to FIG. 22 to FIG. 24, where FIG. 22 is a partial view of a battery cell 10 according to some embodiments of the present application (with the first wall 111 shown); FIG. 23 is a partial view of the first wall 111 shown in FIG. 22; and FIG. 24 is an isometric view of the casing 11 shown in FIG. 22, the material of the casing 11 includes steel. The maximum thickness of the second zone 1112 is D₁, and the dimension of the casing 11 along the second direction Y is D, where 0.001 ≤ D₁/D ≤ 0.012.

The thickness at the thickest position of the second zone 1112 is the maximum thickness of the second zone 1112. In an example, the second zone 1112 is a structure with uniform thickness, and the thickness at any position of the second zone 1112 can be regarded as the maximum thickness of the second zone 1112.

In the embodiments, the first zone 1111 may partially protrude from the first inner surface 11121 and/or the first outer surface 11122. In an example, in the embodiments shown in FIG. 22 to FIG. 24, a part of the first zone 1111 protrudes from the first outer surface 11122, and an inner surface of the first zone 1111 is coplanar with the first inner surface 11121.

The maximum distance between the first outer surfaces 11122 of the second zones 1112 of the two first walls 111 disposed opposite each other in the casing 11 is the dimension of the casing 11 along the second direction Y. It can be understood that, when measuring the dimension of the casing 11 along the second direction Y, the reference is the first outer surface 11122 of the second zone 1112. In an example, the first outer surfaces 11122 of the second zones 1112 of the two first walls 111 disposed opposite each other are parallel.

For a casing 11 made of steel, D₁/D may take any single point value among 0.001, 0.002, 0.003, 0.004, 0.005, 0.006, 0.007, 0.008, 0.009, 0.01, 0.011, 0.012, or any range value between any two of these point values.

For a casing 11 made of steel, when D₁/D ≥ 0.001, the thickness proportion of the second zone 1112 in the casing 11 is increased, such that the second zone 1112 has sufficient strength to meet the strength requirements of the casing 11; and when D₁/D ≤ 0.012, the thickness proportion of the second zone 1112 in the casing 11 is reduced, and given a fixed volume of the casing 11, the internal space of the casing 11 can be increased, thereby providing more space for the electrode assembly 2 to meet the volumetric energy density requirements of the battery cell 10.

For a casing 11 made of steel, to meet the volumetric energy density requirements of the battery cell 10, it is necessary to control D₁/D below 0.012. If the entire thickness of the first wall 111 uniformly adopts the thickness of the second zone 1112, the first wall 111 may become more susceptible to deformation when subjected to the expansion force of the electrode assembly 2. Prolonged exposure to such forces may induce fatigue cracking in the region of the first wall 111 near the first connecting portion 51. Therefore, a thicker first zone 1111 is provided in the first wall 111 to enhance the strength of the region of the first wall 111 near the first connecting portion 51, reducing the risk of fatigue cracking.

In some embodiments, the material of the casing 11 includes steel. The maximum thickness of the second zone 1112 is D₁, where 0.08 mm ≤ D₁ ≤ 0.35 mm; and/or, the maximum thickness of the first zone 1111 is D₂, where 0.1 mm ≤ D₂ ≤ 0.6 mm.

The thickness at the thickest position of the second zone 1112 is the maximum thickness of the second zone 1112. The thickness at the thickest position of the first zone 1111 is the maximum thickness of the first zone 1111. It can be understood that the maximum thickness of the second zone 1112 is less than the maximum thickness of the first zone 1111, that is, D₁ < D₂.

For a casing 11 made of steel, D₁ may take any single point value among 0.08 mm, 0.1 mm, 0.12 mm, 0.15 mm, 0.18 mm, 0.2 mm, 0.22 mm, 0.25 mm, 0.28 mm, 0.3 mm, 0.32 mm, 0.35 mm, or any range value between any two of these point values; D₂ may take any single point value among 0.1 mm, 0.15 mm, 0.2 mm, 0.25 mm, 0.3 mm, 0.35 mm, 0.4 mm, 0.45 mm, 0.5 mm, 0.55 mm, 0.6 mm, or any range value between any two of these point values.

For a casing 11 made of steel, setting the maximum thickness of the second zone 1112 to 0.08 mm to 0.35 mm can meet both the strength requirements of the second zone 1112 and the volumetric energy density requirements of the battery cell 10. Setting the maximum thickness of the first zone 1111 to 0.1 mm to 0.6 mm ensures that the first zone 1111 has sufficient strength to enhance the strength of the region of the first wall 111 near the first connecting portion 51.

In some embodiments, the material of the casing 11 includes aluminum alloy. The maximum thickness of the second zone 1112 is D₁, and the dimension of the casing 11 along the second direction Y is D, where 0.005 ≤ D₁/D ≤ 0.065.

For a casing 11 made of aluminum alloy, D₁/D may take any single point value among 0.005, 0.01, 0.015, 0.02, 0.025, 0.03, 0.035, 0.04, 0.045, 0.05, 0.055, 0.06, 0.65, or any range value between any two of these point values.

For a casing 11 made of aluminum alloy, when D₁/D ≥ 0.005, the thickness proportion of the second zone 1112 in the casing 11 is increased, such that the second zone 1112 has sufficient strength to meet the strength requirements of the casing 11; and when D₁/D ≤ 0.065, the thickness proportion of the second zone 1112 in the casing 11 is reduced, and given a fixed volume of the casing 11, the internal space of the casing 11 can be increased, thereby providing more space for the electrode assembly 2 to meet the volumetric energy density requirements of the battery cell 10.

For a casing 11 made of aluminum alloy, to meet the volumetric energy density requirements of the battery cell 10, it is necessary to control D₁/D below 0.065. If the entire thickness of the first wall 111 uniformly adopts the thickness of the second zone 1112, the first wall 111 may become more susceptible to deformation when subjected to the expansion force of the electrode assembly 2. Prolonged exposure to such forces may induce fatigue cracking in the region of the first wall 111 near the first connecting portion 51. Therefore, a thicker first zone 1111 is provided in the first wall 111 to enhance the strength of the region of the first wall 111 near the first connecting portion 51, reducing the risk of fatigue cracking.

In some embodiments, the material of the casing 11 includes aluminum alloy. The maximum thickness of the second zone 1112 is D₁, where 0.4 mm ≤ D₁ ≤ 0.8 mm; and/or, the maximum thickness of the first zone 1111 is D₂, where 0.5 mm ≤ D₂ ≤ 1.5 mm.

For a casing 11 made of aluminum alloy, D₁ may take any single point value among 0.4 mm, 0.42 mm, 0.45 mm, 0.48 mm, 0.5 mm, 0.52 mm, 0.55 mm, 0.58 mm, 0.6 mm, 0.62 mm, 0.65 mm, 0.68 mm, 0.7 mm, 0.72 mm, 0.75 mm, 0.78 mm, 0.8 mm, or any range value between any two of these point values; D₂ may take any single point value among 0.5 mm, 0.6 mm, 0.7 mm, 0.8 mm, 0.9 mm, 1 mm, 1.1 mm, 1.2 mm, 1.3 mm, 1.4 mm, 1.5 mm, or any range value between any two of these point values.

For a casing 11 made of aluminum alloy, setting the maximum thickness of the second zone 1112 to 0.4 mm to 0.8 mm can meet both the strength requirements of the second zone 1112 and the volumetric energy density requirements of the battery cell 10. Setting the maximum thickness of the first zone 1111 to 0.5 mm to 1.5 mm ensures that the first zone 1111 has sufficient strength to enhance the strength of the region of the first wall 111 near the first connecting portion 51.

In some embodiments, the aluminum alloy includes the following components in mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This aluminum alloy has good processing and forming properties, facilitating the formation of the casing 11.

In some embodiments, the aluminum alloy includes the following components in mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other individual element components ≤ 0.05%, and total other elements ≤ 0.15%. This aluminum alloy has good processing and forming properties and corrosion resistance.

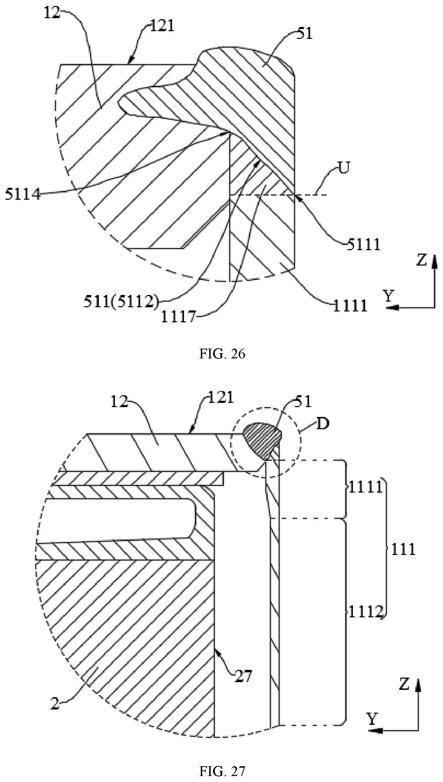

In some embodiments, referring to FIG. 25 and FIG. 26, where FIG. 25 is a partial view of a battery cell 10 according to other embodiments of the present application (with the first wall 111 shown), and FIG. 26 is a partial enlarged view at region C in FIG. 25, the first zone 1111 is directly connected to the first connecting portion 51.

The first zone 1111 and the first connecting portion 51 may be directly connected through point contact, line contact, or surface contact.

In the embodiments, the first zone 1111 is directly connected to the first connecting portion 51, such that the first zone 1111 is closer to the first connecting portion 51 along the first direction Z, and the first zone 1111 is located near the first connecting portion 51, further reducing the risk of fatigue cracking in the region of the first wall 111 near the first connecting portion 51 due to the expansion of the electrode assembly 2.

In some embodiments, the first wall 111 further includes a first transition region 1117, the first transition region 1117 is connected to an end of the first zone 1111 away from the second zone 1112 along the first direction Z, the first transition region 1117 is connected to the first connecting portion 51, a connection position between the first transition region 1117 and the first connecting portion 51 forms a first connection interface 511, the first connection interface 511 has a first position 5111 closest to the first zone 1111 along the first direction Z, and the first position 5111 is located at an end of the first zone 1111 away from the second zone 1112 along the first direction Z.

The first transition region 1117 may be the part of the first wall 111 connecting the first connecting portion 51 and the first zone 1111. The first transition region 1117 may be a structure with uniform thickness or non-uniform thickness. The thickness of the first transition region 1117 may be less than the thickness of the first zone 1111. In an example, in the embodiments shown in FIG. 25 and FIG. 26, the thickness of the first transition region 1117 gradually decreases along the direction from the second zone 1112 toward the first zone 1111.

The first connection interface 511 is formed at the connection position between the first transition region 1117 and the first connecting portion 51, and the first transition region 1117 and the first connecting portion 51 are separated by the first connection interface 511. The first connection interface 511 may be a plane or a curved surface.

The first zone 1111 and the first transition region 1117 are separated by a first dividing interface U. The first dividing interface U is a virtual plane passing through the first position 5111 and perpendicular to the first direction Z. The first transition region 1117 and the first connecting portion 51 are located above the first dividing interface U, and the first zone 1111 is located below the first dividing interface U.

In the embodiments, the first transition region 1117 is connected to the first connecting portion 51 to form the first connection interface 511, such that the first transition region 1117 and the first connecting portion 51 have a sufficiently large contact area, improving the firmness of the first wall 111 after welding to the end cover 12.

In some embodiments, at least a part of the first connection interface 511 extends obliquely relative to the second direction Y.

The first connection interface 511 may extend obliquely relative to the second direction Y in its entirety or may partially extend obliquely relative to the second direction Y.

It can be understood that the extending direction of the part of the first connection interface 511 that extends obliquely relative to the second direction Y is not parallel to the second direction Y.

After the end cover 12 and the first wall 111 are welded, the first connecting portion 51 contracts as it solidifies, generating tensile stress on the first transition region 1117. When the first wall 111 is subjected to the expansion force of the electrode assembly 2, the first wall 111 deforms, and the first transition region 1117 generates tensile stress on the first connecting portion 51. Since at least a part of the first connection interface 511 extends obliquely relative to the second direction Y, in the vicinity of the part of the first connection interface 511 that extends obliquely relative to the second direction Y, due to the deformation of the first wall 111 on the first connecting portion 51, the tensile stress generated by the first connecting portion 51 due to contraction on the first transition region 1117 is not aligned with the tensile stress generated by the first transition region 1117, reducing the risk of fatigue cracking in the region of the first transition region 1117 near the first connection interface 511.

In some embodiments, continuing to refer to FIG. 26, the first connection interface 511 includes a first interface 5112, the first interface 5112 extends obliquely from the first position 5111 in a direction toward the end cover 12, and along the second direction Y, at least a part of the first transition region 1117 is located between the first interface 5112 and the end cover 12.

It can be understood that the first interface 5112 extends obliquely relative to the second direction Y. The first interface 5112 may be a plane or a curved surface.

The first position 5111 is the lowest position of the first interface 5112 (the position closest to the first zone 1111), and the first interface 5112 extends obliquely from the first position 5111 in a direction toward the end cover 12, that is, the first interface 5112 extends obliquely upward from the first position 5111 in a direction toward the end cover 12.

Along the second direction Y, the first transition region 1117 may be entirely located between the first interface 5112 and the end cover 12 or may be partially located between the first interface 5112 and the end cover 12.

In the embodiments, along the second direction Y, at least a part of the first transition region 1117 is located between the first interface 5112 and the end cover 12, such that the first connecting portion 51 functions to protect the first transition region 1117. When the first wall 111 is subjected to the expansion force of the electrode assembly 2, the deformation of the first transition region 1117 during stress is blocked by the first connecting portion 51, reducing the risk of fatigue cracking in the region of the first transition region 1117 near the first interface 5112.

In some embodiments, continuing to refer to FIG. 26, the first interface 5112 is connected to an outer surface of the first zone 1111 at the first position 5111.

In an example, the first interface 5112 intersects the outer surface of the first zone 1111 at a first straight line. The first straight line extends along the third direction X, and the position of the first straight line is defined as the first position 5111. The first interface 5112 is connected to the inner surface of the first transition region 1117 at a third position 5114, and along the first direction Z, the third position 5114 is farther from the first zone 1111 than the first position 5111. The first transition region 1117 is substantially triangular.

In the embodiments, the first interface 5112 is connected to the outer surface of the first zone 1111 at the first position 5111, such that the first zone 1111 is directly connected to the first connecting portion 51, and the first zone 1111 is closer to the first connecting portion 51 along the first direction Z, further reducing the risk of fatigue cracking in the region of the first wall 111 near the first connecting portion 51 due to the expansion of the electrode assembly 2.

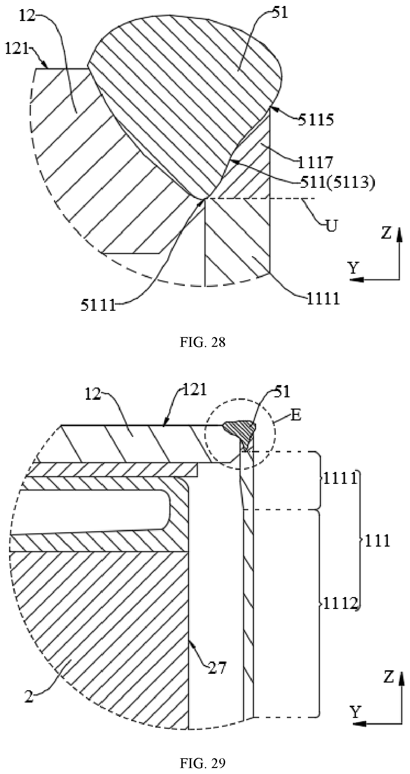

In some embodiments, referring to FIG. 27 and FIG. 28, where FIG. 27 is a partial view of a battery cell 10 according to further embodiments of the present application (with the first wall 111 shown); and FIG. 28 is a partial enlarged view at region D in FIG. 27, the first connection interface 511 includes a second interface 5113, the second interface 5113 extends obliquely from the first position 5111 in a direction away from the end cover 12, and along the second direction Y, at least a part of the first transition region 1117 is located on the side of the second interface 5113 facing away from the end cover 12.

It can be understood that the second interface 5113 extends obliquely relative to the second direction Y. The second interface 5113 may be a plane or a curved surface. Along the second direction Y, at least a part of the first connecting portion 51 is located between the second interface 5113 and the end cover 12.

The first position 5111 is the lowest position of the second interface 5113 (the position closest to the first zone 1111), and the second interface 5113 extends obliquely from the first position 5111 in a direction away from the end cover 12, that is, the second interface 5113 extends obliquely upward from the first position 5111 in a direction away from the end cover 12.

Along the second direction Y, the first transition region 1117 may be entirely located on the side of the second interface 5113 facing away from the end cover 12 or may be partially located on the side of the second interface 5113 facing away from the end cover 12.

In the embodiments, along the second direction Y, at least a part of the first transition region 1117 is located on the side of the second interface 5113 facing away from the end cover 12, such that the first transition region 1117 functions to restrict the first connecting portion 51, reducing the risk of detachment of the first connecting portion 51.

In some embodiments, continuing to refer to FIG. 28, the second interface 5113 is connected to the inner surface of the first zone 1111 at the first position 5111.

In an example, the second interface 5113 intersects the inner surface of the first zone 1111 at a first straight line. The first straight line extends along the third direction X, and the position of the first straight line is defined as the first position 5111. The second interface 5113 is connected to the outer surface of the first transition region 1117 at a fourth position 5115, and along the first direction Z, the fourth position 5115 is farther from the first zone 1111 than the first position 5111. The first transition region 1117 is substantially triangular.

In the embodiments, the second interface 5113 is connected to the inner surface of the first zone 1111 at the first position 5111, such that the first zone 1111 is directly connected to the first connecting portion 51, and the first zone 1111 is closer to the first connecting portion 51 along the first direction Z, further reducing the risk of fatigue cracking in the region of the first wall 111 near the first connecting portion 51 due to the expansion of the electrode assembly 2.

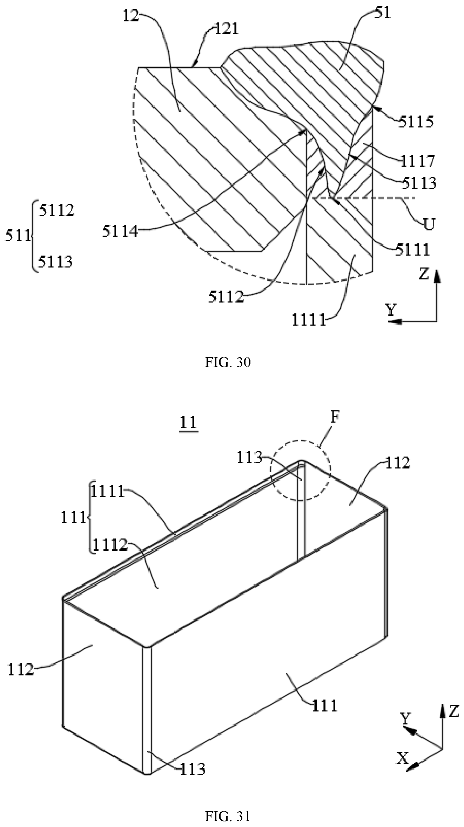

In some embodiments, referring to FIG. 29 and FIG. 30, where FIG. 29 is a partial view of a battery cell 10 according to still further embodiments of the present application (with the first wall 111 shown); and FIG. 30 is a partial enlarged view at region E in FIG. 29, the first connection interface 511 includes a first interface 5112 and a second interface 5113, the first interface 5112 extends obliquely from the first position 5111 in a direction toward the end cover 12, the second interface 5113 extends obliquely from the first position 5111 in a direction away from the end cover 12, and along the second direction Y, a part of the first transition region 1117 is located between the first interface 5112 and the end cover 12, and another part of the first transition region 1117 is located on the side of the second interface 5113 facing away from the end cover 12.

In an example, the first interface 5112 is connected to the inner surface of the first transition region 1117 at a third position 5114, and the second interface 5113 is connected to the outer surface of the first transition region 1117 at a fourth position 5115.

In some embodiments, the Vickers hardness of the first transition region 1117 is less than that of the second zone 1112; and/or, the Vickers hardness of the first transition region 1117 is less than that of the first connecting portion 51.

In an example, the Vickers hardness of the second zone 1112 is less than that of the first connecting portion 51.

If the Vickers hardness of the first transition region 1117 is less than that of the second zone 1112, the first transition region 1117 with lower Vickers hardness is connected to the first connecting portion 51, which can mitigate the rigid pulling between the first wall 111 and the first connecting portion 51 when the first wall 111 deforms, reducing the risk of separation between the first wall 111 and the first connecting portion 51. If the Vickers hardness of the first transition region 1117 is less than that of the first connecting portion 51, the first transition region 1117 is more prone to deformation compared to the first connecting portion 51, which can mitigate the rigid pulling between the first wall 111 and the first connecting portion 51 when the first wall 111 deforms, reducing the risk of separation between the first wall 111 and the first connecting portion 51.

In some embodiments, continuing to refer to FIG. 25 to FIG. 30, along the first direction Z, the first connection interface 511 is closer to the second zone 1112 than an outer surface 121 of the end cover.

Along the first direction Z, the surface of the end cover 12 facing away from the electrode assembly 2 is the outer surface 121 of the end cover.

In the embodiments shown in FIG. 25 and FIG. 26, along the first direction Z, both the third position 5114 and the first position 5111 are closer to the second zone 1112 than the outer surface 121 of the end cover.

In the embodiments shown in FIG. 27 and FIG. 28, along the first direction Z, both the fourth position 5115 and the first position 5111 are closer to the second zone 1112 than the outer surface 121 of the end cover.

In the embodiments shown in FIG. 29 and FIG. 30, along the first direction Z, the third position 5114, the fourth position 5115, and the first position 5111 are all closer to the second zone 1112 than the outer surface 121 of the end cover.

In the embodiments, the first connection interface 511 is closer to the second zone 1112 than the outer surface 121 of the end cover along the first direction Z, such that the first connecting portion 51 can sink deeper into the first wall 111, effectively improving the connection strength between the first wall 111 and the end cover 12.

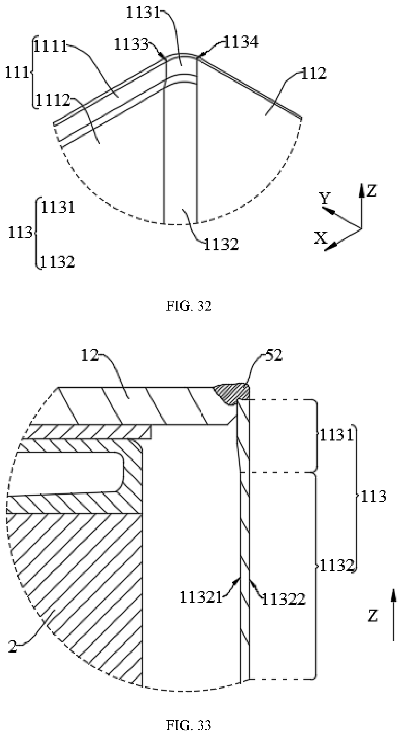

In some embodiments, referring to FIG. 31 and FIG. 32, where FIG. 31 is an isometric view of a casing 11 according to still further embodiments of the present application; and FIG. 32 is a partial enlarged view at region F in FIG. 31, the casing 11 further includes a second wall 112 and a corner wall 113, the first wall 111, the corner wall 113, and the second wall 112 are arranged along a circumferential direction of the opening, and the corner wall 113 connects the first wall 111 and the second wall 112.

The second wall 112 may be welded to the end cover 12 to form a third connecting portion 5, and the first connecting portion 51 and the third connecting portion 5 are both parts of the connecting portion 5. The second wall 112 may be a structure with uniform thickness or non-uniform thickness.

In the embodiments shown in FIG. 31 and FIG. 32, the second wall 112 is a structure with uniform thickness. In other embodiments, the second wall 112 may also be a structure with non-uniform thickness, and the structure of the second wall 112 may be the same as that of the first wall 111. For example, the second wall 112 includes a fifth zone and a sixth zone arranged along the first direction Z, the thickness of the fifth zone is greater than the thickness of the sixth zone, and the fifth zone is located between the third connecting portion 5 and the sixth zone, which can reduce the risk of fatigue cracking in the region of the second wall 112 near the third connecting portion 5. The structure of the fifth zone may be the same as that of the first zone 1111, and the structure of the sixth zone may be the same as that of the second zone 1112.

The first wall 111 and the second wall 112 in the casing 11 are indirectly connected through the corner wall 113, and a sum of the number of first walls 111 and the number of second walls 112 equals the number of corner walls 113.

In an example, the first wall 111, the second wall 112, and the corner wall 113 are integrally formed. The cross-section of the outer surface and/or inner surface of the corner wall 113 may be arc-shaped, and this cross-section is perpendicular to the first direction Z.

In the embodiments, the first wall 111 is connected to the second wall 112 through the corner wall 113, which allows the first wall 111 to transition to the second wall 112 via the corner wall 113, effectively reducing the risk of stress concentration at the corner position of the casing 11.

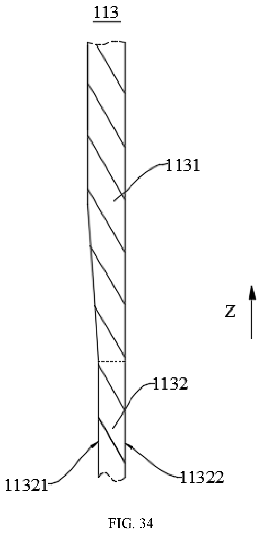

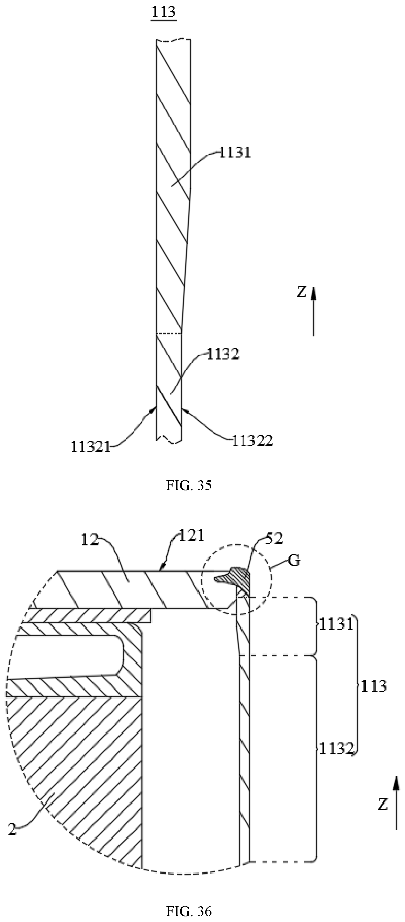

In some embodiments, referring to FIG. 33 to FIG. 35, where FIG. 33 is a partial view of a battery cell 10 according to some embodiments of the present application (with the corner wall 113 shown); FIG. 34 is a schematic structural diagram of a corner wall 113 according to some embodiments of the present application; and FIG. 35 is a schematic structural diagram of a corner wall 113 according to other embodiments of the present application, the corner wall 113 is welded to the end cover 12 to form a second connecting portion 52. The corner wall 113 includes a third zone 1131 and a fourth zone 1132 arranged along the first direction Z, the thickness of the third zone 1131 is greater than the thickness of the fourth zone 1132, and the third zone 1131 is located between the fourth zone 1132 and the second connecting portion 52.

The third zone 1131 may be a thickened region of the corner wall 113, the third zone 1131 is thicker than the fourth zone 1132, and the fourth zone 1132 may be the part of the corner wall 113 located on the side of the third zone 1131 away from the second connecting portion 52 along the first direction Z. The third zone 1131 may be directly or indirectly connected to the second connecting portion 52; the third zone 1131 may be directly or indirectly connected to the fourth zone 1132. The third zone 1131 may be a structure with uniform thickness or non-uniform thickness; the fourth zone 1132 may be a structure with uniform thickness or non-uniform thickness. If at least one of the third zone 1131 and the fourth zone 1132 has non-uniform thickness, the maximum thickness of the fourth zone 1132 may be less than or equal to the minimum thickness of the fourth zone 1132, to ensure that the thickness of the third zone 1131 is greater than the thickness of the fourth zone 1132.

The fourth zone 1132 has a second inner surface 11321 facing the internal space of the casing 11 and a second outer surface 11322 facing away from the internal space of the casing 11, and the third zone 1131 may partially protrude from the second inner surface 11321 and/or the second outer surface 11322. In an example, in the embodiments shown in FIG. 33 and FIG. 34, a part of the third zone 1131 protrudes from the second inner surface 11321, and an outer surface of the third zone 1131 is coplanar with the second outer surface 11322; and in the embodiment shown in FIG. 35, a part of the third zone 1131 protrudes from the second outer surface 11322, and an inner surface of the third zone 1131 is coplanar with the second inner surface 11321.

The second connecting portion 52 may correspond one-to-one with the corner wall 113, and the second connecting portion 52 is the part with weld marks formed after welding the end cover 12 and the corner wall 113, which may be the part where the end cover 12 and the corner wall 113 are fused together by welding. A part of the second connecting portion 52 is formed on the end cover 12, and another part of the second connecting portion 52 is formed on the corner wall 113. The corner wall 113 and the end cover 12 may form the second connecting portion 52 by seam welding or penetration welding. The second connecting portion 52 and the first connecting portion 51 are both parts of the connecting portion 5.

The thickness of the third zone 1131 is greater than the thickness of the fourth zone 1132, and the third zone 1131 is located between the second connecting portion 52 and the fourth zone 1132, such that the thicker third zone 1131 is closer to the second connecting portion 52 than the fourth zone 1132, and the third zone 1131 reinforces the region of the corner wall 113 near the second connecting portion 52, reducing the risk of fatigue cracking in the region of the corner wall 113 near the second connecting portion 52, thereby improving the service life of the battery cell 10.

In some embodiments, continuing to refer to FIG. 32, the third zone 1131 is directly connected to the first zone 1111.

In an example, the third zone 1131 and the first zone 1111 are integrally formed, and both ends of the first zone 1111 along the third direction X are connected to third zones 1131.

In embodiments where the second wall 112 includes a fifth zone and a sixth zone, the third zone 1131 may connect the first zone 1111 and the fifth zone, and the fourth zone 1132 may connect the second zone 1112 and the sixth zone.

The third zone 1131 is directly connected to the first zone 1111, such that the first zone 1111 and the third zone 1131 are integrated into a single unit, where the third zone 1131 and the first zone 1111 mutually enhance each other, strengthening the reinforcement effect of the first zone 1111 on the first wall 111 and the reinforcement effect of the second zone 1112 on the corner wall 113.

In some embodiments, continuing to refer to FIG. 32, along the circumferential direction of the opening, the corner wall 113 has a first connecting end 1133 and a second connecting end 1134, the first wall 111 is connected to the first connecting end 1133, the second wall 112 is connected to the second connecting end 1134, and the thickness of the third zone 1131 decreases along a direction from the first connecting end 1133 toward the second connecting end 1134.

In an example, the thickness of the third zone 1131 gradually decreases along the direction from the first connecting end 1133 toward the second connecting end 1134, the second wall 112 is a structure with uniform thickness, the inner surface of the third zone 1131 connects the inner surface of the first zone 1111 and the inner surface of the second wall 112, and the outer surface of the third zone 1131 connects an outer surface of the first zone 1111 and an outer surface of the second wall 112.

When the first wall 111 is subjected to the expansion force of the electrode assembly 2 in the second direction Y, the deformation of the first wall 111 may cause the corner wall 113 to deform. Along the circumferential direction of the opening, the corner wall 113 experiences progressively greater influence from the first wall 111 as proximity to the first wall 111 decreases, resulting in correspondingly larger deformation in regions of the corner wall 113 closer to the first wall 111. The thickness of the third zone 1131 decreases along the direction from the first connecting end 1133 toward the second connecting end 1134, such that the region of the third zone 1131 closer to the first wall 111 along the circumferential direction of the opening has greater strength, thereby reducing the impact of the deformation of the first wall 111 on the corner wall 113, ensuring sufficient strength in the region of the corner wall 113 near the second connecting portion 52 while reducing material usage in the third zone 1131, lowering production costs.

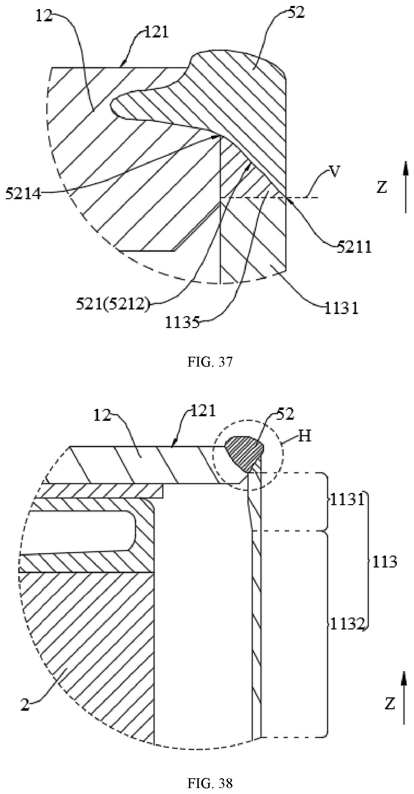

In some embodiments, referring to FIG. 36 and FIG. 37, where FIG. 36 is a partial view of a battery cell 10 according to other embodiments of the present application (with the corner wall 113 shown); and FIG. 37 is a partial enlarged view at region G in FIG. 36. The third zone 1131 is directly connected to the second connecting portion 52.

The third zone 1131 and the second connecting portion 52 may be directly connected through point contact, line contact, or surface contact.

In the embodiments, the third zone 1131 is directly connected to the second connecting portion 52, such that the third zone 1131 is closer to the second connecting portion 52 along the first direction Z, and the third zone 1131 is located near the second connecting portion 52, further reducing the risk of fatigue cracking in the region of the corner wall 113 near the second connecting portion 52.

In some embodiments, the corner wall 113 further includes a second transition region 1135, the second transition region 1135 is connected to an end of the third zone 1131 away from the fourth zone 1132 along the first direction Z, the second transition region 1135 is connected to the second connecting portion 52, and a connection position between the second transition region 1135 and the second connecting portion 52 forms a second connection interface 521, where the second connection interface 521 has a second position 5211 closest to the third zone 1131 along the first direction Z, and the second position 5211 is located at an end of the third zone 1131 away from the fourth zone 1132 along the first direction Z.

The second transition region 1135 may be the part of the corner wall 113 connecting the second connecting portion 52 and the third zone 1131. The second transition region 1135 may be a structure with uniform thickness or non-uniform thickness. The thickness of the second transition region 1135 may be less than the thickness of the third zone 1131. In an example, in the embodiments shown in FIG. 36 and FIG. 37, the thickness of the second transition region 1135 gradually decreases along the direction from the fourth zone 1132 toward the third zone 1131.

The second connection interface 521 is formed at the connection position between the second transition region 1135 and the second connecting portion 52, and the second transition region 1135 and the second connecting portion 52 are separated by the second connection interface 521. The second connection interface 521 may be a plane or a curved surface.

The third zone 1131 and the second transition region 1135 are separated by a second dividing interface V. The second dividing interface V is a virtual plane passing through the second position 5211 and perpendicular to the first direction Z. The second transition region 1135 and the second connecting portion 52 are located above the second dividing interface V, and the third zone 1131 is located below the second dividing interface V.

In the embodiments, the second transition region 1135 is connected to the second connecting portion 52 to form the second connection interface 521, such that the second transition region 1135 and the second connecting portion 52 have a sufficiently large contact area, improving the firmness of the corner wall 113 after welding to the end cover 12.

In some embodiments, at least a part of the second connection interface 521 extends obliquely relative to the thickness direction of the corner wall 113.

The second connection interface 521 may extend obliquely relative to the thickness direction of the corner wall 113, or may partially extend obliquely relative to the thickness direction of the corner wall 113.

In the vicinity of the part of the second connection interface 521 that extends obliquely relative to the thickness direction of the corner wall 113, due to the deformation of the corner wall 113 on the second connecting portion 52, the tensile stress generated by the second connecting portion 52 due to contraction on the second transition region 1135 is not aligned with the tensile stress generated by the second transition region 1135, reducing the risk of fatigue cracking in the region of the second transition region 1135 near the second connection interface 521.

In some embodiments, continuing to refer to FIG. 37, the second connection interface 521 includes a third interface 5212, the third interface 5212 extends obliquely from the second position 5211 in a direction toward the end cover 12, and along the thickness direction of the corner wall 113, at least a part of the second transition region 1135 is located between the third interface 5212 and the end cover 12.

It can be understood that the third interface 5212 extends obliquely relative to the thickness direction of the corner wall 113. The third interface 5212 may be a plane or a curved surface.

The second position 5211 is the lowest position of the third interface 5212 (the position closest to the third zone 1131), and the third interface 5212 extends obliquely from the second position 5211 in a direction toward the end cover 12, that is, the third interface 5212 extends obliquely upward from the second position 5211 in a direction toward the end cover 12.

Along the thickness direction of the corner wall 113, the second transition region 1135 may be entirely located between the third interface 5212 and the end cover 12, or only a part of the second transition region 1135 may be located between the third interface 5212 and the end cover 12.

In the embodiments, along the thickness direction of the corner wall 113, at least a part of the second transition region 1135 is located between the third interface 5212 and the end cover 12. The second connecting portion 52 protects the second transition region 1135, and outward deformation of the second transition region 1135 is blocked by the second connecting portion 52, reducing the risk of fatigue cracking in the region of the second transition region 1135 near the third interface 5212.

In some embodiments, continuing to refer to FIG. 37, the third interface 5212 is connected to an outer surface of the third zone 1131 at the second position 5211.

In an example, the third interface 5212 intersects the outer surface of the third zone 1131 at a second straight line. The second straight line extends along the third direction X, and the position of the second straight line is defined as the second position 5211. The third interface 5212 is connected to an inner surface of the second transition region 1135 at a fifth position 5214, and along the first direction Z, the fifth position 5214 is farther from the third zone 1131 than the second position 5211. The second transition region 1135 is substantially triangular.

In the embodiments, the third interface 5212 is connected to the outer surface of the third zone 1131 at the second position 5211, such that the third zone 1131 is directly connected to the second connecting portion 52, and the third zone 1131 is closer to the second connecting portion 52 along the first direction Z, further reducing the risk of fatigue cracking in the region of the corner wall 113 near the second connecting portion 52.

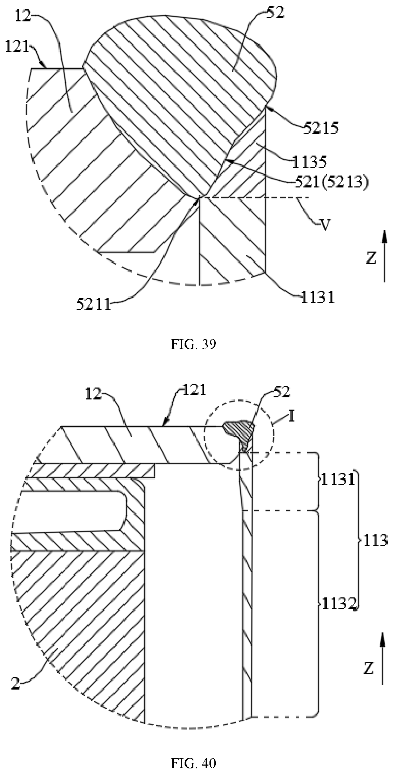

In some embodiments, referring to FIG. 38 and FIG. 39, where FIG. 38 is a partial view of a battery cell 10 according to further embodiments of the present application (with the corner wall 113 shown); and FIG. 39 is a partial enlarged view at region H in FIG. 38, the second connection interface 521 includes a fourth interface 5213, the fourth interface 5213 extends obliquely from the second position 5211 in a direction away from the end cover 12, and along the thickness direction of the corner wall 113, at least a part of the second transition region 1135 is located on the side of the fourth interface 5213 facing away from the end cover 12.

It can be understood that the fourth interface 5213 extends obliquely relative to the second direction Y. The fourth interface 5213 may be a plane or a curved surface. Along the thickness direction of the corner wall 113, at least a part of the second connecting portion 52 is located between the fourth interface 5213 and the end cover 12.

The second position 5211 is the lowest position of the fourth interface 5213 (the position closest to the first zone 1111), and the fourth interface 5213 extends obliquely from the second position 5211 in a direction away from the end cover 12, that is, the fourth interface 5213 extends obliquely upward from the second position 5211 in a direction away from the end cover 12.

Along the thickness direction of the corner wall 113, the second transition region 1135 may be located on the side of the fourth interface 5213 facing away from the end cover 12 in its entirety, or only a part of the second transition region 1135 may be located on the side of the fourth interface 5213 facing away from the end cover 12.

In the embodiments, along the thickness direction of the corner wall 113, at least a part of the second transition region 1135 is located on the side of the fourth interface 5213 facing away from the end cover 12, such that the second transition region 1135 functions to restrict the second connecting portion 52, reducing the risk of detachment of the second connecting portion 52.

In some embodiments, the fourth interface 5213 is connected to the inner surface of the third zone 1131 at the second position 5211.

In an example, the fourth interface 5213 intersects the inner surface of the third zone 1131 at a second straight line. The second straight line extends along the third direction X, and the position of the second straight line is defined as the second position 5211. The fourth interface 5213 is connected to the outer surface of the second transition region 1135 at a sixth position 5215, and along the first direction Z, the sixth position 5215 is farther from the third zone 1131 than the second position 5211. The second transition region 1135 is substantially triangular.

In the embodiments, the fourth interface 5213 is connected to the inner surface of the third zone 1131 at the second position 5211, such that the third zone 1131 is directly connected to the second connecting portion 52, and the third zone 1131 is closer to the second connecting portion 52 along the first direction Z, further reducing the risk of fatigue cracking in the region of the corner wall 113 near the second connecting portion 52.

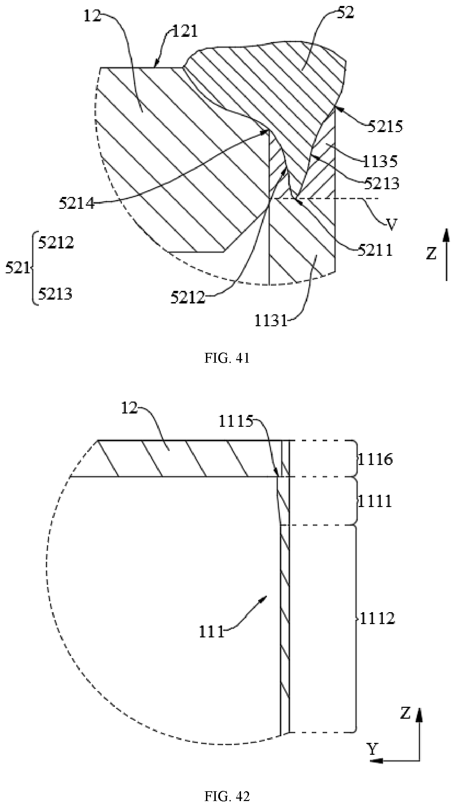

In some embodiments, referring to FIG. 40 and FIG. 41, where FIG. 40 is a partial view of a battery cell 10 according to still further embodiments of the present application (with the corner wall 113 shown); and FIG. 41 is a partial enlarged view at region I in FIG. 40, the second connection interface 521 includes a third interface 5212 and a fourth interface 5213, the third interface 5212 extends obliquely from the second position 5211 in a direction toward the end cover 12, the fourth interface 5213 extends obliquely from the second position 5211 in a direction away from the end cover 12, and along the thickness direction of the corner wall 113, a part of the second transition region 1135 is located between the third interface 5212 and the end cover 12, and another part of the second transition region 1135 is located on the side of the fourth interface 5213 facing away from the end cover 12.

In an example, the third interface 5212 is connected to the inner surface of the second transition region 1135 at a fifth position 5214, and the fourth interface 5213 is connected to the outer surface of the second transition region 1135 at a sixth position 5215.

In some embodiments, the Vickers hardness of the second transition region 1135 is less than that of the fourth zone 1132; and/or, the Vickers hardness of the second transition region 1135 is less than that of the second connecting portion 52.

In an example, the Vickers hardness of the fourth zone 1132 is less than that of the second connecting portion 52.

If the Vickers hardness of the second transition region 1135 is less than that of the fourth zone 1132, the second transition region 1135 with lower Vickers hardness is connected to the second connecting portion 52, which can mitigate the rigid pulling between the corner wall 113 and the second connecting portion 52 when the corner wall 113 deforms, reducing the risk of separation between the corner wall 113 and the second connecting portion 52. If the Vickers hardness of the second transition region 1135 is less than that of the second connecting portion 52, the second transition region 1135 is more prone to deformation compared to the second connecting portion 52, which can mitigate the rigid pulling between the corner wall 113 and the second connecting portion 52 when the corner wall 113 deforms, reducing the risk of separation between the corner wall 113 and the second connecting portion 52.

In some embodiments, referring to FIG. 36 to FIG. 41, along the first direction Z, the second connection interface 521 is closer to the fourth zone 1132 than the outer surface 121 of the end cover.

In the embodiments shown in FIG. 36 and FIG. 37, along the first direction Z, both the fifth position 5214 and the second position 5211 are closer to the fourth zone 1132 than the outer surface 121 of the end cover.

In the embodiments shown in FIG. 38 and FIG. 39, along the first direction Z, both the sixth position 5215 and the second position 5211 are closer to the second zone 1112 than the outer surface 121 of the end cover.

In the embodiments shown in FIG. 40 and FIG. 41, along the first direction Z, the fifth position 5214, the sixth position 5215, and the second position 5211 are all closer to the second zone 1112 than the outer surface 121 of the end cover.

In the embodiments, the second connection interface 521 is closer to the fourth zone 1132 than the outer surface 121 of the end cover along the first direction Z, such that the second connecting portion 52 can sink deeper into the corner wall 113, effectively improving the connection strength between the corner wall 113 and the end cover 12.

In some embodiments, continuing to refer to FIG. 31, the casing 11 includes two first walls 111 and two second walls 112, the two first walls 111 are disposed opposite each other along the second direction Y, the two second walls 112 are disposed opposite each other along the third direction X, and the first direction Z, the second direction Y, and the third direction X are pairwise perpendicular.

Both ends of the first wall 111 along the third direction X are provided with corner walls 113, and both ends of the second wall 112 along the second direction Y are provided with corner walls 113. It can be understood that there are four corner walls 113 in the casing 11.

In the embodiments, the casing 11 is substantially cuboidal, allowing the casing 11 dimensions to be larger, which is beneficial for meeting the high capacity requirements of the battery cell 10.

In some embodiments, the Vickers hardness of at least a part of the first zone 1111 is less than that of the second zone 1112.

The Vickers hardness of the entire first zone 1111 may be less than that of the second zone 1112, or only a part of the first zone 1111 may have a Vickers hardness less than that of the second zone 1112.

In an example, a part of the first zone 1111 has a Vickers hardness less than the Vickers hardness of the second zone 1112, another part of the first zone 1111 has a Vickers hardness equal to the Vickers hardness of the second zone 1112, and the part of the first zone 1111 with the same Vickers hardness as the second zone 1112 is directly connected to the second zone 1112.

When the second zone 1112 deforms due to the expansion force of the electrode assembly 2, the region of the first zone 1111 with lower Vickers hardness than the second zone 1112 can reduce the impact of the deformation of the second zone 1112 on the region of the first wall 111 near the first connecting portion 51, reducing the risk of fatigue cracking in the region of the first wall 111 near the first connecting portion 51 due to the expansion of the electrode assembly 2.

In some embodiments, referring to FIG. 42, where FIG. 42 is a diagram showing a positional relationship between an end cover 12 and a side wall before welding in some embodiments of the present application, along the first direction Z, the first wall 111 has a limiting surface 1115 facing the end cover 12, and the limiting surface 1115 abuts against the end cover 12 to restrict the movement of the end cover 12 in a direction close to the electrode assembly 2.

The limiting surface 1115 may be perpendicular to the first direction Z, and the limiting surface 1115 may be the end surface of the first wall 111 at the end where the opening of the casing 11 is located, or the limiting surface 1115 may be a stepped surface on the first wall 111, with the stepped surface being a certain distance from the end surface of the first wall 111 at the end where the opening of the casing 11 is located.

The limiting surface 1115 provides a limiting function for the end cover 12, reducing the risk of the end cover 12 moving toward the electrode assembly 2 during welding with the casing 11, effectively improving the welding quality between the end cover 12 and the casing 11, and reducing the welding difficulty between the end cover 12 and the casing 11.

In some embodiments, the first wall 111 further includes a limiting region 1116 disposed on the limiting surface 1115, the limiting region 1116 is disposed opposite the end cover 12 along the second direction Y, and the limiting region 1116 is welded to the end cover 12 to form the first connecting portion 51.

In an example, the end cover 12 is at least partially accommodated within the casing 11, such that the limiting region 1116 is disposed opposite the end cover 12 along the second direction Y.

After the limiting region 1116 and the end cover 12 are welded, a part of the limiting region 1116 and a part of the end cover 12 may be fused together to form the first connecting portion 51, and the remaining part of the limiting region 1116 may form at least a part of the first transition region 1117 (not shown in FIG. 42).

The limiting region 1116 also provides a limiting function for the end cover 12, reducing the risk of the end cover 12 moving along the thickness direction of the first wall 111 during welding with the casing 11, further improving the welding quality between the end cover 12 and the casing 11, and reducing the welding difficulty between the end cover 12 and the casing 11.

In some embodiments, the electrode assembly 2 is a laminated structure, the electrode assembly 2 includes a plurality of positive electrode plates 22 and a plurality of negative electrode plates 23, and the plurality of positive electrode plates 22 and the plurality of negative electrode plates 23 are stacked along the second direction Y.

In an example, the positive electrode plates 22 and the negative electrode tabs 21b in the electrode assembly 2 are alternately arranged along the second direction Y, and a separator 24 is provided between the positive electrode plates 22 and the negative electrode plates 23.

In the embodiments, the electrode assembly 2 is a wound electrode assembly, with a more compact structure and stronger resistance to compression.

In some embodiments, the number of negative electrode plates 23 is greater than the number of positive electrode plates 22, and one positive electrode plate 22 is disposed between two adjacent negative electrode plates 23.

In an example, there is one more negative electrode plate 23 than positive electrode plates 22.

In some embodiments, each negative electrode plate 23 is provided with a negative electrode tab 21b; and/or, each positive electrode plate 22 is provided with a positive electrode tab 21a.

In some embodiments, along the third direction X, a dimension of the first zone 1111 is greater than a dimension of the positive electrode plate 22 and/or the negative electrode plate 23, and the first direction Z, the second direction Y, and the third direction X are pairwise perpendicular.

If, along the third direction X, the dimension of the first zone 1111 is greater than the dimension of the positive electrode plate 22, the first zone 1111 extends beyond at least one end of the positive electrode plate 22 along the third direction X; if, along the third direction X, the dimension of the first zone 1111 is greater than the dimension of the negative electrode plate 23, the first zone 1111 extends beyond at least one end of the negative electrode plate 23 along the third direction X.

In the embodiments, along the third direction X, the dimension of the first zone 1111 is greater than the dimension of the positive electrode plate 22 and/or the negative electrode plate 23, such that the dimension of the first zone 1111 along the third direction X is larger, and more regions of the first wall 111 along the third direction X are reinforced, further reducing the risk of fatigue cracking in the region of the first wall 111 near the first connecting portion 51.

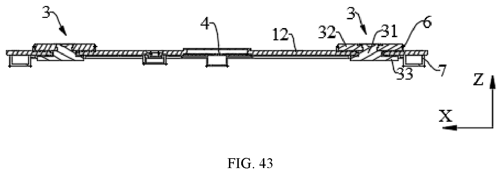

In some embodiments, referring to FIG. 43, where FIG. 43 is a schematic diagram showing the connection between the end cover 12 and the electrode terminal 3 according to some embodiments of the present application, the battery cell 10 further includes two electrode terminals 3, and the two electrode terminals 3 are disposed on the end cover 12. The two electrode terminals 3 have opposite polarities and are both electrically connected to the electrode assembly 2. The end cover 12 is provided with a lead-out hole, the electrode terminal 3 includes a terminal main body 31, a first limiting portion 32, and a second limiting portion 33, the terminal main body 31 connects the first limiting portion 32 and the second limiting portion 33, and the terminal main body 31 passes through the lead-out hole. Along the first direction Z, the first limiting portion 32 is located on the side of the end cover 12 facing away from the electrode assembly 2, and the second limiting portion 33 is located on the side of the end cover 12 facing the electrode assembly 2.

The first limiting portion 32 and the second limiting portion 33 have limiting functions. The first limiting portion 32 and the second limiting portion 33 are respectively connected to both ends of the terminal main body 31, and the first limiting portion 32 and the second limiting portion 33 cooperate to restrict the terminal main body 31 from detaching from the lead-out hole. Along the first direction Z, a projected area of the first limiting portion 32 and a projected area of the second limiting portion 33 are both greater than a projected area of the terminal main body 31, and the projected area of the first limiting portion 32 may be greater than the projected area of the second limiting portion 33, or the projected area of the second limiting portion 33 may be greater than the projected area of the first limiting portion 32. The first limiting portion 32, the second limiting portion 33, and the terminal main body 31 may be integrally formed, or one of the first limiting portion 32 and the second limiting portion 33 may be integrally formed with the terminal main body 31, while the other is separately provided and connected to the terminal main body 31.

In an example, the battery cell 10 may further include a first insulating member 6 and a second insulating member 7. The first insulating member 6 is at least partially disposed between the electrode terminal 3 and the end cover 12 to insulate and isolate the electrode terminal 3 and the end cover 12, and the second insulating member 7 is disposed on the side of the end cover 12 facing the electrode assembly 2 to insulate and isolate the electrode assembly 2 and the end cover 12.

In the embodiments, the electrode terminal 3 can be installed on the end cover 12 by riveting, featuring low installation difficulty and superior cost-effectiveness.

An embodiment of the present application provides a battery 100, including the battery cell 10 provided in any one of the above embodiments.

An embodiment of the present application provides an electric device, including the battery cell 10 provided in any one of the above embodiments, where the battery cell 10 is configured to provide electric energy to the electric device.

An embodiment of the present application further provides a battery cell 10, the battery cell 10 includes a casing 11, an end cover 12, and an electrode assembly 2, the casing 11 has an opening formed at one end along a first direction Z, the end cover 12 is welded to the casing 11 and closes the opening of the casing 11, and the electrode assembly 2 is at least partially accommodated in the casing 11. The casing 11 is cuboidal. The casing 11 includes two first walls 111, two second walls 112, and four corner walls 113. The first wall 111 is a wall with the largest outer surface area in the casing 11, adjacent first wall 111 and second wall 112 are connected through one corner wall 113, the two first walls 111 are disposed opposite each other along the second direction Y, the two second walls 112 are disposed opposite each other along the third direction X, and the first direction Z, the second direction Y, and the third direction X are pairwise perpendicular. The electrode assembly 2 includes a positive electrode plate 22, a negative electrode plate 23, and a separator 24, and the separator 24 is provided between the positive electrode plate 22 and the negative electrode plate 23. The electrode assembly 2 has a flat region 25, and a part of the positive electrode plate 22 located in the flat region 25, a part of the negative electrode plate 23 located in the flat region 25, and a part of the separator 24 located in the flat region 25 are stacked along the second direction Y. The electrode assembly 2 includes a first surface 27 perpendicular to the second direction Y, the first surface 27 is the surface with the largest area among the outer surfaces of the electrode assembly 2, and the first wall 111 is disposed opposite the first surface 27 along the second direction Y.

The first wall 111 is welded to the end cover 12 to form a first connecting portion 51, the first wall 111 includes a first zone 1111 and a second zone 1112 arranged along the first direction Z, the thickness of the first zone 1111 is greater than the thickness of the second zone 1112, and the first zone 1111 is located between the first connecting portion 51 and the second zone 1112. The material of the casing 11 includes aluminum alloy, the maximum thickness of the second zone 1112 is D₁, the maximum thickness of the first zone 1111 is D₂, and the dimension of the casing 11 along the second direction Y is D, where 0.005 ≤ D₁/D ≤ 0.065, 0.4 mm ≤ D₁ ≤ 0.8 mm, and 0.5 mm ≤ D₂ ≤ 1.5 mm. The corner wall 113 is welded to the end cover 12 to form a second connecting portion 52, the corner wall 113 includes a third zone 1131 and a fourth zone 1132 arranged along the first direction Z, the thickness of the third zone 1131 is greater than the thickness of the fourth zone 1132, and the third zone 1131 is located between the fourth zone 1132 and the second connecting portion 52. The dimension of the first zone 1111 along the third direction X is greater than the dimension of the second zone 1112 along the first direction Z, and two ends of the first zone 1111 along the third direction X are directly connected to the third zones 1131 of two corner walls 113, respectively. Along a circumferential direction of the opening, the corner wall 113 has a first connecting end 1133 and a second connecting end 1134, the first wall 111 is connected to the first connecting end 1133, the second wall 112 is connected to the second connecting end 1134, and the thickness of the third zone 1131 decreases along the direction from the first connecting end 1133 toward the second connecting end 1134. The first zone 1111 includes a first portion 11111 and a second portion 11112 arranged along the first direction Z, the second portion 11112 connects the first portion 11111 and the second zone 1112, the thickness of the first portion 11111 is greater than the thickness of the second portion 11112, and the thickness of the second portion 11112 decreases along a direction from the end cover 12 toward the electrode assembly 2.

The positive electrode plate 22 includes a positive electrode main body region 221 and a positive electrode tab 21a protruding from the positive electrode main body region 221. The negative electrode plate 23 includes a negative electrode main body region 231 and a negative electrode tab 21b protruding from the negative electrode main body region 231, along the first direction Z, the positive electrode main body region 221 has a fifth end 2211 facing the end cover 12, the negative electrode main body region 231 has a sixth end 2311 facing the end cover 12, the separator 24 has a seventh end 241 facing the end cover 12, and the seventh end 241 is closer to the end cover 12 than the fifth end 2211 and the sixth end 2311. The separator 24 includes an extension region 242 extending beyond the fifth end 2211 and the sixth end 2311 along the first direction Z, and in a projection plane perpendicular to the second direction Y, an orthographic projection of the extension region 242 partially overlaps with an orthographic projection of the first zone 1111. The first zone 1111 includes a first protruding portion 11118 protruding from the first inner surface 11121; in a projection plane perpendicular to the second direction Y, an orthographic projection of the positive electrode main body region 221 does not overlap with an orthographic projection of the first protruding portion 11118; and in a projection plane perpendicular to the second direction Y, an orthographic projection of the negative electrode main body region 231 does not overlap with the orthographic projection of the first protruding portion 11118.

The first wall 111 further includes a first transition region 1117, and the first transition region 1117 is connected to an end of the first zone 1111 away from the second zone 1112 along the first direction Z. The first transition region 1117 is connected to the first connecting portion 51, a connection position between the first transition region 1117 and the first connecting portion 51 forms a first connection interface 511, the first connection interface 511 has a first position 5111 closest to the first zone 1111 along the first direction Z, and the first position 5111 is located at an end of the first zone 1111 away from the second zone 1112 along the first direction Z. The first connection interface 511 includes a second interface 5113, the second interface 5113 extends obliquely from the first position 5111 in a direction away from the end cover 12, along the second direction Y, a part of the first connecting portion 51 is located between the second interface 5113 and the end cover 12, and the second interface 5113 is connected to the inner surface of the first zone 1111 at the first position 5111.

The corner wall 113 further includes a second transition region 1135, the second transition region 1135 is connected to an end of the third zone 1131 away from the fourth zone 1132 along the first direction Z, the second transition region 1135 is connected to the second connecting portion 52, and a connection position between the second transition region 1135 and the second connecting portion 52 forms a second connection interface 521. The second connection interface 521 has a second position 5211 closest to the third zone 1131 along the first direction Z, and the second position 5211 is located at an end of the third zone 1131 away from the fourth zone 1132 along the first direction Z. The second connection interface 521 includes a fourth interface 5213. The fourth interface 5213 extends obliquely from the second position 5211 in a direction away from the end cover 12, and along the thickness direction of the corner wall 113, a part of the second connecting portion 52 is located between the fourth interface 5213 and the end cover 12. The fourth interface 5213 is connected to an inner surface of the third zone 1131 at the second position 5211.

An embodiment of the present application further provides a battery cell 10, the battery cell 10 includes a casing 11, an end cover 12, and an electrode assembly 2, the casing 11 has an opening formed at one end along a first direction Z, the end cover 12 is welded to the casing 11 and closes the opening of the casing 11, and the electrode assembly 2 is at least partially accommodated in the casing 11. The casing 11 is cuboidal. The casing 11 includes two first walls 111, two second walls 112, and four corner walls 113. The first wall 111 is a wall with the largest outer surface area in the casing 11, adjacent first wall 111 and second wall 112 are connected through one corner wall 113, the two first walls 111 are disposed opposite each other along the second direction Y, the two second walls 112 are disposed opposite each other along the third direction X, and the first direction Z, the second direction Y, and the third direction X are pairwise perpendicular. The electrode assembly 2 includes a positive electrode plate 22, a negative electrode plate 23, and a separator 24, and the separator 24 is provided between the positive electrode plate 22 and the negative electrode plate 23. The electrode assembly 2 has a flat region 25, and a part of the positive electrode plate 22 located in the flat region 25, a part of the negative electrode plate 23 located in the flat region 25, and a part of the separator 24 located in the flat region 25 are stacked along the second direction Y. The electrode assembly 2 includes a first surface 27 perpendicular to the second direction Y, the first surface 27 is the surface with the largest area among the outer surfaces of the electrode assembly 2, and the first wall 111 is disposed opposite the first surface 27 along the second direction Y.

The first wall 111 is welded to the end cover 12 to form a first connecting portion 51, the first wall 111 includes a first zone 1111 and a second zone 1112 arranged along the first direction Z, the thickness of the first zone 1111 is greater than the thickness of the second zone 1112, and the first zone 1111 is located between the first connecting portion 51 and the second zone 1112. The material of the casing 11 includes aluminum alloy, the maximum thickness of the second zone 1112 is D₁, the maximum thickness of the first zone 1111 is D₂, and the dimension of the casing 11 along the second direction Y is D, where 0.005 ≤ D₁/D ≤ 0.065, 0.4 mm ≤ D₁ ≤ 0.8 mm, and 0.5 mm ≤ D₂ ≤ 1.5 mm.

The dimension of the first zone 1111 along the third direction X is greater than the dimension of the first zone 1111 along the first direction Z. The first zone 1111 includes a first portion 11111 and a second portion 11112 arranged along the first direction Z, the second portion 11112 connects the first portion 11111 and the second zone 1112, the thickness of the first portion 11111 is greater than the thickness of the second portion 11112, and the thickness of the second portion 11112 decreases along the direction from the end cover 12 toward the electrode assembly 2.

Both ends of the first zone 1111 along the third direction X are not in contact with the corner walls 113. The first zone 1111 includes a second connecting segment 11114, a first connecting segment 11113, and a third connecting segment 11115 arranged along the third direction X, the first connecting segment 11113 passes through a mid-section, the thickness of the first connecting segment 11113 is greater than the thickness of the second connecting segment 11114 and the thickness of the third connecting segment 11115, and the first connecting segment 11113 connects the second connecting segment 11114 and the third connecting segment 11115. The dimension of the first connecting segment 11113 along the third direction X is L₁, the dimension of the first wall 111 along the third direction X is L, where 0.2 ≤ L₁/L ≤ 0.6. The first connecting segment 11113 has a first end 11113a and a second end 11113b opposite each other along the third direction X, the first wall 111 has a third end 1113 and a fourth end 1114 opposite each other along the third direction X, the first end 11113a is close to the third end 1113, and the second end 11113b is close to the fourth end 1114; the dimension of the first wall 111 along the third direction X is L, the minimum distance between the first end 11113a and the third end 1113 along the third direction X is L₂, and the minimum distance between the second end 11113b and the fourth end 1114 along the third direction X is L₃, where L₂/L ≤ 0.3, L₃/L ≤ 0.3, and 100 mm ≤ L ≤ 450 mm.

The positive electrode plate 22 includes a positive electrode main body region 221 and a positive electrode tab 21a protruding from the positive electrode main body region 221. The negative electrode plate 23 includes a negative electrode main body region 231 and a negative electrode tab 21b protruding from the negative electrode main body region 231. Along the first direction Z, the positive electrode main body region 221 has a fifth end 2211 facing the end cover 12, the negative electrode main body region 231 has a sixth end 2311 facing the end cover 12, the separator 24 has a seventh end 241 facing the end cover 12, and the seventh end 241 is closer to the end cover 12 than the fifth end 2211 and the sixth end 2311. The separator 24 includes an extension region 242 extending beyond the fifth end 2211 and the sixth end 2311 along the first direction Z, and in a projection plane perpendicular to the second direction Y, the orthographic projection of the extension region 242 partially overlaps with the orthographic projection of the first zone 1111. The first zone 1111 includes a first protruding portion 11118 protruding from the first inner surface 11121; in a projection plane perpendicular to the second direction Y, the orthographic projection of the positive electrode main body region 221 does not overlap with the orthographic projection of the first protruding portion 11118; and in a projection plane perpendicular to the second direction Y, the orthographic projection of the negative electrode main body region 231 does not overlap with the orthographic projection of the first protruding portion 11118.

The first wall 111 further includes a first transition region 1117, and the first transition region 1117 is connected to an end of the first zone 1111 away from the second zone 1112 along the first direction Z. The first transition region 1117 is connected to the first connecting portion 51, the connection position between the first transition region 1117 and the first connecting portion 51 forms a first connection interface 511, the first connection interface 511 has a first position 5111 closest to the first zone 1111 along the first direction Z, and the first position 5111 is located at an end of the first zone 1111 away from the second zone 1112 along the first direction Z. The first connection interface 511 includes a second interface 5113, the second interface 5113 extends obliquely from the first position 5111 in a direction away from the end cover 12, along the second direction Y, a part of the first connecting portion 51 is located between the second interface 5113 and the end cover 12, and the second interface 5113 is connected to the inner surface of the first zone 1111 at the first position 5111.

It should be noted that, in the absence of conflict, the embodiments in the present application and the features in the embodiments can be combined with each other.

The above embodiments are only used to illustrate the technical solutions of the present application and are not intended to limit the present application. For those skilled in the art, various modifications and changes can be made to the present application. Any modifications, equivalent substitutions, and improvements made within the spirit and principles of the present application shall fall within the scope of protection of the present application.

## Claims

1. A battery cell, comprising:
a casing having an opening at at least one end along a first direction, the casing comprising a first wall;
an end cover closing the opening, the first wall being welded to the end cover to form a first connecting portion;
and
an electrode assembly at least partially accommodated in the casing, wherein the electrode assembly comprises a positive electrode plate and a negative electrode plate, at least a part of the positive electrode plate and at least a part of the negative electrode plate are stacked along a second direction, the second direction is parallel to the thickness direction of the first wall, and the first direction intersects the second direction;
wherein the first wall comprises a first zone and a second zone arranged along the first direction, the thickness of the first zone is greater than the thickness of the second zone, and the first zone is located between the first connecting portion and the second zone.

2. The battery cell according to claim 1, wherein the electrode assembly has a flat region, and a part of the positive electrode plate located in the flat region and a part of the negative electrode plate located in the flat region are stacked along the second direction.

3. The battery cell according to claim 2, wherein the electrode assembly comprises adjacent first and second surfaces, the first surface is perpendicular to the second direction, the area of the first surface is greater than the area of the second surface, and the first surface is disposed opposite the first wall along the second direction.

4. The battery cell according to claim 3, wherein the first surface is the surface with the largest area among outer surfaces of the electrode assembly.

5. The battery cell according to claim 3 or 4, wherein the electrode assembly is a wound structure, the electrode assembly further has a corner region, at least one end of the flat region along a third direction is provided with the corner region, and the first direction, the second direction, and the third direction are not coplanar and intersect pairwise; and
an outer surface of the flat region comprises the first surface, an outer surface of the corner region comprises the second surface, and at least a part of the second surface is an arc surface.

6. The battery cell according to claim 3 or 4, wherein the electrode assembly is a laminated structure, the flat region comprises a plurality of the positive electrode plates and a plurality of the negative electrode plates, the plurality of the positive electrode plates and the plurality of the negative electrode plates are stacked along the second direction, and the first surface is perpendicular to the second surface.

7. The battery cell according to any one of claims 1 to 6, wherein the first wall is a wall with the largest outer surface area in the casing.

8. The battery cell according to any one of claims 1 to 7, wherein the casing comprises two first walls, and along the second direction, the two first walls are disposed opposite each other, with the electrode assembly located between the two first walls.

9. The battery cell according to any one of claims 1 to 8, wherein the first zone comprises a first portion and a second portion arranged along the first direction, the second portion connects the first portion and the second zone, and the thickness of the first portion is greater than the thickness of the second portion.

10. The battery cell according to claim 9, wherein the thickness of the second portion decreases along a direction from the end cover toward the electrode assembly.

11. The battery cell according to any one of claims 1 to 10, wherein a dimension of the first zone along the third direction is greater than a dimension of the first zone along the first direction, and the first direction, the second direction, and the third direction are not coplanar and intersect pairwise.

12. The battery cell according to claim 11, wherein the first zone comprises a first connecting segment, the first connecting segment passes through a mid-section of the first wall, the mid-section is perpendicular to the third direction, and distances from the mid-section to two ends of the first wall along the third direction are equal.

13. The battery cell according to claim 12, wherein the first zone further comprises a second connecting segment and a third connecting segment, the second connecting segment, the first connecting segment, and the third connecting segment are arranged along the third direction, the first connecting segment connects the second connecting segment and the third connecting segment, and the thickness of the first connecting segment is greater than the thickness of the second connecting segment and the thickness of the third connecting segment.

14. The battery cell according to claim 13, wherein the first zone further comprises a first transition segment, the first connecting segment, the first transition segment, and the second connecting segment are arranged along the third direction, the first transition segment connects the second connecting segment and the first connecting segment, and the thickness of the first transition segment increases along a direction from the second connecting segment toward the first connecting segment; and/or, the first zone further comprises a second transition segment, the first connecting segment, the second transition segment, and the third connecting segment are arranged along the third direction, the second transition segment connects the third connecting segment and the first connecting segment, and the thickness of the second transition segment increases along a direction from the third connecting segment toward the first connecting segment.

15. The battery cell according to any one of claims 12 to 14, wherein the dimension of the first connecting segment along the third direction is L₁, and the dimension of the first wall along the third direction is L, wherein 0.2 ≤ L₁/L ≤ 0.6.

16. The battery cell according to any one of claims 12 to 15, wherein the first connecting segment has a first end and a second end opposite each other along the third direction, the first wall has a third end and a fourth end opposite each other along the third direction, the first end is close to the third end, the second end is close to the fourth end, the dimension of the first wall along the third direction is L, a minimum distance between the first end and the third end along the third direction is L₂, and a minimum distance between the second end and the fourth end along the third direction is L₃; wherein L₂/L ≤ 0.3; and/or, L₃/L ≤ 0.3.

17. The battery cell according to claim 15 or 16, wherein 100 mm ≤ L ≤ 450 mm.

18. The battery cell according to any one of claims 11 to 17, wherein the casing comprises corner walls, and both ends of the first wall along the third direction are connected to the corner walls; and
at least one end of the first zone along the third direction is not in contact with the corner wall; or, two ends of the first zone along the third direction extend to two corner walls, respectively.

19. The battery cell according to any one of claims 1 to 18, wherein the electrode assembly further comprises a separator, and the separator is provided between the positive electrode plate and the negative electrode plate; and
the positive electrode plate comprises a positive electrode main body region and a positive electrode tab protruding from the positive electrode main body region, the positive electrode main body region has a positive electrode active material layer, the negative electrode plate comprises a negative electrode main body region and a negative electrode tab protruding from the negative electrode main body region, the negative electrode main body region has a negative electrode active material layer, along the first direction, the positive electrode main body region has a fifth end facing the end cover, the negative electrode main body region has a sixth end facing the end cover, the separator has a seventh end facing the end cover, and the seventh end is closer to the end cover than the fifth end and the sixth end.

20. The battery cell according to claim 19, wherein the separator comprises an extension region extending beyond the fifth end and the sixth end along the first direction, and in a projection plane perpendicular to the second direction, an orthographic projection of the extension region partially overlaps with an orthographic projection of the first zone.

21. The battery cell according to claim 19 or 20, wherein the second zone has a first inner surface facing an internal space of the casing, and the first zone comprises a first protruding portion protruding from the first inner surface; and
in a projection plane perpendicular to the second direction, an orthographic projection of the positive electrode main body region does not overlap with an orthographic projection of the first protruding portion; and/or, in a projection plane perpendicular to the second direction, an orthographic projection of the negative electrode main body region does not overlap with the orthographic projection of the first protruding portion.

22. The battery cell according to any one of claims 1 to 21, wherein the negative electrode plate comprises a negative electrode current collector and a negative electrode active material layer disposed on at least one side of the negative electrode current collector, and the negative electrode active material layer comprises a negative electrode active material.

23. The battery cell according to claim 22, wherein the negative electrode active material layer comprises a negative electrode main body portion and a negative electrode thinned portion, the negative electrode main body portion and the negative electrode thinned portion are arranged along the first direction, and along the first direction, the negative electrode thinned portion is provided at an end of the negative electrode main body portion close to the end cover.

24. The battery cell according to claim 23, wherein in a projection plane perpendicular to the second direction, the orthographic projection of the negative electrode thinned portion is spaced apart from the orthographic projection of the first zone along the first direction.

25. The battery cell according to claim 24, wherein, in a projection plane perpendicular to the second direction, a spacing dimension along the first direction between the orthographic projection of the negative electrode thinned portion and the orthographic projection of the first zone is greater than or equal to 1 mm.

26. The battery cell according to any one of claims 22 to 25, wherein a single-side coating weight of the negative electrode active material layer is 90 mg/1540 mm² to 170 mg/1540 mm², optionally 110 mg/1540 mm² to 150 mg/1540 mm².

27. The battery cell according to any one of claims 22 to 26, wherein a porosity of the negative electrode plate is 27% to 40%.

28. The battery cell according to any one of claims 22 to 27, wherein the negative electrode active material comprises a silicon-based material, and a mass content of silicon element in the negative electrode active material in the silicon-based material is 0.3% to 10%, optionally 1% to 6%.

29. The battery cell according to claim 28, wherein the silicon-based material comprises at least one of a silicon-oxygen compound and a silicon-carbon composite.

30. The battery cell according to any one of claims 1 to 29, wherein the positive electrode plate comprises a positive electrode current collector and a positive electrode active material layer disposed on at least one side of the positive electrode current collector, and the positive electrode active material layer comprises a positive electrode active material.

31. The battery cell according to claim 30, wherein the positive electrode active material layer comprises a positive electrode main body portion and a positive electrode thinned portion, the positive electrode main body portion and the positive electrode thinned portion are arranged along the first direction, and along the first direction, the positive electrode thinned portion is provided at an end of the positive electrode main body portion close to the end cover.

32. The battery cell according to claim 31, wherein in a projection plane perpendicular to the second direction, an orthographic projection of the positive electrode thinned portion is spaced apart from the orthographic projection of the first zone along the first direction.

33. The battery cell according to claim 32, wherein in a projection plane perpendicular to the second direction, the spacing dimension along the first direction between the orthographic projection of the positive electrode thinned portion and the orthographic projection of the first zone is greater than or equal to 1 mm.

34. The battery cell according to any one of claims 30 to 33, wherein a single-side coating weight of the positive electrode active material layer is 200 mg/1540 mm² to 370 mg/1540 mm², optionally 240 mg/1540 mm² to 330 mg/1540/mm².

35. The battery cell according to any one of claims 30 to 34, wherein the positive electrode active material is a lithium-containing phosphate.

36. The battery cell according to any one of claims 1 to 35, wherein the material of the casing comprises steel; and
the maximum thickness of the second zone is D₁, and the dimension of the casing along the second direction is D, wherein 0.001 ≤ D₁/D ≤ 0.012.

37. The battery cell according to any one of claims 1 to 36, wherein the material of the casing comprises steel; and
the maximum thickness of the second zone is D₁, wherein 0.08 mm ≤ D₁ ≤ 0.35 mm; and/or, the maximum thickness of the first zone is D₂, wherein 0.1 mm ≤ D₂ ≤ 0.6 mm.

38. The battery cell according to any one of claims 1 to 35, wherein the material of the casing comprises aluminum alloy; and
the maximum thickness of the second zone is D₁, and the dimension of the casing along the second direction is D, wherein 0.005 ≤ D₁/D ≤ 0.065.

39. The battery cell according to any one of claims 1 to 35 and 38, wherein the material of the casing comprises aluminum alloy; and
the maximum thickness of the second zone is D₁, wherein 0.4 mm ≤ D₁ ≤ 0.8 mm; and/or, the maximum thickness of the first zone is D₂, wherein 0.5 mm ≤ D₂ ≤ 1.5 mm.

40. The battery cell according to claim 38 or 39, wherein the aluminum alloy comprises the following components in mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%.

41. The battery cell according to any one of claims 1 to 40, wherein the first zone is directly connected to the first connecting portion.

42. The battery cell according to any one of claims 1 to 41, wherein the first wall further comprises a first transition region, the first transition region is connected to an end of the first zone away from the second zone along the first direction, the first transition region is connected to the first connecting portion, a connection position between the first transition region and the first connecting portion forms a first connection interface, the first connection interface has a first position closest to the first zone along the first direction, and the first position is located at an end of the first zone away from the second zone along the first direction.

43. The battery cell according to claim 42, wherein at least a part of the first connection interface extends obliquely relative to the second direction.

44. The battery cell according to claim 43, wherein the first connection interface comprises a first interface, the first interface extends obliquely from the first position in a direction close to the end cover, and along the second direction, at least a part of the first transition region is located between the first interface and the end cover.

45. The battery cell according to claim 44, wherein the first interface is connected to an outer surface of the first zone at the first position.

46. The battery cell according to any one of claims 43 to 45, wherein the first connection interface comprises a second interface, the second interface extends obliquely from the first position in a direction away from the end cover, and along the second direction, at least a part of the first transition region is located on a side of the second interface facing away from the end cover.

47. The battery cell according to claim 46, wherein the second interface is connected to an inner surface of the first zone at the first position.

48. The battery cell according to any one of claims 42 to 47, wherein the Vickers hardness of the first transition region is less than that of the second zone; and/or, the Vickers hardness of the first transition region is less than that of the first connecting portion.

49. The battery cell according to any one of claims 42 to 48, wherein along the first direction, the first connection interface is closer to the second zone than an outer surface of the end cover.

50. The battery cell according to any one of claims 1 to 49, wherein the casing further comprises a second wall and a corner wall, the first wall, the corner wall, and the second wall are arranged along a circumferential direction of the opening, and the corner wall connects the first wall and the second wall.

51. The battery cell according to claim 50, wherein the corner wall is welded to the end cover to form a second connecting portion; and
the corner wall comprises a third zone and a fourth zone arranged along the first direction, a thickness of the third zone is greater than a thickness of the fourth zone, and the third zone is located between the fourth zone and the second connecting portion.

52. The battery cell according to claim 51, wherein the third zone is directly connected to the first zone.

53. The battery cell according to claim 52, wherein along the circumferential direction of the opening, the corner wall has a first connecting end and a second connecting end, the first wall is connected to the first connecting end, the second wall is connected to the second connecting end, and the thickness of the third zone decreases along a direction from the first connecting end toward the second connecting end.

54. The battery cell according to any one of claims 51 to 53, wherein the third zone is directly connected to the second connecting portion.

55. The battery cell according to any one of claims 51 to 54, wherein the corner wall further comprises a second transition region, the second transition region is connected to an end of the third zone away from the fourth zone along the first direction, the second transition region is connected to the second connecting portion, and a connection position between the second transition region and the second connecting portion forms a second connection interface, wherein the second connection interface has a second position closest to the third zone along the first direction, and the second position is located at an end of the third zone away from the fourth zone along the first direction.

56. The battery cell according to claim 55, wherein at least a part of the second connection interface extends obliquely relative to the thickness direction of the corner wall.

57. The battery cell according to claim 56, wherein the second connection interface comprises a third interface, the third interface extends obliquely from the second position in a direction close to the end cover, and along the thickness direction of the corner wall, at least a part of the second transition region is located between the third interface and the end cover.

58. The battery cell according to claim 57, wherein the third interface is connected to an outer surface of the third zone at the second position.

59. The battery cell according to any one of claims 56 to 58, wherein the second connection interface comprises a fourth interface, the fourth interface extends obliquely from the second position in a direction away from the end cover, and along the thickness direction of the corner wall, at least a part of the second transition region is located on the side of the fourth interface facing away from the end cover.

60. The battery cell according to claim 59, wherein the fourth interface is connected to an inner surface of the third zone at the second position.

61. The battery cell according to any one of claims 55 to 60, wherein the Vickers hardness of the second transition region is less than that of the fourth zone; and/or, the Vickers hardness of the second transition region is less than that of the second connecting portion.

62. The battery cell according to any one of claims 55 to 61, wherein along the first direction, the second connection interface is closer to the fourth zone than the outer surface of the end cover.

63. The battery cell according to any one of claims 50 to 62, wherein the casing comprises two first walls and two second walls, the two first walls are disposed opposite each other along the second direction, the two second walls are disposed opposite each other along the third direction, and the first direction, the second direction, and the third direction are pairwise perpendicular.

64. The battery cell according to any one of claims 1 to 63, wherein the Vickers hardness of at least a part of the first zone is less than that of the second zone.

65. The battery cell according to any one of claims 1 to 64, wherein along the first direction, the first wall has a limiting surface facing the end cover, and the limiting surface abuts against the end cover to restrict the movement of the end cover in a direction close to the electrode assembly.

66. The battery cell according to claim 65, wherein the first wall further comprises a limiting region disposed on the limiting surface, the limiting region is disposed opposite the end cover along the second direction, and the limiting region is welded to the end cover to form the first connecting portion.

67. The battery cell according to any one of claims 1 to 66, wherein the electrode assembly is a laminated structure, the electrode assembly comprises a plurality of the positive electrode plates and a plurality of the negative electrode plates, and the plurality of the positive electrode plates and the plurality of the negative electrode plates are stacked along the second direction.

68. The battery cell according to claim 67, wherein the number of the negative electrode plates is greater than the number of the positive electrode plates, and one positive electrode plate is disposed between two adjacent negative electrode plates.

69. The battery cell according to claim 67 or 68, wherein each of the negative electrode plates is provided with a negative electrode tab; and/or, each of the positive electrode plates is provided with a positive electrode tab.

70. The battery cell according to any one of claims 67 to 69, wherein along the third direction, the dimension of the first zone is greater than a dimension of the positive electrode plate and/or the negative electrode plate, and the first direction, the second direction, and the third direction are pairwise perpendicular.

71. The battery cell according to any one of claims 1 to 70, wherein the battery cell further comprises two electrode terminals, the two electrode terminals are disposed on the end cover, the two electrode terminals have opposite polarities and are both electrically connected to the electrode assembly; and
the end cover is provided with a lead-out hole, the electrode terminal comprises a terminal main body, a first limiting portion, and a second limiting portion, the terminal main body connects the first limiting portion and the second limiting portion, the terminal main body passes through the lead-out hole, and along the first direction, the first limiting portion is located on the side of the end cover facing away from the electrode assembly, and the second limiting portion is located on the side of the end cover facing the electrode assembly.

72. A battery comprising the battery cell according to any one of claims 1 to 71.

73. An electric device comprising the battery cell according to any one of claims 1 to 71, wherein the battery cell is configured to provide electric energy to the electric device.
